# EUROPEAN PATENT APPLICATION

(11) **EP 4 822 830 A1**
(43) Date of publication of application: **14.10.2026**
(21) Application number: 24923121.8
(22) Date of filing: 15.04.2024
(51) Int. Cl.: H01M 10/6556

(54) **HEAT EXCHANGE MEMBER, BATTERY AND ELECTRICAL DEVICE**

(30) Priority: 06.02.2024 CN 202410171636
(71) Applicant: Contemporary Amperex Technology Co., Limited, Ningde, Fujian 352100 (CN)
(72) Inventor: SONG, Feiting, Ningde, Fujian 352100 (CN); TANG, Yu, Ningde, Fujian 352100 (CN); HUANG, Xiaoteng, Ningde, Fujian 352100 (CN); LIU, Hongbiao, Ningde, Fujian 352100 (CN)
(74) Representative: Lorenz Seidler Gossel Part. mbB
(86) International application number: PCT/CN2024/087805
(87) International publication number: WO 2025/166896

(57) **Abstract**

A heat exchange member (100), a battery (1000) and an electrical device. The heat exchange member (100) comprises a first heat exchange flow channel (10), the first heat exchange flow channel (10) comprising a first heat exchange section (11) and a second heat exchange section (12), wherein the second heat exchange section (12) is bent to form a U-shaped area (120), and the first heat exchange section (11) is bent and arranged in the U-shaped area (120) and is connected to the second heat exchange section (12) by bending.

## Description

### CROSS-REFERENCE TO RELATED APPLICATION

The present application is presented based on Chinese Patent Application No. 202410171636.6 filed on February 6, 2024, and claims the priority to this Chinese Patent Application, the content of which is incorporated herein by reference in its entirety.

### TECHNICAL FIELD

The present application relates to the technical field of batteries, and in particular, to a heat exchange member, a battery, and an electric device.

### BACKGROUND

In the prior art, to ensure the normal operation and service life of a battery, a heat exchange member is typically provided inside the battery. The heat exchange member can perform heat exchange with battery cells to regulate the temperature of each battery cell, thereby ensuring the service life of the battery. However, currently, the number of battery cells in a battery pack is large, and the temperature uniformity of the battery cells under the heat exchange effect of the heat exchange member needs to be further improved.

### SUMMARY

The present application aims to solve at least one of the technical problems existing in the prior art. To this end, the present application provides a heat exchange member, and a battery and an electric device including the heat exchange member. The heat exchange member can compensate for an internal and external temperature difference caused by heat exchange between peripheral battery cells and the environment, such that the heat exchange effects of battery cells at the periphery of a battery assembly and battery cells inside the battery assembly tend to be consistent, improving the temperature uniformity of the battery, and improving the service life of the battery.

In a first aspect, an embodiment of the present application provides a heat exchange member applicable to a battery. The heat exchange member includes a first heat exchange flow channel, and the first heat exchange flow channel includes a first heat exchange section and a second heat exchange section; the second heat exchange section is bent to form a U-shaped region, and the first heat exchange section is arranged in a bent manner within the U-shaped region and is connected to the second heat exchange section in a bent manner.

In the above embodiment, since the battery cells arranged at the periphery of the battery are closer to the side wall of the case relative to the internal battery cells, the battery cells at the periphery of the battery can more easily dissipate heat outward through the structures, such as the side wall or end plates, of the battery and are less affected by heat dissipation of adjacent battery cells. In contrast, the internal battery cells have more difficulty in dissipating heat and are more affected by heat dissipation of adjacent battery cells. As a result, the heat dissipation conditions of battery cells at different positions in the battery vary, leading to an uneven temperature distribution between the peripheral battery cells and the internal battery cells in the battery after the battery operates, which results in poor stability of the battery during operation and a tendency for battery performance to decay. In view of this, in the present application, the second heat exchange section is bent to form the U-shaped region, and the first heat exchange section is arranged in a bent manner within the U-shaped region. When the heat exchange member of this embodiment is used for heat exchange with the battery assembly, the U-shaped region formed by the peripheral second heat exchange section may be aligned with the peripheral battery cells of the battery, and the first heat exchange section within the U-shaped region may be aligned with the internal battery cells. This allows the heat exchange member to compensate for the internal and external temperature difference caused by heat exchange between the peripheral battery cells and the environment, such that the heat exchange effects of the battery cells at the periphery of the battery assembly and the battery cells inside the battery assembly tend to be consistent, improving the temperature uniformity of the battery, thereby improving the service life of the battery to a certain extent.

According to an example of the present application, the second heat exchange section is located at an outermost circumference of the first heat exchange flow channel.

In the above embodiment, by configuring the second heat exchange section to be located at the outermost circumference of the first heat exchange flow channel, the second heat exchange section can perform heat exchange with the outer circumference of the battery assembly, which facilitates mitigating the temperature difference of the battery assembly in different environments, thereby improving the service life of the battery assembly to a certain extent.

According to an example of the present application, the first heat exchange section and the second heat exchange section are bent in the same plane.

In the above embodiment, by configuring the first heat exchange section and the second heat exchange section to be bent in the same plane, the first heat exchange flow channel can perform heat exchange with the battery in the same plane, simplifying the structure of the first heat exchange flow channel, thereby reducing the production difficulty of the first heat exchange flow channel. Meanwhile, the occupied space of the first heat exchange flow channel can be reduced, thereby improving the volumetric energy density of the battery.

According to an example of the present application, the first heat exchange section includes a plurality of first heat exchange portions, and the plurality of first heat exchange portions are spaced apart and are sequentially connected in a bent manner.

In the above embodiment, in one aspect, by providing the plurality of first heat exchange portions, the heat exchange area of the first heat exchange section can be increased, thereby increasing the heat exchange area of the first heat exchange flow channel, and improving the heat exchange effect of the first heat exchange flow channel; in another aspect, since the internal battery cells are wrapped by the external battery cells, the temperature difference between the internal battery cells is not large, and therefore, by providing the plurality of first heat exchange portions, the overall heat exchange effect can be ensured while ensuring a small temperature difference between the internal and external battery cells.

According to an example of the present application, the plurality of first heat exchange portions are spaced apart in a first direction, each first heat exchange portion extends linearly in a second direction, and the first direction and the second direction are arranged at an included angle.

In the above embodiment, by configuring the first heat exchange portion to extend linearly in the second direction, the production and manufacturing difficulty of the first heat exchange portion can be reduced, thereby reducing the production complexity of the first heat exchange flow channel, and reducing the production cost. Meanwhile, the straight pipe can also increase the flow speed of the heat exchange fluid, thereby improving the heat exchange effect of the first heat exchange flow channel. In addition, by arranging the plurality of first heat exchange portions in parallel, the occupied space can also be reduced, which facilitates structural miniaturization of the heat exchange member, and facilitates ensuring the volumetric energy density of the battery.

According to an example of the present application, the first heat exchange section further includes a first bent portion, where the first bent portion is arc-shaped and is connected between two adjacent first heat exchange portions in a bent manner.

In the above embodiment, by providing the first bent portion, the fluid flow direction inside the first heat exchange section can be changed, achieving a smooth transition and connection between two first heat exchange portions, and achieving circuitous extension of the first heat exchange flow channel, thereby increasing the contact area between a single battery cell and the first heat exchange flow channel, and increasing the heat exchange area and improving the heat exchange efficiency of the first heat exchange flow channel. Meanwhile, the arc-shaped first bent portion can also reduce the flow resistance of the fluid and reduce the pressure drop, thereby increasing the flow rate of the fluid and further enhancing the heat exchange efficiency of the first heat exchange section. In addition, the bent arrangement enables the structure of the entire heat exchange member to be compact and reliable, adaptable to the arrangement of the battery cells in the battery, thereby improving the volumetric energy density of the battery cells.

According to an example of the present application, the second heat exchange section includes: a second heat exchange portion, a third heat exchange portion, and a fourth heat exchange portion, where the second heat exchange portion extends along a first-side peripheral edge of the first heat exchange section; the third heat exchange portion is connected between the second heat exchange portion and the first heat exchange section and extends along a second-side peripheral edge of the first heat exchange section, a first end of the third heat exchange portion is connected to the second heat exchange portion at an included angle, and a second end of the third heat exchange portion is connected to the first heat exchange section at an included angle; the fourth heat exchange portion is in communication with the second heat exchange portion, is connected to the second heat exchange portion at an included angle, and extends along a third-side peripheral edge of the first heat exchange section.

In the above embodiment, by configuring the second heat exchange portion, the third heat exchange portion, and the fourth heat exchange portion on three sides of the first heat exchange section, the second heat exchange section can surround the first heat exchange section, thereby increasing the compactness of the arrangement of the first heat exchange flow channel, and achieving structural miniaturization of the first heat exchange flow channel, which facilitates improving the volumetric energy density of the battery. Meanwhile, the structure of the first heat exchange flow channel can also be simplified to facilitate the processing and production of the heat exchange member.

According to an example of the present application, the first heat exchange section includes a plurality of first heat exchange portions, and the plurality of first heat exchange portions are sequentially connected in a bent manner in a first direction. The second heat exchange portion is located on a side of the plurality of first heat exchange portions in the first direction, the third heat exchange portion is located on one side of the plurality of first heat exchange portions in a second direction, and the first direction and the second direction are arranged at an included angle; the first end of the third heat exchange portion is connected to an end of the second heat exchange portion in the second direction, and the second end of the third heat exchange portion is connected to one of the plurality of first heat exchange portions that is farthest from the second heat exchange portion in the first direction; the fourth heat exchange portion is located on the other side of the plurality of first heat exchange portions in the second direction, one end of the fourth heat exchange portion is connected to an end of the second heat exchange portion distal to the third heat exchange portion, and the other end of the fourth heat exchange portion extends in the first direction toward a direction away from the second heat exchange portion; or

the second heat exchange portion is located on a side of the plurality of first heat exchange portions in the second direction, the third heat exchange portion is located on one side of the plurality of first heat exchange portions in the first direction, and the first direction and the second direction are arranged at an included angle; the first end of the third heat exchange portion is connected to an end of the second heat exchange portion in the first direction, and the second end of the third heat exchange portion is connected to one of the plurality of first heat exchange portions that is closest to the third heat exchange portion in the first direction; the fourth heat exchange portion is located on the other side of the plurality of first heat exchange portions in the first direction, one end of the fourth heat exchange portion is connected to an end of the second heat exchange portion distal to the third heat exchange portion, and the other end of the fourth heat exchange portion extends in the second direction toward a direction away from the second heat exchange portion.

In the above embodiment, by configuring the plurality of first heat exchange portions to be sequentially connected in a bent manner in the first direction, the second heat exchange portion to be located on the side of the plurality of first heat exchange portions in the first direction, the third heat exchange portion to be located on one side of the plurality of first heat exchange portions in the second direction, and the fourth heat exchange portion to be located on the other side of the plurality of first heat exchange portions in the second direction, a positional relationship among the second heat exchange portion, the third heat exchange portion, the fourth heat exchange portion, and the first heat exchange portions is defined, and a layout of the first heat exchange flow channel is further defined, simplifying the structure of the first heat exchange flow channel, and facilitating the processing and manufacturing. By configuring the second heat exchange portion to be located on the side of the plurality of first heat exchange portions in the second direction, the third heat exchange portion to be located on one side of the plurality of first heat exchange portions in the first direction, and the fourth heat exchange portion to be located on the other side of the plurality of first heat exchange portions in the first direction, another layout of the first heat exchange flow channel is defined. Therefore, the diversity of the first heat exchange flow channel can be increased, such that the first heat exchange flow channel can meet the heat exchange requirements of different batteries, simplifying the structure of the first heat exchange flow channel, and facilitating the processing and manufacturing.

According to an example of the present application, the third heat exchange portion and the fourth heat exchange portion extend in the first direction, and the first heat exchange portion and the second heat exchange portion both extend in the second direction; or the first heat exchange portion, the third heat exchange portion, and the fourth heat exchange portion all extend in the second direction, and the second heat exchange portion extends in the first direction.

In the above embodiment, by configuring the third heat exchange portion and the fourth heat exchange portion to extend in the first direction, and the first heat exchange portion and the second heat exchange portion both to extend in the second direction, the circuitous arrangement of the first heat exchange flow channel can be facilitated, thereby reducing the production difficulty of the first heat exchange flow channel and reducing the production cost of the heat exchange member.

By configuring the first heat exchange portion, the third heat exchange portion, and the fourth heat exchange portion to extend in the second direction, and the second heat exchange portion to extend in the first direction, the circuitous arrangement of the first heat exchange flow channel can be facilitated, thereby reducing the production difficulty of the first heat exchange flow channel and reducing the production cost of the heat exchange member. Meanwhile, such an arrangement further enables the structure of the first heat exchange flow channel to be more compact and reliable.

According to an example of the present application, the third heat exchange portion and the fourth heat exchange portion both extend in the first direction, and a length of the fourth heat exchange portion is less than or equal to a length of the third heat exchange portion in the first direction; or the first heat exchange portion and the third heat exchange portion extend in the second direction, the second heat exchange portion extends in the first direction, and a length of the third heat exchange portion is greater than or equal to a length of the first heat exchange portion in the second direction.

In the above embodiment, by setting the length of the fourth heat exchange portion to be equal to the length of the third heat exchange portion in the first direction, dimensions of two ends of the U-shaped region can be similar, which facilitates controlling the temperature difference between the battery cells at two ends of the battery assembly in the second direction and improving the temperature uniformity of the battery assembly. By setting the length of the fourth heat exchange portion to be less than the length of the third heat exchange portion in the first direction, the fourth heat exchange portion can be easily connected to a manifold, and clearance can be provided between the fourth heat exchange portion and other flow channel sections of the first heat exchange flow channel, other flow channel structures, or other components.

In the above embodiment, by setting the length of the third heat exchange portion to be greater than the length of the first heat exchange portion in the second direction, the first heat exchange section can be enclosed within the U-shaped region of the second heat exchange section, the length of the third heat exchange portion is increased, and the heat exchange area of the third heat exchange portion is increased, such that the second heat exchange section can enclose a larger U-shaped region, thereby improving the heat exchange effect of the heat exchange member. By setting the length of the third heat exchange portion to be equal to the length of the first heat exchange portion, length dimensions of the third heat exchange portion and the plurality of first heat exchange portions of the first heat exchange flow channel extending in the second direction can be similar, which facilitates controlling the temperature difference of the battery assembly in the first direction and improving the temperature uniformity of the battery assembly.

According to an example of the present application, the fourth heat exchange portion extends in the first direction and extends to a position proximal to one of the plurality of first heat exchange portions that is farthest from the second heat exchange portion.

In the above embodiment, by configuring the fourth heat exchange portion to extend in the first direction and to extend to the position proximal to the one of the plurality of first heat exchange portions that is farthest from the second heat exchange portion, the heat exchange area of the fourth heat exchange portion can be increased, such that the first heat exchange flow channel can perform heat exchange with a plurality of battery cells arranged corresponding to the first heat exchange flow channel as much as possible, thereby improving the heat exchange comprehensiveness of the first heat exchange flow channel, and further improving the heat exchange effect of the battery.

According to an example of the present application, the second heat exchange section further includes a second bent portion and a third bent portion, where the second bent portion and the third bent portion are both arc-shaped, the second bent portion is connected between the first end of the third heat exchange portion and the second heat exchange portion, and the third bent portion is connected between the second end of the third heat exchange portion and the first heat exchange portion.

In the above embodiment, by providing the second bent portion and the third bent portion, the fluid flow direction inside the first heat exchange flow channel can be changed, achieving a smooth transition and connection between the third heat exchange portion and the second heat exchange portion, and achieving a smooth transition and connection between the third heat exchange portion and the first heat exchange portion. Therefore, the second bent portion and the third bent portion can reduce the flow resistance of the fluid inside the second heat exchange section and reduce the pressure drop, thereby increasing the flow rate of the heat exchange fluid and further enhancing the heat exchange efficiency of the first heat exchange flow channel. In addition, by providing the second bent portion and the third bent portion, the circuitous arrangement of the first heat exchange flow channel can also be achieved, such that the heat exchange area of the first heat exchange flow channel can be increased and the structure can be more compact, which facilitates achieving a miniaturization design of the battery and ensuring the volumetric energy density of the battery.

According to an example of the present application, the second heat exchange section further includes a fifth heat exchange portion, where the fifth heat exchange portion extends along a fourth-side peripheral edge of the first heat exchange section and closes at least a portion of an opening of the U-shaped region formed by the second heat exchange portion, the third heat exchange portion, and the fourth heat exchange portion.

In the above embodiment, by providing the fifth heat exchange portion, the second heat exchange section can perform heat exchange with the peripheral edges at four sides of the battery assembly. As such, heat exchange with the peripheral edges at four sides of the battery assembly can be performed by utilizing the second heat exchange section of a single first heat exchange flow channel, thereby improving the heat exchange effect of the peripheral edges at four sides of the battery assembly and improving the temperature uniformity of the battery assembly.

According to an example of the present application, the fifth heat exchange portion is arranged opposite to the second heat exchange portion, and the fifth heat exchange portion is connected between the second end of the third heat exchange portion and the first heat exchange section, and is connected to the third heat exchange portion at an included angle and connected to the first heat exchange section at an included angle; or one end of the fifth heat exchange portion is connected to an end of the fourth heat exchange portion distal to the second heat exchange portion, and the fifth heat exchange portion is connected to the fourth heat exchange portion at an included angle.

In the above embodiment, by arranging the fifth heat exchange portion opposite to the second heat exchange portion and connecting the fifth heat exchange portion between the third heat exchange portion and the first heat exchange section or between the fourth heat exchange portion and the first heat exchange section, the structure of the first heat exchange flow channel can be further optimized according to the heat exchange requirements of the battery assembly.

According to an example of the present application, the first heat exchange flow channel further includes a third heat exchange section, where the first heat exchange section is connected between the third heat exchange section and the second heat exchange section, and the third heat exchange section is connected to the first heat exchange section at an included angle.

In the above embodiment, by providing the third heat exchange section, the heat exchange area of the first heat exchange flow channel can be further increased, thereby further improving the heat exchange effect of the first heat exchange flow channel.

According to an example of the present application, the first heat exchange section includes a plurality of first heat exchange portions, and the plurality of first heat exchange portions are sequentially connected in a bent manner in a first direction; the third heat exchange section is arranged on a side of the first heat exchange section facing away from the third heat exchange portion, and the third heat exchange section is connected to one of the plurality of first heat exchange portions that is closest to the second heat exchange portion in the first direction.

In the above embodiment, by providing the third heat exchange section and connecting the third heat exchange section to the one of the plurality of first heat exchange portions that is closest to the second heat exchange portion in the first direction, the heat exchange area can be increased, and the temperature difference of the battery assembly can be balanced, thereby improving the temperature uniformity of the battery assembly.

According to an example of the present application, the third heat exchange section extends in the first direction toward a direction away from the second heat exchange portion, the first heat exchange portion extends in a second direction, and the first direction and the second direction are arranged at an included angle.

In the above embodiment, by configuring the third heat exchange section to extend in the first direction toward the direction away from the second heat exchange portion, the heat exchange area of the first heat exchange flow channel can be increased, thereby improving the heat exchange effect of the first heat exchange flow channel on the battery cells. Meanwhile, when the third heat exchange section and the fourth heat exchange portion jointly perform heat exchange with the battery assembly, the temperature difference in regions at edge positions of the battery assembly can be balanced, thereby improving the temperature uniformity at the edge positions of the battery assembly.

According to an example of the present application, the third heat exchange section extends in the first direction to a position proximal to one of the plurality of first heat exchange portions that is farthest from the second heat exchange portion.

In the above embodiment, by configuring the third heat exchange section to extend in the first direction to the position proximal to the one of the plurality of first heat exchange portions that is farthest from the second heat exchange portion, the length of the third heat exchange portion can be increased, and the heat exchange area of the third heat exchange portion can be increased, thereby improving the heat exchange effect of the first heat exchange flow channel.

According to an example of the present application, the first heat exchange flow channel further includes a fourth bent portion, where the fourth bent portion is arc-shaped and is connected between the third heat exchange section and the first heat exchange portion in a bent manner.

In the above embodiment, by providing the fourth bent portion, the flow direction of the fluid between the third heat exchange section and the first heat exchange portion can be changed. Meanwhile, the arc-shaped fourth bent portion can reduce the flow resistance of the fluid and reduce the pressure drop, thereby increasing the flow rate of the fluid and further enhancing the heat exchange efficiency of the first heat exchange flow channel. In addition, by providing the fourth bent portion, the circuitous arrangement of the first heat exchange flow channel can also be achieved, such that the heat exchange area of the first heat exchange flow channel can be increased and the structure can be more compact, which facilitates achieving a miniaturization design of the battery and improving the volumetric energy density of the battery.

According to an example of the present application, the first heat exchange flow channel further includes a first inlet/outlet section, where one end of the first inlet/outlet section is connected to the third heat exchange section at an included angle, and the other end of the first inlet/outlet section is formed as a first inlet/outlet of the first heat exchange flow channel.

In the above embodiment, by providing the first inlet/outlet section, an external pipeline can be easily connected, such that the heat exchange medium can enter or exit the first heat exchange flow channel. Meanwhile, the heat exchange fluid entering or exiting the first heat exchange flow channel can be guided, such that the heat exchange fluid can enter or exit quickly, thereby improving the heat exchange rate.

According to an example of the present application, the first inlet/outlet section extends in a second direction toward a direction away from the first heat exchange section, and the third heat exchange section extends in a first direction.

In the above embodiment, by configuring the first inlet/outlet section to extend in the second direction toward the direction away from the first heat exchange section, the pipeline arrangement of the first heat exchange flow channel can be more rational, and the connection with the external pipeline can be facilitated. Meanwhile, the first inlet/outlet can be distal to the battery assembly, which facilitates reducing the risk of damage to the battery assembly due to water leakage at the first inlet/outlet.

According to an example of the present application, the first heat exchange flow channel further includes a fifth bent portion, where the fifth bent portion is arc-shaped and is connected between the third heat exchange section and the first inlet/outlet section in a bent manner.

In the above embodiment, by providing the fifth bent section, the heat exchange fluid can flow smoothly from the third heat exchange section to the first inlet/outlet section or from the first inlet/outlet section to the third heat exchange section, achieving liquid inlet or liquid outlet of the first inlet/outlet section. Meanwhile, the arc-shaped fifth bent portion can also reduce the flow resistance of the fluid and reduce the pressure drop, thereby increasing the flow rate of the heat exchange fluid and further enhancing the heat exchange efficiency of the first heat exchange flow channel.

According to an example of the present application, the first heat exchange flow channel further includes a second inlet/outlet section, where one end of the second inlet/outlet section is connected to the fourth heat exchange portion at an included angle, and the other end of the second inlet/outlet section is formed as a second inlet/outlet of the first heat exchange flow channel; the second inlet/outlet section extends in a second direction toward a direction away from the first heat exchange section, and the fourth heat exchange portion extends in a first direction.

In the above embodiment, by providing the second inlet/outlet section, an external pipeline can be easily connected, such that the heat exchange medium can enter or exit the first heat exchange flow channel to complete the heat exchange with the battery cells. Meanwhile, the heat exchange fluid entering or exiting the first heat exchange flow channel can be guided, such that the heat exchange fluid can enter or exit quickly, thereby improving the heat exchange rate.

According to an example of the present application, the first heat exchange section is connected downstream of the second heat exchange section in a fluid flow direction; or the heat exchange member is configured such that: during heating of a battery assembly of the battery, the first heat exchange section is connected downstream of the second heat exchange section in a fluid flow direction; during cooling of the battery assembly of the battery, the first heat exchange section is connected upstream of the second heat exchange section in a fluid flow direction.

In the above embodiment, by configuring the first heat exchange section to be connected downstream of the second heat exchange section in the fluid flow direction, the first heat exchange flow channel can first perform heat exchange with the outer circumference of the battery, which facilitates mitigating the temperature difference of the battery in different environments, thereby improving the service life of the battery to a certain extent. The heat exchange member is configured such that: during heating of the battery assembly of the battery, the first heat exchange section is connected downstream of the second heat exchange section in the fluid flow direction; during cooling of the battery assembly of the battery, the first heat exchange section is connected upstream of the second heat exchange section in the fluid flow direction, thereby further improving the heat exchange effect of the battery, and improving the temperature uniformity of the battery assembly.

According to an example of the present application, the heat exchange member is provided with one or a plurality of heat exchange flow channels, where in the case that a plurality of heat exchange flow channels are provided, the plurality of heat exchange flow channels are spaced apart in a first direction or are arranged in a winding manner relative to each other, at least one heat exchange flow channel is formed as the first heat exchange flow channel, and the plurality of heat exchange flow channels are arranged in parallel.

In the above embodiment, by configuring the heat exchange member to be provided with one or a plurality of heat exchange flow channels and the plurality of heat exchange flow channels to be spaced apart in the first direction or to be arranged in a winding manner relative to each other, the diversity of the heat exchange flow channels can be increased, thereby improving the adaptability of the heat exchange member, allowing the heat exchange member to meet the requirements of different batteries, and thus improving the market competitiveness of the batteries. Meanwhile, the plurality of heat exchange flow channels are arranged in parallel, such that the plurality of heat exchange flow channels can simultaneously perform heat exchange, thereby reducing the heat exchange time of the heat exchange member and improving the heat exchange efficiency. According to an example of the present application, the plurality of heat exchange flow channels are spaced apart in the first direction, and two heat exchange flow channels located at two ends in the first direction are both the first heat exchange flow channels; the two first heat exchange flow channels are arranged symmetrically about a center line of the heat exchange member in a second direction, and the second direction and the first direction are arranged at an included angle.

In the above embodiment, by providing the two first heat exchange flow channels arranged symmetrically, simultaneous liquid inlet on both sides can be achieved, increasing the liquid inlet flow, reducing the length of a single heat exchange flow channel, and reducing the pressure drop in the single heat exchange flow channel, thereby improving the heat exchange efficiency.

According to an example of the present application, the plurality of heat exchange flow channels are arranged symmetrically about a center line of the heat exchange member in a second direction.

In the above embodiment, by configuring the plurality of heat exchange flow channels to be arranged symmetrically about the center line of the heat exchange member in the second direction, the plurality of heat exchange flow channels can synchronously perform heat exchange with the battery assembly, thereby improving the heat exchange efficiency. Meanwhile, the temperature consistency in regions of the battery assembly that have heat exchange with the two symmetrically arranged portions of the heat exchange member can also be improved, thereby further improving the temperature uniformity effect of the battery assembly.

According to an example of the present application, the plurality of heat exchange flow channels further include at least one second heat exchange flow channel, where the second heat exchange flow channel is arranged between two first heat exchange flow channels, and a structure of any second heat exchange flow channel is the same as or different from a structure of the first heat exchange flow channel.

In the above embodiment, by providing the at least one second heat exchange flow channel, the diversity of the arrangement of the heat exchange flow channels can be increased, enabling the heat exchange member to better perform heat exchange with the battery assembly, thereby improving the heat exchange effect of the heat exchange member.

According to an example of the present application, the second heat exchange flow channel includes a plurality of fourth heat exchange sections, where the plurality of fourth heat exchange sections are sequentially connected, the fourth heat exchange sections extend in a second direction, and the plurality of fourth heat exchange sections are spaced apart in the first direction.

In the above embodiment, by configuring the second heat exchange flow channel to include the plurality of fourth heat exchange sections that are sequentially connected, the structural complexity of the second heat exchange flow channel can be reduced, thereby reducing the production cost of the second heat exchange flow channel, and thus reducing the production cost of the heat exchange member.

According to an example of the present application, the heat exchange member is provided with a plurality of heat exchange flow channels, and the plurality of heat exchange flow channels include one first heat exchange flow channel and at least one third heat exchange flow channel, where the third heat exchange flow channel is arranged in a bent manner within the U-shaped region of the first heat exchange flow channel, the first heat exchange flow channel and the third heat exchange flow channel are bent in a same plane, and bent structures of the first heat exchange flow channel and the third heat exchange flow channel are the same or different.

In the above embodiment, by providing the plurality of heat exchange flow channels, the diversity of the heat exchange flow channels can be increased, such that the arrangement of the heat exchange flow channels can be designed according to the cooling requirements of the battery, thereby further enhancing the heat exchange effect of the heat exchange member and improving the temperature uniformity of the battery.

According to an example of the present application, the third heat exchange flow channel includes a U-shaped region with a same structure as the U-shaped region of the first heat exchange flow channel, and at least a portion of the first heat exchange section of the first heat exchange flow channel is arranged within the U-shaped region of the third heat exchange flow channel.

In the above embodiment, by configuring the third heat exchange flow channel to include the U-shaped region with the same structure as the U-shaped region of the first heat exchange flow channel, and at least a portion of the first heat exchange section of the first heat exchange flow channel to be arranged within the U-shaped region of the third heat exchange flow channel, at least a portion of the first heat exchange flow channel and at least a portion of the third heat exchange flow channel can be arranged in a winding manner relative to each other. As such, the winding method of the heat exchange flow channels can be provided according to the heat exchange requirements of various parts of the battery assembly, thereby further enhancing the heat exchange effect of the heat exchange member and improving the temperature uniformity of the battery.

According to an example of the present application, the U-shaped region of the first heat exchange flow channel is located at an outermost circumference of the heat exchange member.

In the above embodiment, by configuring the U-shaped region of the second heat exchange section of the first heat exchange flow channel to be located at the outermost circumference of the heat exchange member, the second heat exchange section can perform heat exchange with the outer circumference of the battery, which facilitates mitigating the temperature difference of the battery in different environments, thereby improving the service life of the battery to a certain extent.

According to an example of the present application, the heat exchange member includes at least one heat exchange tube, where in the case that a plurality of heat exchange tubes are provided, the plurality of heat exchange tubes are spaced apart in the first direction, and one heat exchange flow channel is defined in an inner side of each heat exchange tube.

In the above embodiment, by configuring the heat exchange member to include the at least one heat exchange tube, not only can the process complexity of the heat exchange member be reduced, thereby improving the production rate of the heat exchange member, but also the fluid pressure drop in a single heat exchange tube can be reduced, thereby improving the heat exchange efficiency. In addition, the tubular structure is simpler than a plate-shaped structure, achieving lower costs and easier processing.

According to an example of the present application, the heat exchange tube is formed by bending a single tube. Optionally, the heat exchange tube is bent in an arc shape at bent positions.

In the above embodiment, by configuring the heat exchange tube to be formed by bending a single tube, the number of welding spots on the heat exchange member can be reduced, thereby reducing the risk of leakage in the heat exchange member and improving the use reliability of the heat exchange member. Meanwhile, compared with a manufacturing process of the plate-shaped structure, the process of bending a single tube is simpler in operation and consumes less material, which can significantly reduce the cost of the heat exchange member. By configuring the heat exchange tube to be bent in an arc shape at the bent positions, the flow resistance of the fluid can be reduced, and the pressure drop can be reduced, thereby increasing the flow rate of the heat exchange fluid in the heat exchange flow channel, and enhancing the heat exchange efficiency of the heat exchange member.

According to an example of the present application, the heat exchange tube is bent in a circular arc shape at bent positions, and a ratio of a bending radius of the heat exchange tube on a center line in a length direction to a width of the heat exchange tube is greater than or equal to 0.6; optionally, the ratio of the bending radius of the heat exchange tube to the width of the heat exchange tube is greater than or equal to 0.8; optionally, a wall thickness of the heat exchange tube at bent positions is greater than or equal to 0.2 mm.

In the above embodiment, by setting the ratio of the bending radius r of the heat exchange tube on the center line in the length direction to the width d of the heat exchange tube to be greater than or equal to 0.6, the bending and stretching of the heat exchange tube are less likely to cause damage, thereby reducing the probability of damage to the heat exchange tube during bending, improving the structural strength of the heat exchange tube at the bent positions, and improving the sealing performance of the heat exchange tube at the bent positions. By setting the ratio of the bending radius of the heat exchange tube to the width of the heat exchange tube to be greater than or equal to 0.8, the probability of damage to the heat exchange tube during bending can be further reduced, further improving the structural strength of the heat exchange tube at the bent positions, and improving the sealing performance of the heat exchange tube at the bent positions. By setting the wall thickness of the heat exchange tube at the bent positions to be greater than or equal to 0.2 mm, the wall thickness of the heat exchange tube at the bent positions is not too thin, which facilitates ensuring the strength of the heat exchange tube at the bent positions, thereby effectively reducing the risk of leakage at the bent positions of the heat exchange tube, and improving the use reliability of the heat exchange tube.

According to an example of the present application, a thinning rate of a wall thickness of the heat exchange tube due to bending is less than or equal to 50% at bent positions of the heat exchange tube; optionally, the thinning rate of the heat exchange tube due to bending is less than or equal to 30%.

In the above embodiment, by setting the thinning rate of the wall thickness of the heat exchange tube due to bending to be less than or equal to 50%, the wall thickness loss of the heat exchange tube can be maintained within a preset range, such that the wall thickness of the heat exchange tube at the bent positions is not too thin, which facilitates ensuring the strength of the heat exchange tube at the bent positions, thereby effectively reducing the risk of leakage at the bent positions of the heat exchange tube, and improving the use reliability of the heat exchange tube. By setting the thinning rate of the heat exchange tube due to bending to be less than or equal to 30%, the wall thickness loss of the heat exchange tube after bending can be further reduced, further improving the strength of the heat exchange tube at the bent positions.

According to an example of the present application, a wall thickness of the heat exchange tube is 0.2 mm to 3 mm; optionally, the wall thickness of the heat exchange tube is 0.5 mm to 1.2 mm.

In the above embodiment, by setting the wall thickness of the heat exchange tube to be 0.2 mm to 3 mm, the heat exchange tube has an appropriate thickness, such that the wall thickness of the heat exchange tube is not excessively small, thereby ensuring the use strength of the heat exchange tube and effectively reducing the risk of damage to the heat exchange tube. In addition, the wall thickness of the heat exchange tube is not excessively large, which facilitates reducing the overall weight of the heat exchange tube, thereby reducing the overall weight of the battery and achieving battery lightweighting. By setting the wall thickness of the heat exchange tube to be 0.5 mm to 1.2 mm, the strength of the heat exchange tube can be ensured while reducing the overall weight of the heat exchange tube, thereby achieving battery lightweighting.

According to an example of the present application, the heat exchange member includes a heat exchange plate, and the heat exchange flow channel is formed on the heat exchange plate by stamping.

In the above embodiment, by configuring the heat exchange flow channel to be formed on the heat exchange plate by stamping, the process steps for the heat exchange member can be reduced, thereby improving the production rate of the heat exchange member. Meanwhile, the heat exchange area of the stamped heat exchange plate is large, thereby ensuring the heat exchange efficiency.

According to an example of the present application, a width of the heat exchange flow channel is 3 mm to 200 mm; optionally, the width of the heat exchange flow channel is 5 mm to 80 mm; further optionally, a height of the heat exchange flow channel in a third direction is 1 mm to 20 mm; still further optionally, the height of the heat exchange flow channel in a third direction is 4 mm to 6 mm.

In the above embodiment, by setting the width of the heat exchange flow channel to be 3 mm to 200 mm, the width of the heat exchange flow channel is not excessively large, which facilitates the layout of the heat exchange flow channel and can meet the heat exchange effect required by the heat exchange member. In addition, the width of the heat exchange flow channel is not excessively small, such that the number of arranged first heat exchange sections can be reduced, thereby reducing the overall cost of the heat exchange member. By setting the width of the heat exchange flow channel to be 5 mm to 80 mm, the layout of the heat exchange flow channel is facilitated and the heat exchange effect required by the heat exchange member can be met. Meanwhile, the number of arranged first heat exchange sections can be reduced, thereby reducing the overall cost of the heat exchange member. By setting the height of the heat exchange flow channel in the third direction to be 1 mm to 20 mm, the height of the heat exchange member is not excessively small, thereby ensuring the flow of the heat exchange fluid in the heat exchange member, and ensuring the heat exchange effect of the heat exchange member. Meanwhile, the height of the heat exchange member is not excessively large, which facilitates reducing the occupied space of the heat exchange member and achieving the miniaturization of the battery. By setting the height of the heat exchange flow channel in the third direction to be 4 mm to 6 mm, the heat exchange effect of the heat exchange member can be ensured while the occupied space of the heat exchange member can be reduced, thereby achieving the miniaturization of the battery.

According to an example of the present application, a number of the heat exchange flow channels is 2 to 4.

In the above embodiment, by setting the number of the heat exchange flow channels to be 2 to 4, the length of a single heat exchange flow channel can be reduced, thereby reducing the friction resistance of the heat exchange flow channel, reducing the pressure drop, and thus improving the heat exchange efficiency of the heat exchange member.

According to an example of the present application, the heat exchange member further includes a manifold, where the manifold includes: a tube body; a plurality of first flow channel interfaces, where the plurality of first flow channel interfaces are in one-to-one correspondence with and connected to first inlets/outlets of the plurality of heat exchange channels; a plurality of second flow channel interfaces, where the plurality of second flow channel interfaces are in one-to-one correspondence with and connected to second inlets/outlets of the plurality of heat exchange channels, and at least two second flow channel interfaces are respectively located on two sides of the plurality of first flow channel interfaces in an extension direction of the tube body; and a separation structure, where the separation structure is arranged inside the tube body, the separation structure separates the first flow channel interfaces from the second flow channel interfaces inside the tube body, and the plurality of second flow channel interfaces are in communication with each other inside the tube body.

In the above embodiment, by providing the manifold, separating the plurality of first flow channel interfaces from the plurality of second flow channel interfaces by the separation structure, and configuring the plurality of second flow channel interfaces to be in communication with each other inside the tube body, the first flow channel interfaces and the second flow channel interfaces can be separately formed as an input end and an output end of the heat exchange flow channels, such that the liquid inlet and liquid outlet tasks can be completed by using a single tube body, thereby reducing the number of manifold pipes used. Meanwhile, the use of external communicating pipelines can also be reduced, thereby reducing the production cost and the occupied space of heat exchange management assemblies, and reducing the assembly steps and the mounting space of the heat management assemblies. In addition, since the plurality of second flow channel interfaces are provided and at least two second flow channel interfaces are located on two sides of the first flow channel interfaces, the heat exchange fluid can flow from the periphery of the battery to the central region to achieve heat exchange, and the heat exchange fluid can also flow from the central region of the battery to the periphery to achieve heat exchange, thereby improving the temperature uniformity of the battery and prolonging the service life of the battery.

According to an example of the present application, the tube body is separated by the separation structure into a first space and a second space that are independent of each other, where the first space is in communication with the first flow channel interfaces, the second space is in communication with the second flow channel interfaces, the second space includes a first segment, a second segment, and a third segment that are sequentially in communication with each other in the extension direction of the tube body, the first segment and the third segment are respectively located on two sides of the first space, and the second segment is arranged side by side with the first space.

In the above embodiment, by configuring the first space and the second space to be independent of each other and not in communication with each other, two independent flow channels can be formed inside the tube body, such that the inlet and the outlet of the heat exchange fluid do not interfere with each other. Meanwhile, the first space and the second space are arranged side by side, such that the dimension of the tube body can be reduced, thereby reducing the occupied space of the manifold pipes.

According to an example of the present application, the separation structure includes a first separation plate and a second separation plate, where the first separation plate is configured to separate the second segment from the first space, at least two second separation plates are provided and located at two ends of the first separation plate in the extension direction of the tube body, respectively, and the second separation plates are configured to separate the first segment from the first space, and separate the third segment from the first space.

In the above embodiment, by providing the first separation plate and the second separation plates, two independent spaces can be formed inside the tube body, such that the inflow and the outflow of the liquid do not interfere with each other, thereby improving the heat exchange effect of the battery.

According to an example of the present application, the heat exchange member further includes: a first tube portion, where an inlet end of the first tube portion is formed as a first inlet/outlet of the heat exchange flow channel; a second tube portion, where an outlet end of the second tube portion is formed as a second inlet/outlet of the heat exchange flow channel; and a mounting member, where the mounting member is configured to be in sealing connection with a case of a battery, through holes communicating with spaces on two sides of the mounting member are formed in the mounting member, and the first tube portion and/or the second tube portion pass through the through holes and are in sealing connection with the through holes.

In the above embodiment, by providing the mounting member, it is not necessary to separately seal the first tube portion and the second tube portion with the case during the assembly of the battery, which can reduce the labor and materials required for the assembly of the battery, thereby improving the production rate of the battery and reducing the labor cost for producing the battery.

According to an example of the present application, the mounting member is provided with a cavity with one side open, where the through holes penetrate through a bottom wall of the cavity opposite to the opening, the mounting member is adapted to be arranged between a case body and a bottom protective plate of the case, and an outer peripheral surface of the mounting member is adapted to be in sealing connection with the case body and the bottom protective plate.

In the above embodiment, by configuring the mounting member to be provided with the cavity with one side open, the overall weight of the mounting member can be reduced, thereby reducing the overall weight of the entire battery and achieving battery lightweighting. Meanwhile, by configuring the mounting member to be adapted to be arranged between the case body and the bottom protective plate of the case, the bottom of the case body can isolate the heat exchange member from a plurality of battery cells. Therefore, the damage of the heat exchange member will not affect the plurality of battery cells, thereby reducing the cost of battery maintenance.

In a second aspect, an embodiment of the present application provides a battery. The battery includes the heat exchange member according to the first aspect of the present application.

In the above embodiment, by providing the heat exchange member according to the first aspect, bending the second heat exchange section of the heat exchange member to form the U-shaped region, and arranging the first heat exchange section in a bent manner within the U-shaped region, when the heat exchange member is used for heat exchange with the battery assembly, the U-shaped region formed by the peripheral second heat exchange section may be aligned with the peripheral battery cells of the battery, and the first heat exchange section within the U-shaped region may be aligned with the internal battery cells. This allows the heat exchange member to compensate for the internal and external temperature difference caused by heat exchange between the peripheral battery cells and the environment, such that the heat exchange effects of the battery cells at the periphery of the battery assembly and the battery cells inside the battery assembly tend to be consistent, improving the temperature uniformity of the battery, thereby improving the service life of the battery to a certain extent, and improving the overall performance of the battery.

According to an example of the present application, the battery further includes a battery assembly, where the battery assembly includes a battery unit, and the battery unit includes a plurality of battery cells sequentially stacked in a third direction; the heat exchange member is arranged on a side of the battery assembly in a fourth direction and performs heat exchange with the battery assembly, and the third direction and the fourth direction are arranged at an included angle.

In the above embodiment, by configuring the heat exchange member to be arranged on the side of the battery assembly in the fourth direction and perform heat exchange with the battery assembly, the temperature of the battery assembly can be maintained within a safe operating temperature range, thereby improving the use reliability and service life of the battery assembly.

According to an example of the present application, a plurality of battery cells located at an outermost circumferential periphery of the battery assembly form peripheral battery cells, and at least a portion of the second heat exchange section is attached to the peripheral battery cells.

In the above embodiment, by configuring at least the portion of the second heat exchange section to be attached to the peripheral battery cell group, the heat exchange efficiency of the peripheral battery cell group can be improved, thereby further balancing the temperature difference caused by the heat dissipation of the peripheral battery cells of the battery assembly being greater than the heat dissipation of the battery cells at an inner periphery.

According to an example of the present application, the battery assembly includes one battery unit, and all battery cells of the battery unit jointly form the peripheral battery cells; or the battery assembly includes a plurality of battery units, the plurality of battery units are sequentially arranged in a fifth direction, a plurality of battery cells, located at an outermost periphery of the battery assembly, of the plurality of battery units jointly form the peripheral battery cells, and the third direction, the fourth direction, and the fifth direction are arranged at an included angle to each other.

In the above embodiment, by configuring all the battery cells of the battery unit to jointly form the peripheral battery cells in the case that the battery assembly includes one battery unit, the entire second heat exchange section and the first heat exchange section both perform heat exchange with the peripheral battery cells, such that the specific structure and layout of the second heat exchange section and the first heat exchange section are not limited, thereby reducing the layout complexity of the first heat exchange flow channel. By configuring the plurality of battery cells, located at the outermost periphery of the battery assembly, of the plurality of battery units to jointly form the peripheral battery cells, the heat exchange position of the second heat exchange section can be defined, which facilitates the layout of the heat exchange flow channel.

According to an example of the present application, the peripheral battery cell group includes a first group of battery cells, a second group of battery cells, and a third group of battery cells that are arranged adjacently, where a plurality of battery cells included in the first group of battery cells are stacked in the third direction, a plurality of battery cells included in the second group of battery cells are stacked in the fifth direction, and a plurality of battery cells included in the third group of battery cells are stacked in the fifth direction; the second heat exchange section includes a second heat exchange portion, a third heat exchange portion, and a fourth heat exchange portion that are connected; the second heat exchange portion extends and is attached to the first group of battery cells to enable heat exchange, and/or the third heat exchange portion extends and is attached to the second group of battery cells to enable heat exchange, and/or the fourth heat exchange portion extends and is attached to the third group of battery cells to enable heat exchange.

In the above embodiment, since the first group of battery cells, the second group of battery cells, and the third group of battery cells are all peripheral battery cell groups, and the peripheral battery cell groups are arranged at the outermost periphery of the battery assembly and closest to the case of the battery, and exchange more heat with the environment and thus have a lower temperature than the battery cells at other positions, by configuring at least one of the second heat exchange portion, the third heat exchange portion, and the fourth heat exchange portion to be attached to the peripheral battery cells for heat exchange, the heat exchange member can stably and reliably cool or heat the peripheral battery cell group, such that the battery assembly can achieve a good heat exchange effect, and the temperature distribution in the battery assembly is more uniform, thereby enabling the battery operation to be more stable.

According to an example of the present application, the peripheral battery cells further include a fourth group of battery cells, a plurality of battery cells included in the fourth group of battery cells being arranged in the third direction, and the second heat exchange section further includes a fifth heat exchange portion, where the fifth heat exchange portion closes at least a portion of the opening of the U-shaped region formed by the second heat exchange portion, the third heat exchange portion, and the fourth heat exchange portion, and the fifth heat exchange portion extends and is attached to the fourth group of battery cells to enable heat exchange.

In the above embodiment, by configuring the fifth heat exchange portion in the second heat exchange section to be attached to the fourth group of battery cells, the heat exchange member can better coordinate with the heat dissipation conditions of battery cells at different positions in the battery for the arrangement of the heat exchange flow channel, such that the heat exchange effect of the heat exchange member on the battery assembly is improved, and the internal temperature distribution of the battery is more uniform during operation, thereby enabling the battery operation to be more stable.

According to an example of the present application, the second heat exchange portion extends in a second direction, the second direction and the third direction being a same direction, and the third heat exchange portion and the fourth heat exchange portion extend in a first direction, the first direction and the fifth direction being a same direction; and/or the first heat exchange portion extends in the first direction, the first direction and the fifth direction being a same direction.

In the above embodiment, since the battery unit includes the plurality of battery cells sequentially stacked in the third direction, and the plurality of battery units are sequentially arranged in the fifth direction, by configuring the second heat exchange portion to extend in the second direction, where the second direction and the third direction are the same direction, and the third heat exchange portion and the fourth heat exchange portion to extend in the first direction, where the first direction and the fifth direction are the same direction, the second heat exchange portion can extend in the stacking direction of the plurality of battery cells, and the third heat exchange portion and the fourth heat exchange portion can extend in the arrangement direction of the plurality of battery units, such that the extension directions of the second heat exchange portion, the third heat exchange portion, and the fourth heat exchange portion can be designed according to the arrangement of the battery units, thereby enabling the arrangement of the first heat exchange flow channel to better meet the heat exchange requirements of the battery assembly and improving the heat exchange efficiency.

In the above embodiment, by configuring the first heat exchange portion to extend in the first direction, where the first direction and the fifth direction are the same direction, the first heat exchange portion can extend in the arrangement direction of the plurality of battery units, such that the first heat exchange portion can perform heat exchange with the plurality of battery cells of the plurality of battery units. When the plurality of battery units are sequentially arranged in a thickness direction of the battery cells, the first heat exchange portion can perform heat exchange with the plurality of battery cells. When the plurality of battery units are sequentially arranged in a length direction of the battery cells, the heat exchange area between the first heat exchange portion and the battery cells is increased, thereby increasing the heat exchange effect of the battery cells.

According to an example of the present application, the battery assembly includes a plurality of battery units sequentially arranged in a fifth direction, and at least one battery unit located at two ends in the fifth direction is the first group of battery cells; the second heat exchange portion and at least one first heat exchange portion of the first heat exchange section are jointly attached to the first group of battery cells to enable heat exchange.

In the above embodiment, by configuring the second heat exchange portion and the at least one first heat exchange portion of the first heat exchange section to be jointly attached to the first group of battery cells for heat exchange, the heat exchange area between the first heat exchange flow channel and the first group of battery cells can be increased. Meanwhile, the temperature difference at different positions of the first group of battery cells can be balanced, thereby improving the temperature uniformity of the first group of battery cells.

According to an example of the present application, a plurality of first heat exchange portions are provided, and the plurality of first heat exchange portions are sequentially connected in a bent manner in the first direction; the second heat exchange portion and the first heat exchange portion that is farthest from the second heat exchange portion along a connecting line of the sequential connection perform heat exchange with the first group of battery cells.

In the above embodiment, by configuring the second heat exchange portion and the first heat exchange portion that is farthest from the second heat exchange portion along the connecting line of the sequential connection to perform heat exchange with the first group of battery cells, the second heat exchange portion and the adjacent first heat exchange portion perform heat exchange with the first group of battery cells, such that the second heat exchange portion can perform heat exchange with an edge position of the first group of battery cells, and the first heat exchange portion can perform heat exchange with the other side of the first group of battery cells. The temperature difference between the heat exchange fluid in the second heat exchange portion and that in the first heat exchange portion is large, and the heat exchange temperature of the first group of battery cells is approximately an average temperature of the second heat exchange portion and the adjacent first heat exchange portion, such that the temperature difference of the first group of battery cells can be balanced, thereby improving the temperature uniformity of the first group of battery cells.

According to an example of the present application, the second heat exchange section includes a second heat exchange portion, a third heat exchange portion, and a fourth heat exchange portion that are connected, where a first end of the third heat exchange portion is connected to the second heat exchange portion at an included angle, and a second end of the third heat exchange portion is connected to the first heat exchange section at an included angle; the second heat exchange portion extends and is attached to the first group of battery cells to enable heat exchange, the third heat exchange portion extends and is attached to the second group of battery cells to enable heat exchange, and the fourth heat exchange portion extends and is attached to the third group of battery cells to enable heat exchange; or the second heat exchange portion is attached to the second group of battery cells to enable heat exchange, and the third heat exchange portion is attached to the first group of battery cells to enable heat exchange.

In the above embodiment, by configuring the second heat exchange portion to extend and be attached to the first group of battery cells to enable heat exchange, the third heat exchange portion to extend and be attached to the second group of battery cells to enable heat exchange, and the fourth heat exchange portion to extend and be attached to the third group of battery cells to enable heat exchange, the second heat exchange section can perform heat exchange with peripheral edges of the battery assembly, thereby balancing the temperature difference caused by heat dissipation of the battery assembly. By configuring the second heat exchange portion to be attached to the second group of battery cells to enable heat exchange, and the third heat exchange portion to be attached to the first group of battery cells to enable heat exchange, the heat exchange flow channel can be designed for the heat exchange member according to the arrangement of the plurality of battery cells, thereby improving the applicability of the heat exchange member, enabling the heat exchange member to meet the cooling requirements of different batteries, and enhancing the heat exchange efficiency and temperature uniformity effect of the battery.

According to an example of the present application, the first heat exchange flow channel further includes a third heat exchange section, where the third heat exchange section is in communication with an end of the first heat exchange section distal to the second heat exchange section and is connected to the first heat exchange section at an included angle; the battery assembly is further provided with a fifth group of battery cells, where a plurality of battery cells included in the fifth group of battery cells are stacked in a fifth direction, and the fifth group of battery cells is arranged adjacent to the third group of battery cells, where the third heat exchange section and the fourth heat exchange portion are both attached to the third group of battery cells to enable heat exchange; or the third heat exchange section is attached to the fifth group of battery cells to enable heat exchange, and the fourth heat exchange portion is attached to the third group of battery cells to enable heat exchange; or the third heat exchange section is attached to the third group of battery cells to enable heat exchange, and the fourth heat exchange portion is arranged on an outer side of the battery assembly in the third direction.

In the above embodiment, by configuring the third heat exchange section and the fourth heat exchange portion to be both attached to the third group of battery cells for heat exchange, the temperature difference of the third group of battery cells can be balanced, thereby improving the temperature uniformity of the third group of battery cells. By configuring the third heat exchange section to be attached to the third group of battery cells for heat exchange, and the fourth heat exchange portion to be arranged on the outer side of the battery assembly in the third direction, the heat exchange process can be simplified, thereby reducing the production difficulty of the heat exchange member.

According to an example of the present application, the first heat exchange portion of the first heat exchange section and the second heat exchange portion of the second heat exchange section both extend in the second direction and are spaced apart in the first direction, and one battery unit is attached to one second heat exchange portion and at least one first heat exchange portion to enable heat exchange; or one battery unit is attached to at least two first heat exchange portions to enable heat exchange.

In the above embodiment, by configuring one battery unit to be attached to one second heat exchange portion and at least one first heat exchange portion to enable heat exchange, or one battery unit to be attached to at least two first heat exchange portions to enable heat exchange, one battery unit can perform heat exchange with at least two heat exchange portions, such that the heat exchange area can be increased, thereby enhancing the heat exchange effect.

According to an example of the present application, a total number of the first heat exchange portions and the second heat exchange portions of the first heat exchange flow channel is greater than or equal to 4.

In the above embodiment, by setting the total number of the first heat exchange portions and the second heat exchange portions of the first heat exchange flow channel to be greater than or equal to 4, the length of each heat exchange flow channel can be increased, the total number of the heat exchange flow channels can be reduced, and the sealing performance of the heat exchange member can be improved.

According to an example of the present application, two first heat exchange flow channels are provided, and each first heat exchange flow channel includes: three first heat exchange portions, one second heat exchange portion, one third heat exchange portion, one fourth heat exchange portion, and one third heat exchange section; four battery units are provided, where the battery unit located at an end in the fifth direction is attached to one first heat exchange portion and one second heat exchange portion to enable heat exchange, and any one of the remaining battery units is attached to two first heat exchange portions to enable exchange, where the third heat exchange portion is connected to the second heat exchange portion and the first heat exchange portion that is farthest from the second heat exchange portion, and is attached to the second group of battery cells to enable heat exchange, the third heat exchange section is connected to the first heat exchange portion that is closest to the second heat exchange portion, and the third heat exchange section and/or the fourth heat exchange portion are attached to the third group of battery cells to enable heat exchange.

In the above embodiment, by configuring the four battery units to match the two first heat exchange flow channels, and each first heat exchange flow channel to include three first heat exchange portions and one second heat exchange portion, each battery unit can perform heat exchange with two heat exchange portions, such that the temperature uniformity of each battery unit can be improved, thereby improving the temperature uniformity of the entire battery.

According to an example of the present application, two first heat exchange flow channels are provided, and each first heat exchange flow channel includes: five first heat exchange portions, one second heat exchange portion, one third heat exchange portion, one fourth heat exchange portion, and one third heat exchange section; six battery units are provided, where the battery unit located at an end in the fifth direction is attached to one first heat exchange portion and one second heat exchange portion to enable heat exchange, and any one of the remaining battery units is attached to two first heat exchange portions to enable heat exchange, where the third heat exchange portion is connected to the second heat exchange portion and the first heat exchange portion that is farthest from the second heat exchange portion, and is attached to the second group of battery cells to enable heat exchange, the third heat exchange section is connected to the first heat exchange portion that is closest to the second heat exchange portion, and the third heat exchange section and/or the fourth heat exchange portion are attached to the third group of battery cells to enable heat exchange.

In the above embodiment, by configuring the six battery units to match the two first heat exchange flow channels, and each first heat exchange flow channel to include five first heat exchange portions and one second heat exchange portion, it can be ensured that each battery unit can perform heat exchange with two heat exchange portions, thereby ensuring the temperature uniformity of each battery unit.

According to an example of the present application, two first heat exchange flow channels are provided, and each first heat exchange flow channel includes: five first heat exchange portions, one second heat exchange portion, one third heat exchange portion, one fourth heat exchange portion, and one third heat exchange section; four battery units are provided, where the battery unit located at an end in the fifth direction is attached to two first heat exchange portions and one second heat exchange portion to enable heat exchange, and any one of the remaining battery units is attached to three first heat exchange portions to enable heat exchange, where the third heat exchange portion is connected to the second heat exchange portion and the first heat exchange portion that is farthest from the second heat exchange portion, and is attached to the second group of battery cells to enable heat exchange, the third heat exchange section is connected to the first heat exchange portion that is closest to the second heat exchange portion, and the third heat exchange section and/or the fourth heat exchange portion are attached to the third group of battery cells to enable heat exchange.

In the above embodiment, by configuring the four battery units to match the two first heat exchange flow channels, and each first heat exchange flow channel to include five first heat exchange portions and one second heat exchange portion, each battery unit can perform heat exchange with three heat exchange portions, such that the temperature uniformity of each battery unit can be further improved. Meanwhile, the heat exchange area of the heat exchange member for each battery unit can also be increased, thereby improving the heat exchange effect of the heat exchange member, and improving the temperature uniformity of the battery.

According to an example of the present application, the battery includes a case and a battery assembly, where the case includes a case body, the case body is an integrally stamped member and includes a bottom wall and a surrounding wall, the battery assembly is arranged within the case body, the battery assembly includes a battery unit, and the battery unit includes a plurality of battery cells sequentially stacked in a third direction.

In the above embodiment, by configuring the case body to be the integrally stamped member, the process steps for the case can be reduced, thereby reducing the production cost of the case. Meanwhile, the overall weight of the case can be reduced while ensuring the rigidity of the case, thereby reducing the overall weight of the battery, and reducing the load on a vehicle.

According to an example of the present application, a thermal management system of the battery includes a temperature adjustment member, where the temperature adjustment member includes at least one of a first temperature adjustment member and a second temperature adjustment member; the first temperature adjustment member is arranged outside the case body and attached to an outer wall of the case body; the second temperature adjustment member is arranged within the case and located between a peripheral wall of the battery cell and the case; at least one of the first temperature adjustment member and the second temperature adjustment member forms the heat exchange member.

In the above embodiment, by configuring at least one of the first temperature adjustment member and the second temperature adjustment member to be formed as the heat exchange member, the thermal management system of the battery can better perform thermal management on the battery, such that during battery operation, the battery assembly can operate in a good temperature environment, enabling the battery operation to be more stable and enabling a better battery performance.

According to an example of the present application, the thermal management system of the battery further includes a third temperature adjustment member, where the third temperature adjustment member is arranged within the case body and located between two adjacent battery cells, and a structure of the third temperature adjustment member is the same as or different from a structure of the heat exchange member.

In the above embodiment, by providing the third temperature adjustment member arranged between two adjacent battery cells, the third temperature adjustment member can be in contact with the large surface of the battery cells, thereby increasing the contact area between the third temperature adjustment member and the battery cells, improving the heat exchange effect of the third temperature adjustment member, and improving the heat exchange efficiency of the entire battery.

According to an example of the present application, the case further includes a bottom protective plate, where the bottom protective plate is arranged on a lower side of the case body, and the heat exchange member is arranged between the case body and the bottom protective plate; the battery further includes a foam member, at least a portion of the foam member being filled in a gap formed by bending of a heat exchange tube of the heat exchange member.

In the above embodiment, by providing the foam member and filling at least a portion of the foam member in the gap formed by the bending of the heat exchange tube of the heat exchange member, the heat exchange member can be fixed to a certain extent, such that the heat exchange member can be more stably arranged between the bottom protective plate and the bottom wall of the case body. Meanwhile, when the battery is subjected to an external impact, the foam member can also absorb certain impact energy to provide a certain protective effect on the heat exchange member, thereby further reducing the probability of damage to the heat exchange member.

According to an example of the present application, the foam member includes a body and a plurality of ribs, where the plurality of ribs are formed on a surface of the body on a side in a thickness direction, the plurality of ribs and the body cooperatively define an accommodating groove, the heat exchange tube is arranged in the accommodating groove, and a thickness of the heat exchange tube is greater than a depth of the accommodating groove.

In the above embodiment, by providing the plurality of ribs, the movement of the heat exchange tube can be limited, thereby improving the stability of the heat exchange member. Meanwhile, by setting the thickness of the heat exchange tube to be greater than the depth of the accommodating groove, the heat exchange effect of the heat exchange tube can be ensured.

In a third aspect, an embodiment of the present application provides an electric device. The electric device includes the battery according to the second aspect of the present application.

In the electric device according to the present application, by providing the battery according to the second aspect, the overall performance of the electric device is improved.

Additional aspects and advantages of the present application will be partially provided in the following description, will partially become apparent from the following description, or will be learned through the practice of the present application.

### BRIEF DESCRIPTION OF THE DRAWINGS

FIG. 1 is a schematic diagram of a vehicle according to an embodiment of the present application;
FIG. 2 is an exploded view of a battery according to an embodiment of the present application;
FIG. 3 is an exploded view of a battery according to another embodiment of the present application;
FIG. 4 is a schematic diagram of a battery assembly and a heat exchange member according to a first embodiment of the present application;
FIG. 5 is a schematic diagram of a battery assembly and a heat exchange member according to a second embodiment of the present application;
FIG. 6 is a schematic diagram of a battery assembly and a heat exchange member according to a third embodiment of the present application;
FIG. 7 is a schematic diagram of a battery assembly and a heat exchange member according to a fourth embodiment of the present application;
FIG. 8 is a schematic diagram of a battery assembly and a heat exchange member according to a fifth embodiment of the present application;
FIG. 9 is a schematic diagram of a heat exchange member and a case of a battery according to some embodiments of the present application;
FIG. 10 is a schematic diagram of a heat exchange member and a case according to some other embodiments of the present application;
FIG. 11 is a schematic diagram of a heat exchange member from an angle according to an embodiment of the present application;
FIG. 12 is a schematic diagram of a manifold according to an embodiment of the present application;
FIG. 13 is a schematic diagram of a manifold from another angle according to an embodiment of the present application;
FIG. 14 is a schematic diagram of a heat exchange member according to another embodiment of the present application;
FIG. 15 is an enlarged view of the circled portion A in FIG. 14;
FIG. 16 is a schematic diagram of the heat exchange member shown in FIG. 14 from another angle;
FIG. 17 is an enlarged view of the circled portion B in FIG. 16;
FIG. 18 is a schematic diagram of a battery assembly and a heat exchange member according to a sixth embodiment of the present application;
FIG. 19 is a schematic diagram of a battery assembly and a heat exchange member according to a seventh embodiment of the present application;
FIG. 20 is a schematic diagram of a battery assembly and a heat exchange member according to an eighth embodiment of the present application;
FIG. 21 is a schematic diagram of a battery assembly and a heat exchange member according to a ninth embodiment of the present application;
FIG. 22 is a schematic diagram of a battery assembly and a heat exchange member according to a tenth embodiment of the present application;
FIG. 23 is a schematic diagram of a battery assembly and a heat exchange member according to an eleventh embodiment of the present application;
FIG. 24 is an exploded view of a battery according to yet another embodiment of the present application;
FIG. 25 is a partial cross-sectional view of a battery according to still another embodiment of the present application;
FIG. 26 is a partial schematic diagram of a battery according to another embodiment of the present application;
FIG. 27 is a partial schematic diagram of the battery shown in FIG. 24; and
FIG. 28 is an enlarged view of the circled portion C in FIG. 25.

### Reference numerals:

vehicle 1;
battery 1000;
heat exchange member 100;
first heat exchange flow channel 10; first heat exchange section 11; first heat exchange portion 111; first bent portion 112; second heat exchange section 12; U-shaped region 120; second heat exchange portion 121; third heat exchange portion 122; second bent portion 123; third bent portion 124; fourth heat exchange portion 125; sixth bent portion 126; fifth heat exchange portion 127; third heat exchange section 13; fourth bent portion 14; first inlet/outlet section 15; fifth bent portion 16; second inlet/outlet section 17; seventh bent portion 18; mounting member 19;
manifold 20; tube body 21; first space 211; second space 212; first flow channel interface 22; second flow channel interface 23; separation structure 24; first separation plate 241; second separation plate 242;
second heat exchange flow channel 30; fourth heat exchange section 31; third heat exchange flow channel 40;
battery assembly 200; 201, battery unit 201; 2011, battery cell 2011; 202, first group of battery cells 202; second group of battery cells 203; third group of battery cells 204; fourth group of battery cells 205; fifth group of battery cells 206;
case 300; case main body 301; bottom protective plate 302; cover plate 303;
foam member 400; body 401; rib 402;
temperature adjustment member 500; first temperature adjustment member 501; second temperature adjustment member 502; third temperature adjustment member 503;
controller 2000; motor 3000.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to more than two (including two).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "axial", "radial", "circumferential" and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

At present, judging from the trends in the market, the application of power batteries is becoming increasingly widespread. Power batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

It can be understood that the temperature environment in a battery is affected by external weather conditions, and battery cells in the battery need to be in a certain temperature range during operation. When the temperature in the battery exceeds or is lower than the range, the stability of the battery and the battery performance may be greatly affected. For example, in hot weather, the battery needs to cool the battery cells to dissipate heat, such that the temperature in the battery is within the required temperature range. In cold weather, the battery needs to heat the battery cells, such that the temperature in the battery can still be within the required temperature range.

In the related art, the battery is usually provided with a heat exchange structure to dissipate heat from and cool the battery cells, as well as to heat and raise the temperature of the battery cells. However, since the battery cells arranged at the periphery of the battery are closer to the side wall of the case relative to the internal battery cells, the battery cells at the periphery of the battery can more easily dissipate heat outward through structures, such as the side wall or end plates, of the battery and are less affected by heat dissipation of adjacent battery cells. In contrast, the internal battery cells have more difficulty in dissipating heat and are more affected by heat dissipation of adjacent battery cells. As a result, the heat dissipation conditions of battery cells at different positions in the battery vary, leading to an uneven temperature distribution between the peripheral battery cells and the internal battery cells in the battery after the battery operates, which results in poor stability of the battery during operation and a tendency for battery performance to decay.

Based on the above considerations, to mitigate the temperature difference in the battery caused by heat dissipation of the peripheral battery cells in the battery, enabling a more uniform temperature distribution between the peripheral battery cells and the internal battery cells in the battery, the present application provides a heat exchange member. The heat exchange member includes a first heat exchange flow channel. The first heat exchange flow channel includes a first heat exchange section and a second heat exchange section. The second heat exchange section is bent to form a U-shaped region, and the first heat exchange section is arranged in a bent manner within the U-shaped region and is connected to the second heat exchange section in a bent manner. In this way, the second heat exchange section can perform heat exchange with a plurality of battery cells at the periphery of the battery. When the battery needs heating in a low-temperature operating condition, the second heat exchange section may be located upstream of the first heat exchange section in a fluid flow direction, that is, the high-temperature fluid first flows through the second heat exchange section. When the battery needs cooling and heat dissipation, the second heat exchange section may be located downstream of the first heat exchange section in the fluid flow direction, and in this case, the low-temperature fluid first passes through the first heat exchange section and then reaches the second heat exchange section, and the temperature of the heat exchange fluid at the position of the second heat exchange section is higher. As such, the temperature of the heat exchange fluid inside the second heat exchange section can always be higher than that inside the first heat exchange section, such that the temperature difference at the peripheral edge of the battery caused by heat dissipation can be mitigated, improving the temperature uniformity of the battery to a certain extent, thereby improving the service life of the battery to a certain extent.

The heat exchange member disclosed in the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1 as an example of the electric device according to an embodiment of the present application.

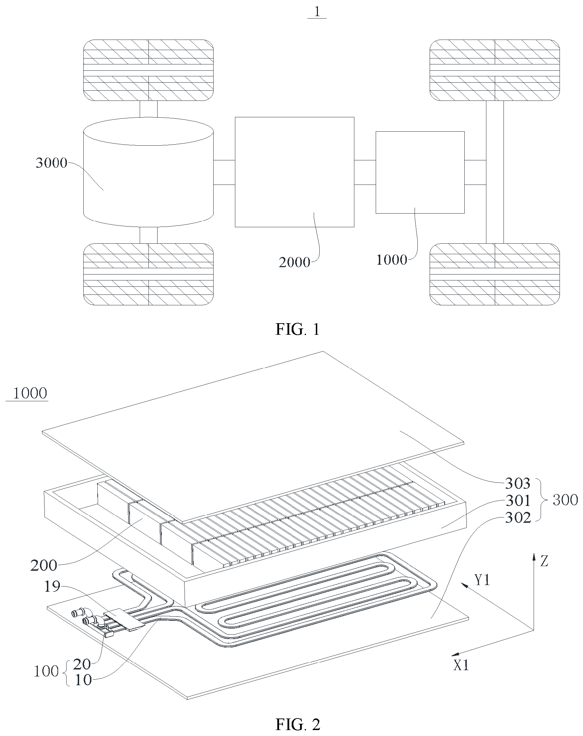

Referring to FIG. 1, FIG. 1 is a schematic diagram of a vehicle 1 according to some embodiments of the present application. The vehicle 1 may be a fuel vehicle, a gas vehicle, or a new energy vehicle. The new energy vehicle may be a pure electric vehicle, a hybrid vehicle, an extended-range vehicle, or the like. A battery 1000 is disposed inside the vehicle 1, and the battery 1000 may be disposed at the bottom, head, or tail of the vehicle 1. The battery 1000 may be configured to power the vehicle 1. For example, the battery 1000 may serve as an operation power source for the vehicle 1. The vehicle 1 may further include a controller 2000 and a motor 3000. The controller 2000 is configured to control the battery 1000 to power the motor 3000, e.g., for the operation power needed by the vehicle 1 for start-up, navigation, and driving.

In some embodiments of the present application, the battery 1000 may not only serve as an operation power source for the vehicle 1, but also as a driving power source for the vehicle 1 to, replacing or partially replacing fuel or natural gas, provide driving power for the vehicle 1.

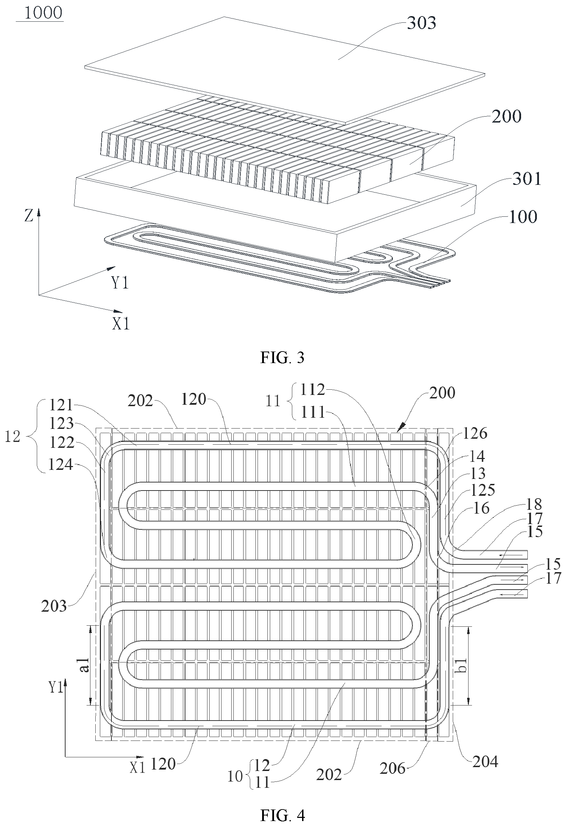

Referring to FIGs. 2 to 3, FIG. 2 is an exploded view of a battery 1000 according to some embodiments of the present application, and FIG. 3 is an exploded view of a battery 1000 according to some other embodiments of the present application. The battery 1000 includes a case 300, battery cells 2011, and a heat exchange member 100. The case 300 is provided with an accommodating cavity, the battery cells 2011 are accommodated in the accommodating cavity of the case 300, and the heat exchange member 100 may be arranged between the battery cells 2011 and the case 300, or between adjacent battery cells 2011.

The case 300 is configured to provide an accommodating space for the battery cells 2011, and the case 300 may be of various structures. In some embodiments, the case 300 may include a first part (e.g., a case main body 301 described below) and a second part (e.g., a cover plate 303 described below). The first part and the second part are lidded with each other, and the first part and the second part jointly define the accommodating space for accommodating the battery cells 2011. The second part may be of a hollow structure with one end open, and the first part may be of a plate-shaped structure. The open side of the second part is lidded with the first part, such that the first part and the second part jointly define the accommodating space. The first part and the second part may also each be of a hollow structure with one side open, and the open side of the second part is lidded with the open side of the first part. Certainly, the case 300 formed by the first part and the second part may be in various shapes, such as a cylindrical shape or a rectangular parallelepiped shape. Optionally, in some embodiments, the case 300 further includes a bottom protective plate 302, and the bottom protective plate 302 is arranged on a lower side of the case body 401 to further enhance the carrying strength and the impact resistance of the bottom of the case body 401. The bottom plate may also be made of various materials, including but not limited to: copper, iron, aluminum, stainless steel, aluminum alloy, and the like.

In the battery 1000, there may be a plurality of battery cells 2011, and the plurality of battery cells 2011 may be connected in series, in parallel, or in series-parallel. The series-parallel connection means that both series connection and parallel connection are present for the connection among the plurality of battery cells 2011. The plurality of battery cells 2011 may be directly connected in series, in parallel, or in series-parallel, and then the whole formed by the plurality of battery cells 2011 is accommodated in the case 300. Certainly, the situation may be that in the battery 1000, the plurality of battery cells 2011 are first connected in series, in parallel, or in series-parallel to form battery modules, and then the plurality of battery modules are connected in series, in parallel, or in series-parallel to form a whole and accommodated in the case 300. The battery 1000 may further include other structures. For example, the battery 1000 may further include a busbar component for achieving electrical connection among the plurality of battery cells 2011.

Each battery cell 2011 may be a secondary battery or a primary battery; it may also be a lithium-sulfur battery, a sodium-ion battery, or a magnesium-ion battery, but is not limited thereto. The battery cell 2011 may be cylindrical, flat, rectangular parallelepiped-shaped, or in other shapes.

In the battery 1000, the heat exchange member 100 may be arranged between the plurality of battery cells 2011 and a top wall of the case 300, or between the plurality of battery cells 2011 and a bottom wall of the case 300, or between the bottom wall of the case 300 and the bottom protective plate 302, or between two adjacent battery cells 2011, to provide a heat exchange effect for the plurality of battery cells 2011. In some embodiments, the heat exchange member 100 may include a heat exchange tube and a manifold 20, and the heat exchange tube is connected to the manifold 20. The heat exchange tube may be a flat tube, a round tube, a harmonica tube, or a pipe of other shapes, and the manifold 20 may be a rectangular tube, a circular tube, or the like.

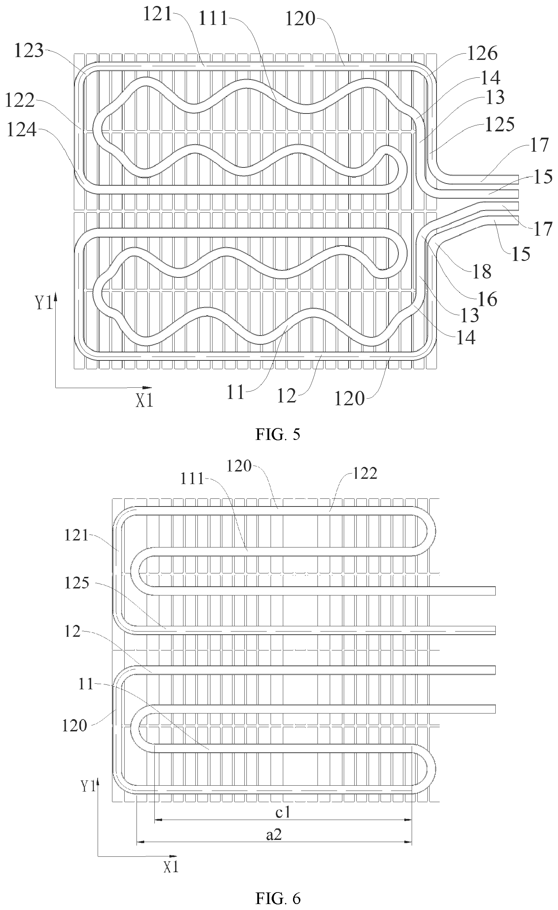

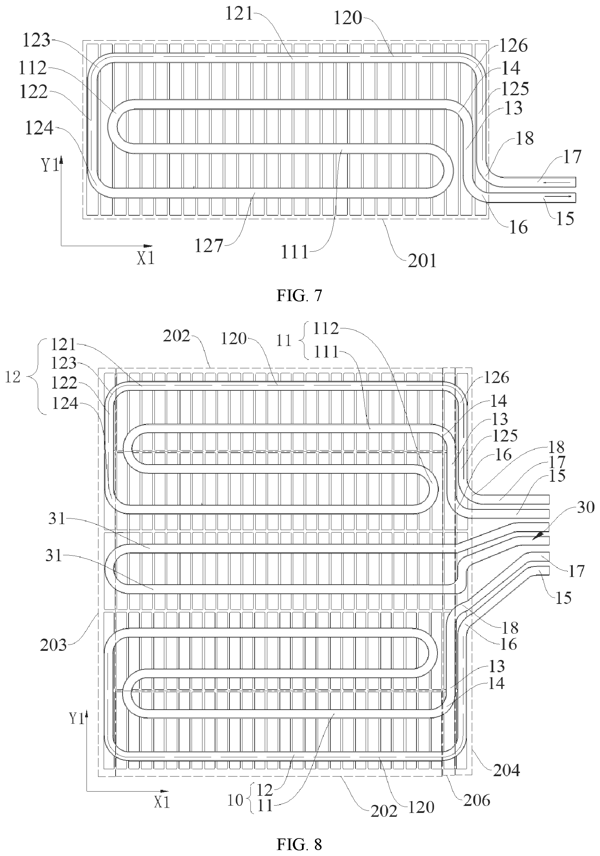

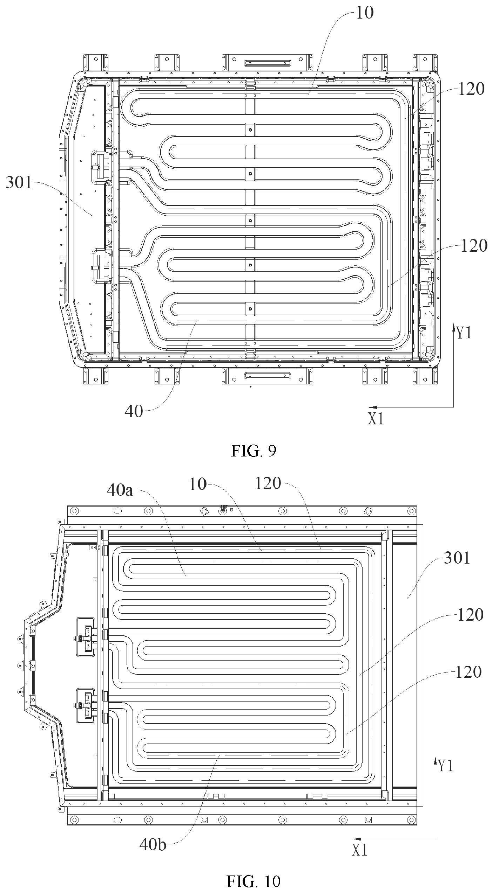

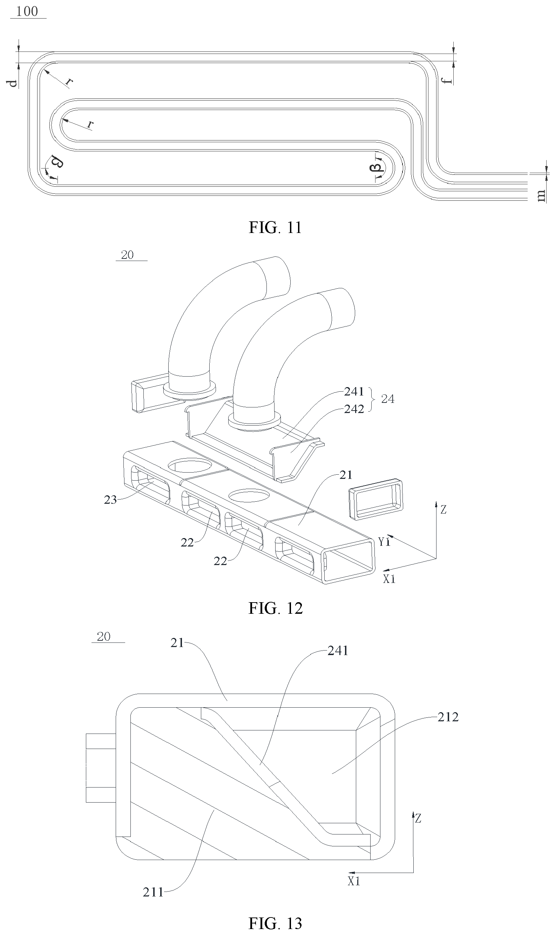

A heat exchange member 100 according to the embodiments of a first aspect of the present application is described below with reference to FIGs. 4 to 17. FIG. 4 is a schematic diagram of a battery assembly 200 and a heat exchange member 100 according to a first embodiment of the present application. FIG. 5 is a schematic diagram of a battery assembly 200 and a heat exchange member 100 according to a second embodiment of the present application. FIG. 6 is a schematic diagram of a battery assembly 200 and a heat exchange member 100 according to a third embodiment of the present application. FIG. 7 is a schematic diagram of a battery assembly 200 and a heat exchange member 100 according to a fourth embodiment of the present application. FIG. 8 is a schematic diagram of a battery assembly 200 and a heat exchange member 100 according to a fifth embodiment of the present application. FIG. 9 is a schematic diagram of a heat exchange member 100 and a case 300 of a battery 1000 according to some embodiments of the present application. FIG. 10 is a schematic diagram of a heat exchange member 100 and a case 300 according to some other embodiments of the present application. FIG. 11 is a schematic diagram of a heat exchange member 100 from an angle according to an embodiment of the present application.

An embodiment of the present application provides a heat exchange member 100. As shown in FIG. 4, the heat exchange member 100 is applicable to a battery 1000. The heat exchange member 100 includes a first heat exchange flow channel 10. The first heat exchange flow channel 10 includes a first heat exchange section 11 and a second heat exchange section 12; the second heat exchange section 12 is bent to form a U-shaped region 120, and the first heat exchange section 11 is arranged in a bent manner within the U-shaped region 120 and is connected to the second heat exchange section 12 in a bent manner.

Specifically, the battery 1000 may include a plurality of battery cells 2011, and the first heat exchange flow channel 10 is configured to perform heat exchange with the plurality of battery cells 2011 of the battery 1000, such that the temperature of the battery 1000 can be limited within a safe operating temperature range, thereby ensuring the operation reliability of the battery 1000.

The above description "the second heat exchange section 12 is bent to form a U-shaped region 120, and the first heat exchange section 11 is arranged in a bent manner within the U-shaped region 120" is intended to illustrate that the second heat exchange section 12 is arranged at a circumferential periphery of the first heat exchange section 11 and may be arranged on three side edges of the first heat exchange section 11 in the circumferential direction, and the second heat exchange section 12 may be arranged closer to a peripheral edge position of the battery 1000 relative to the first heat exchange section 11.

The second heat exchange section 12 is bent to form the U-shaped region 120, that is, in a direction from one end of the second heat exchange section 12 to the other end, the second heat exchange section 12 extends along a U-shaped line to form the U-shaped region 120 in a U-shape.

The first heat exchange section 11 is arranged in a bent manner within the U-shaped region 120, that is, the first heat exchange section 11 is arranged in the space enclosed by the second heat exchange section 12, and the first heat exchange section 11 extends non-linearly on an inner side of the second heat exchange section 12 and has at least one bent position.

It should be noted that in this embodiment, it is only defined that the first heat exchange section 11 is arranged in a bent manner within the U-shaped region 120, but the bending form of the first heat exchange section 11 is not limited, that is, the specific bending form of the first heat exchange section 11 may be designed according to the heat exchange requirements of the battery 1000. For example, the first heat exchange section 11 may extend in a length direction of the battery cells 2011 (i.e., the Y1 direction in FIG. 4), extend for a certain length and then bend towards a width direction of the battery cells 2011 (i.e., the X1 direction in FIG. 4), and then continue to extend in the length direction of the battery cells 2011 and bend in the width direction. Alternatively, the first heat exchange section 11 may extend in the width direction of the battery cells 2011, extend for a certain length and then bend towards the length direction of the battery cells 2011, and then continue to extend in the width direction of the battery cells 2011 and bend in the length direction.

The first heat exchange section 11 and the second heat exchange section 12 are connected in a bent manner, that is, one end of the first heat exchange section 11 is connected to one end of the second heat exchange section 12, and a connection position between the first heat exchange section 11 and the second heat exchange section 12 is of a non-linear bent structure. For example, the connection position between the first heat exchange section 11 and the second heat exchange section 12 may be bent into an arc segment.

The first heat exchange section 11 is connected to the second heat exchange section 12, such that one of an end of the first heat exchange section 11 distal to the second heat exchange section 12 and an end of the second heat exchange section 12 distal to the first heat exchange section 11 can be used as a liquid inlet end and the other can be used as a liquid outlet end. Therefore, when the first heat exchange flow channel 10 performs heat exchange, the heat exchange medium may flow from the first heat exchange section 11 to the second heat exchange section 12, or may flow from the second heat exchange section 12 to the first heat exchange section 11.

It can be understood that during the flow of the heat exchange fluid in the first heat exchange flow channel 10, the temperature of the heat exchange fluid gradually changes, resulting in a gradual decrease in the heat exchange effect. For example, when the heat exchange member 100 cools and dissipates heat from the battery assembly 200, the heat of the battery cells 2011 is gradually transferred to the heat exchange fluid, such that the temperature of the heat exchange fluid gradually rises in the process of flowing along the first heat exchange flow channel 10, the temperature difference between the heat exchange fluid and the battery cells 2011 gradually decreases, and the heat exchange efficiency gradually decreases. When the heat exchange member 100 heats and raises the temperature of the battery assembly 200, the heat in the heat exchange fluid is gradually transferred to the battery cells 2011, such that the temperature of the heat exchange fluid gradually decreases in the process of flowing along the first heat exchange flow channel 10, the temperature difference between the heat exchange fluid and the battery cells 2011 gradually decreases, and the heat exchange efficiency gradually decreases.

In this embodiment, when the heat exchange member 100 dissipates heat from and cools the battery assembly 200, the heat exchange fluid may flow from the first heat exchange section 11 to the second heat exchange section 12, and the heat exchange fluid may also flow from the second heat exchange section 12 to the first heat exchange section 11. When the heat exchange fluid flows from the first heat exchange section 11 to the second heat exchange section 12, the battery cells 2011 at a central position of the battery 1000 (i.e., the internal battery cells 2011 on an inner side of the periphery) can be cooled first, and then the battery cells 2011 at the peripheral edge position of the battery 1000 can be cooled. Since the heat dissipation condition of the battery cells 2011 at the peripheral edge position of the battery 1000 is better than that of the internal battery cells 2011, the heat exchange fluid at a lower temperature in the first heat exchange section 11 can better meet the heat dissipation requirements of the battery cells 2011 at the central position of the battery 1000. Meanwhile, since the battery cells 2011 at the peripheral edge position can directly dissipate heat naturally to the external environment, the heat exchange fluid at a slightly higher temperature in the second heat exchange section 12 can still meet the heat dissipation requirements of the peripheral battery cells 2011. In this way, the cooling effect obtained by the battery cells 2011 at the peripheral edge position of the battery 1000 is generally consistent with that obtained by the battery cells 2011 at the central position of the battery 1000, and then the temperature of the battery cells 2011 at the peripheral edge position of the battery 1000 can be consistent with that of the battery cells 2011 at the central position of the battery 1000 after cooling and heat dissipation, such that the temperature distribution in the battery 1000 is more uniform.

When the heat exchange member 100 heats and raises the temperature of the battery assembly 200, the heat exchange fluid may flow from the first heat exchange section 11 to the second heat exchange section 12, and the heat exchange fluid may also flow from the second heat exchange section 12 to the first heat exchange section 11. Illustratively, when the heat exchange fluid flows from the second heat exchange section 12 to the first heat exchange section 11, the battery cells 2011 at the periphery of the battery assembly 200 can be heated first, and then the heat exchange fluid cools the battery cells 2011 at the central position of the battery assembly 200. Since the battery cells 2011 at the periphery of the battery 1000 dissipate more heat to the external environment, the temperature of the battery cells 2011 at the periphery of the battery 1000 is more likely to decrease. The heat exchange fluid heats the battery cells 2011 at the periphery of the battery 1000 first, such that the heat exchange fluid at a high temperature can increase the temperature of the battery cells 2011 at the periphery while compensating for the heat lost by the battery cells 2011 due to heat dissipation to the external environment to meet the heating requirements. The battery cells 2011 at the central position of the battery assembly 200 have less contact area with the external environment and thus have less heat loss. The heat exchange fluid at a lower temperature flowing in the first heat exchange section 11 can cooperate with the heat generated by the battery cells 2011 to well meet their heating requirements. In this way, the heating effect obtained by the battery cells 2011 at the periphery of the battery 1000 is substantially consistent with that obtained by the battery cells 2011 at the central position of the battery assembly 200, and then the temperature of the battery cells 2011 at the periphery of the battery 1000 can be consistent with that of the battery cells 2011 at the central position of the battery assembly 200 after heating and temperature raising, such that the temperature distribution in the battery 1000 is more uniform.

In the above embodiment, by bending the second heat exchange section 12 to form the U-shaped region 120, and arranging the first heat exchange section 11 in a bent manner within the U-shaped region 120, when the heat exchange member 100 performs heat exchange with the battery assembly 200, the U-shaped region 120 formed by the peripheral second heat exchange section 12 may be aligned with the peripheral battery cells of the battery, and the first heat exchange section 11 within the U-shaped region 120 may be aligned with the internal battery cells. This allows the heat exchange member 100 to compensate for the internal and external temperature difference caused by heat exchange between the peripheral battery cells 2011 and the environment, such that the heat exchange effects of the battery cells 2011 at the periphery of the battery assembly 200 and the battery cells 2011 inside the battery assembly 200 tend to be consistent, improving the temperature uniformity of the battery 1000, thereby improving the service life of the battery 1000 to a certain extent.

According to an example of the present application, as shown in FIG. 4, the second heat exchange section 12 may be located at an outermost circumference of the first heat exchange flow channel 10.

That is, the second heat exchange section 12 is formed as the flow channel at the outermost periphery of the first heat exchange flow channel 10. In this way, the second heat exchange section 12 can be configured to perform heat exchange with the battery cells 2011 at the peripheral edge of the battery 1000, thereby improving the temperature uniformity of the battery cells 2011 at the circumferential periphery of the battery 1000.

In the above embodiment, by configuring the second heat exchange section 12 to be located at the outermost circumference of the first heat exchange flow channel 10, the second heat exchange section 12 can perform heat exchange with the battery cells 2011 at the outer circumference of the battery assembly 200, which facilitates mitigating the internal and external temperature difference of the battery assembly 200 caused by heat exchange with the environment, thereby improving the service life of the battery assembly 200 to a certain extent.

According to an example of the present application, the first heat exchange section 11 and the second heat exchange section 12 may be bent in the same plane.

In the above embodiment, by configuring the first heat exchange section 11 and the second heat exchange section 12 to be bent in the same plane, the first heat exchange flow channel 10 can perform heat exchange with the battery 1000 in the same plane, simplifying the structure of the first heat exchange flow channel 10, thereby reducing the production difficulty of the first heat exchange flow channel 10. Meanwhile, the occupied space of the first heat exchange flow channel 10 can be reduced, thereby improving the volumetric energy density of the battery 1000.

According to an example of the present application, as shown in FIGs. 4 and 5, the first heat exchange section 11 may include a plurality of first heat exchange portions 111, and the plurality of first heat exchange portions 111 are spaced apart and are sequentially connected in a bent manner.

That is, the plurality of first heat exchange portions 111 are sequentially connected, and a connection position between two connected first heat exchange portions 111 is bent. For example, the two connected first heat exchange portions 111 may be bent along a broken line or along an arc. Two, three, four, five, or more first heat exchange portions 111 may be provided.

It should be noted that the shape of the first heat exchange portion 111 may be varied. For example, the first heat exchange portion 111 may be linear or arc-shaped. An extension direction of the first heat exchange portion 111 may also be varied. For example, the first heat exchange portion may extend in a length direction or a thickness direction of the battery cells 2011. In this way, by configuring the plurality of first heat exchange portions 111 to be sequentially connected in a bent manner, the first heat exchange section 11 can form the heat exchange flow channel in shapes such as an S-shape, an Ω-shape (resembling the Chinese character 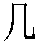 ), or a V-shape.

In the above embodiment, in one aspect, by providing the plurality of first heat exchange portions 111, the heat exchange area of the first heat exchange section 11 can be increased, thereby increasing the heat exchange area of the first heat exchange flow channel 10, and improving the heat exchange effect of the first heat exchange flow channel 10; in another aspect, since the internal battery cells are wrapped by the external battery cells, the temperature difference between the internal battery cells is not large, and therefore, by providing the plurality of first heat exchange portions 111, the overall heat exchange effect can be ensured while ensuring a small temperature difference between the internal and external battery cells.

According to an example of the present application, as shown in FIG. 4, the plurality of first heat exchange portions 111 are spaced apart in a first direction (i.e., the Y1 direction shown in FIG. 4), each first heat exchange portion 111 extends linearly in a second direction (i.e., the X1 direction shown in FIG. 4), and the first direction and the second direction are arranged at an included angle.

The description "the first direction and the second direction are arranged at an included angle" is intended to illustrate that the first direction and the second direction may be arranged perpendicularly, or may only intersect non-perpendicularly. For example, the first direction and the second direction may be arranged at an angle of 30°, 60°, 80°, 120°, 150°, or 170°. For example, as shown in FIG. 4, the first direction is the length direction of the battery cells 2011, the second direction is the thickness direction of the battery cells 2011, and the first heat exchange portions 111 extend in the length direction of the battery cells 2011 and are spaced apart in the thickness direction of the battery cells 2011. In this way, the plurality of first heat exchange portions 111 connected in a bent manner can form an S-shaped heat exchange flow channel, thereby achieving heat exchange with the plurality of battery cells 2011.

In the above embodiment, by configuring the first heat exchange portion 111 to extend linearly in the second direction, the production difficulty of the first heat exchange portion 111 can be reduced, thereby reducing the production complexity of the first heat exchange flow channel 10. Meanwhile, the straight pipe can also increase the flow speed of the heat exchange fluid, thereby improving the heat exchange effect of the first heat exchange flow channel 10.

According to an example of the present application, as shown in FIG. 4, the first heat exchange section 11 may further include a first bent portion 112. The first bent portion 112 is arc-shaped and is connected between two adjacent first heat exchange portions 111 in a bent manner.

The first bent portion 112 is arc-shaped, that is, the first bent portion 112 extends along an arc. There is a certain included angle between fluid flow directions at two ends of the first bent portion 112. In this way, the first bent portion 112 can change the flow direction of the fluid, enabling two connected first heat exchange portions 111 to extend and be arranged within a preset region, thereby increasing the heat exchange area of the first heat exchange section 11, and improving the heat exchange efficiency of the first heat exchange section 11. Meanwhile, the first bent portion 112 is arc-shaped. The arc shape can reduce the flow resistance of the fluid and reduce the pressure drop, thereby increasing the flow rate of the fluid and further enhancing the heat exchange efficiency of the first heat exchange section 11.

Furthermore, one, two, three, or more first bent portions 112 may be provided. The first bent portion 112 allows the first heat exchange section 11 to be arranged in a circuitous manner, thereby increasing the heat exchange area of the first heat exchange flow channel 10 and improving the heat exchange efficiency of the first heat exchange flow channel 10.

In the above embodiment, by providing the first bent portion 112, the fluid flow direction inside the first heat exchange section 11 can be changed, achieving a smooth transition and connection between two first heat exchange portions 111, and achieving circuitous extension of the first heat exchange flow channel 10, thereby increasing the contact area between a single battery cell and the first heat exchange flow channel 10, and increasing the heat exchange area and improving the heat exchange efficiency of the first heat exchange flow channel 10. Meanwhile, the arc-shaped first bent portion 112 can also reduce the flow resistance of the fluid and reduce the pressure drop, thereby increasing the flow rate of the fluid and further enhancing the heat exchange efficiency of the first heat exchange section 11. In addition, by providing the first bent portion 112, the structure of the first heat exchange section 11 becomes more compact, and the overall occupied space is smaller, which facilitates achieving a miniaturization design of the battery 1000, and ensuring the volumetric energy density of the battery 1000.

According to an example of the present application, as shown in FIG. 4, the first bent portion 112 may be in a semi-circular arc shape.

That is, the first bent portion 112 may extend along a semi-circular arc. Specifically, the first bent portion 112 may extend along a semi-circular arc protruding in a direction facing away from the two first heat exchange portions 111 connected by the first bent portion 112. An included angle between an inlet and an outlet of the first bent portion 112 is 180°, and flow directions at outlet and inlet positions of the first bent portion 112 are opposite. In this way, two adjacent first heat exchange portions 111 are closer to each other, such that the structure of the entire first heat exchange section 11 is more compact and reliable. The first bent portion 112 is configured to connect two first heat exchange portions 111 that are arranged parallel to and spaced apart from each other. In other embodiments, the bending degree of the first bent portion 112 may also be adjusted based on the requirements. For example, the bending degree may be 150°, 135°, or the like, which is not limited in the embodiments of the present application.

The two first heat exchange portions 111 connected by the first bent portion 112 may form a "U"-shaped heat exchange channel. The first heat exchange section 11 may include one or a plurality of "U"-shaped heat exchange channels. The plurality of "U"-shaped heat exchange channels are sequentially connected, and the connected "U"-shaped heat exchange channels are connected by the first bent portion 112.

In the above embodiment, by configuring the first bent portion 112 to be in the semi-circular arc shape, the design diversity of the heat exchange flow channel can be increased, thereby improving the adaptability of the heat exchange member 100 to the battery 1000. Meanwhile, the semi-circular arc structure is relatively simple, thereby reducing the production difficulty of the heat exchange member 100, and improving the production speed of the heat exchange member 100.

According to an example of the present application, as shown in FIG. 4, the second heat exchange section 12 may include: a second heat exchange portion 121, a third heat exchange portion 122, and a fourth heat exchange portion 125. The second heat exchange portion 121 extends along a first-side peripheral edge of the first heat exchange section 11, the third heat exchange portion 122 is connected between the second heat exchange portion 121 and the first heat exchange section 11 and extends along a second-side peripheral edge of the first heat exchange section 11, a first end of the third heat exchange portion 122 is connected to the second heat exchange portion 121 at an included angle, and a second end of the third heat exchange portion 122 is connected to the first heat exchange section 11 at an included angle. The fourth heat exchange portion 125 is in communication with the second heat exchange portion 121, is connected to the second heat exchange portion 121 at an included angle, and extends along a third-side peripheral edge of the first heat exchange section 11.

It can be understood that the fourth heat exchange portion 125 is connected to an end of the second heat exchange portion 121 distal to the third heat exchange portion 122, the fourth heat exchange portion 125, the second heat exchange portion 121, and the third heat exchange portion 122 are sequentially connected to form the U-shaped region 120, and the first heat exchange section 11 is arranged within the U-shaped region 120 and connected to an end of the third heat exchange portion 122 distal to the second heat exchange portion 121.

The first end of the third heat exchange portion 122 is connected to the second heat exchange portion 121 at an included angle, that is, the third heat exchange portion 122 is connected to the second heat exchange portion 121, and the third heat exchange portion 122 and the second heat exchange portion 121 are not collinear or parallel, but arranged at an angle greater than 0° and less than 180°. For example, the third heat exchange portion 122 is connected to the second heat exchange portion 121 at an included angle of 30°, 45°, 60°, 90°, 120°, 135°, 150°, or the like.

The second end of the third heat exchange portion 122 is connected to the first heat exchange section 11 at an included angle, that is, the second end of the third heat exchange portion 122 is connected to the second heat exchange portion 121, and the second end of the third heat exchange portion 122 and the first heat exchange section 11 are arranged at an angle greater than 0° and less than 180°. For example, the second end of the third heat exchange portion 122 is connected to the first heat exchange section 11 at an included angle of 30°, 45°, 60°, 90°, 120°, 135°, 150°, or the like.

The fourth heat exchange portion 125 is in communication with the second heat exchange portion 121 and is connected to the second heat exchange portion 121 at an included angle, that is, the fourth heat exchange portion 125 is connected to the second heat exchange portion 121 at an angle of greater than 0° and less than 180°. For example, the fourth heat exchange portion 125 is connected to the second heat exchange portion 121 at an included angle of 30°, 45°, 60°, 90°, 120°, 135°, 150°, or the like.

It should be noted that this embodiment defines that the second heat exchange section 12 is arranged on three sides of the first heat exchange section 11 in the circumferential direction but does not define specific positions of the second heat exchange portion 121, the third heat exchange portion 122, and the fourth heat exchange portion 125, relative to the first heat exchange section 11. Therefore, the specific positions of the second heat exchange portion 121, the third heat exchange portion 122, and the fourth heat exchange portion 125 may be designed according to actual situations. For example, in the case that the second heat exchange portion 121 can be arranged on a side of the first heat exchange section 11 in the first direction, the third heat exchange portion 122 and the fourth heat exchange portion 125 can be separately arranged on two sides of the first heat exchange section 11 in the second direction. In the case that the second heat exchange portion 121 is arranged on a side of the first heat exchange section 11 in the second direction, the third heat exchange portion 122 and the fourth heat exchange portion 125 are separately arranged on two sides of the first heat exchange section 11 in the first direction.

In the above embodiment, by arranging the second heat exchange portion 121, the third heat exchange portion 122, and the fourth heat exchange portion 125 on three sides of the first heat exchange section 11, respectively, the second heat exchange section 12 can surround the first heat exchange section 11, thereby increasing the compactness of the arrangement of the first heat exchange flow channel 10, and achieving structural miniaturization of the first heat exchange flow channel 10, which facilitates improving the volumetric energy density of the battery 1000. Meanwhile, the structure of the first heat exchange flow channel 10 can also be simplified to facilitate the processing and production of the heat exchange member 100.

According to an example of the present application, as shown in FIG. 4, the first heat exchange section 11 may include a plurality of first heat exchange portions 111, and the plurality of first heat exchange portions 111 are sequentially connected in a bent manner in the first direction. The second heat exchange portion 121 is located on a side of the plurality of first heat exchange portions 111 in the first direction, the third heat exchange portion 122 is located on one side of the plurality of first heat exchange portions 111 in the second direction, and the first direction and the second direction are arranged at an included angle. The first end of the third heat exchange portion 122 is connected to an end of the second heat exchange portion 121 in the second direction, and the second end of the third heat exchange portion 122 is connected to one of the plurality of first heat exchange portions 111 that is farthest from the second heat exchange portion 121 in the first direction. The fourth heat exchange portion 125 is located on the other side of the plurality of first heat exchange portions 111 in the second direction, one end of the fourth heat exchange portion 125 is connected to an end of the second heat exchange portion 121 distal to the third heat exchange portion 122, and the other end of the fourth heat exchange portion 125 extends in the first direction toward a direction away from the second heat exchange portion 121.

The plurality of first heat exchange portions 111 are sequentially connected in a bent manner in the first direction, that is, the plurality of first heat exchange portions 111 are sequentially arranged in the first direction, and two adjacent and connected first heat exchange portions 111 are connected in a bent manner in the first direction. The first heat exchange portion 111 may extend along a straight line parallel to the second direction, or the first heat exchange portion 111 may extend along a straight line arranged at an angle to the second direction, or the first heat exchange portion 111 may extend along a curve and/or a broken line in the second direction.

It can be understood that the fourth heat exchange portion 125, the second heat exchange portion 121, the third heat exchange portion 122, and the first heat exchange portion 111 that is farthest from the second heat exchange portion 121 are sequentially connected, and the plurality of first heat exchange portions 111 are spaced apart and sequentially connected in the first direction. In this way, the heat exchange fluid can sequentially flow through the fourth heat exchange portion 125, the second heat exchange portion 121, and the third heat exchange portion 122, and then enter the first heat exchange section 11. In the first heat exchange section 11, the fluid first passes through the first heat exchange portion 111 that is farthest from the second heat exchange portion 121, and finally flows to the first heat exchange portion 111 that is closest to the second heat exchange portion 121. Alternatively, the heat exchange fluid may first flow into the first heat exchange section 11. In the first heat exchange section 11, the fluid first flows through the first heat exchange portion 111 that is closest to the second heat exchange portion 121, flows out of the first heat exchange portion 111 that is farthest from the second heat exchange portion 121, then flows to the third heat exchange portion 122, and then sequentially flows through the second heat exchange portion 121 and the fourth heat exchange portion 125 after flowing through the third heat exchange portion 122.

In addition, the description "the first direction and the second direction are arranged at an included angle" is intended to illustrate that the first direction and the second direction may be arranged perpendicularly, or may only intersect non-perpendicularly. For example, the first direction and the second direction may be arranged at an angle of 30°, 60°, 80°, 120°, 150°, or 170°.

For example, as shown in FIG. 4, the first direction may be the length direction of the battery cells 2011, i.e., the Y1 direction shown in FIG. 4, and the second direction may be the thickness direction of the battery cells 2011, i.e., the X1 direction shown in FIG. 4. Taking the first heat exchange flow channel 10 arranged distal to the coordinate origin in the Y1 direction in the figure as an example, the first heat exchange portion 111 extends linearly in the X1 direction. The plurality of first heat exchange portions 111 are spaced apart in the Y1 direction. The second heat exchange portion 121 is arranged on a side of the plurality of first heat exchange portions 111 distal to the coordinate origin in the Y1 direction and extends linearly in the X1 direction, and is configured to perform heat exchange with an edge on a side of the battery assembly 200 distal to the coordinate origin in the Y1 direction. The third heat exchange portion 122 is arranged on a side of the plurality of first heat exchange portions 111 proximal to the coordinate origin in the X1 direction and extends linearly in the Y1 direction. The third heat exchange portion 122 is configured to perform heat exchange with an edge on a side of the battery assembly 200 proximal to the coordinate origin in the X1 direction. The fourth heat exchange portion 125 is arranged on a side of the plurality of first heat exchange portions 111 distal to the coordinate origin in the X1 direction and extends linearly in the Y1 direction. The fourth heat exchange portion 125 is configured to perform heat exchange with an edge on a side of the battery assembly 200 distal to the coordinate origin in the X1 direction.

In the above embodiment, by configuring the plurality of first heat exchange portions 111 to be sequentially connected in a bent manner in the first direction, the second heat exchange portion 121 to be located on the side of the plurality of first heat exchange portions 111 in the first direction, the third heat exchange portion 122 to be located on one side of the plurality of first heat exchange portions 111 in the second direction, and the fourth heat exchange portion 125 to be located on the other side of the plurality of first heat exchange portions 111 in the second direction, a positional relationship among the second heat exchange portion 121, the third heat exchange portion 122, the fourth heat exchange portion 125, and the first heat exchange portions 111 is defined, and a layout of the first heat exchange flow channel 10 is further defined, simplifying the structure of the first heat exchange flow channel 10, and facilitating the processing and manufacturing.

According to some specific embodiments of the present application, as shown in FIG. 4, the third heat exchange portion 122 and the fourth heat exchange portion 125 extend in the first direction (e.g., the Y1 direction shown in FIG. 4), and the first heat exchange portion 111 and the second heat exchange portion 121 both extend in the second direction.

Furthermore, the third heat exchange portion 122 and the fourth heat exchange portion 125 may both extend linearly in the first direction, and the first heat exchange portion 111 and the second heat exchange portion 121 may both extend linearly in the second direction. The linear structure is simple, allowing easy production and easy arrangement, thereby further reducing the production complexity and production cost of the first heat exchange flow channel 10.

In the above embodiment, by configuring the third heat exchange portion 122 and the fourth heat exchange portion 125 to extend in the first direction, and the first heat exchange portion 111 and the second heat exchange portion 121 both to extend in the second direction, the circuitous arrangement of the first heat exchange flow channel 10 can be facilitated, thereby reducing the production difficulty of the first heat exchange flow channel 10 and reducing the production cost of the heat exchange member 100.

According to some examples of the present application, as shown in FIG. 4, the third heat exchange portion 122 and the fourth heat exchange portion 125 both extend in the first direction. A length b1 of the fourth heat exchange portion 125 is less than or equal to a length a1 of the third heat exchange portion 122 in the first direction.

When the length b1 of the fourth heat exchange portion 125 is equal to the length a1 of the third heat exchange portion 122, the fourth heat exchange portion 125, the second heat exchange portion 121, and the third heat exchange portion 122 are sequentially connected to form a standard U-shaped flow channel. When the length b1 of the fourth heat exchange portion 125 is less than the length a1 of the third heat exchange portion 122, clearance can be provided for other flow channel sections (such as for a first inlet/outlet section 15 shown in FIG. 4) of the first heat exchange flow channel 10, other heat exchange flow channels, or other components, which facilitates the layout and the compact structure of the first heat exchange flow channel 10.

In the above embodiment, by setting the length of the fourth heat exchange portion 125 to be equal to the length of the third heat exchange portion 122, dimensions of two ends of the U-shaped region 120 can be similar, which facilitates controlling the temperature difference between the battery cells 2011 at two ends of the battery assembly 200 in the second direction and improving the temperature uniformity of the battery assembly 200. By setting the length of the fourth heat exchange portion 125 to be less than the length of the third heat exchange portion 122 in the first direction, the fourth heat exchange portion 125 can be easily connected to a manifold, and clearance can be provided between the fourth heat exchange portion 125 and other flow channel sections of the first heat exchange flow channel 10, other flow channel structures, or other components.

According to some specific embodiments of the present application, as shown in FIG. 4, the fourth heat exchange portion 125 extends in the first direction and extends to a position proximal to one of the plurality of first heat exchange portions 111 that is farthest from the second heat exchange portion 121.

Specifically, the fourth heat exchange portion 125 extends in the first direction. One end of the fourth heat exchange portion 125 is connected to the second heat exchange portion 121, and the other end of the fourth heat exchange portion 125 extends to the position proximal to the one of the plurality of first heat exchange portions 111 that is farthest from the second heat exchange portion 121, that is, the other end of the fourth heat exchange portion 125 extends to be flush with the first heat exchange portion 111 that is farthest from the second heat exchange portion 121, or the other end of the fourth heat exchange portion 125 extends to be proximal to the first heat exchange portion 111 that is farthest from the second heat exchange portion 121, or the other end of the fourth heat exchange portion 125 extends beyond the first heat exchange portion 111 that is farthest from the second heat exchange portion 121.

In this way, the length of the fourth heat exchange portion 125 can be increased, and the heat exchange area between the fourth heat exchange portion 125 and the battery assembly 200 can be increased, thereby further improving the heat exchange effect of the heat exchange member 100, and facilitating the layout of the first heat exchange flow channel 10.

In the above embodiment, by configuring the fourth heat exchange portion 125 to extend in the first direction and to extend to the position proximal to the one of the plurality of first heat exchange portions 111 that is farthest from the second heat exchange portion 121, the heat exchange area of the fourth heat exchange portion 125 can be increased, such that the first heat exchange flow channel 10 can perform heat exchange with a plurality of battery cells 2011 arranged corresponding to the first heat exchange flow channel 10 as much as possible, thereby improving the heat exchange comprehensiveness of the first heat exchange flow channel 10, and further improving the heat exchange effect of the battery 1000.

According to an example of the present application, as shown in FIG. 6, the first heat exchange section 11 may include a plurality of first heat exchange portions 111, and the plurality of first heat exchange portions 111 are sequentially connected in a bent manner in the first direction. The second heat exchange portion 121 is located on one side of the plurality of first heat exchange portions 111 in the second direction, the third heat exchange portion 122 is located on one side of the plurality of first heat exchange portions 111 in the first direction, and the first direction and the second direction are arranged at an included angle. The first end of the third heat exchange portion 122 is connected to an end of the second heat exchange portion 121 in the first direction, and the second end of the third heat exchange portion 122 is connected to one of the plurality of first heat exchange portions 111 that is closest to the third heat exchange portion 122 in the first direction. The fourth heat exchange portion 125 is located on the other side of the plurality of first heat exchange portions 111 in the first direction, one end of the fourth heat exchange portion 125 is connected to an end of the second heat exchange portion 121 distal to the third heat exchange portion 122, and the other end of the fourth heat exchange portion 125 extends in the second direction toward a direction away from the second heat exchange portion 121.

The plurality of first heat exchange portions 111 are sequentially connected in a bent manner in the first direction, that is, the plurality of first heat exchange portions 111 are sequentially arranged in the first direction, and two adjacent and connected first heat exchange portions 111 are connected in a bent manner in the first direction. The first heat exchange portion 111 may extend along a straight line parallel to the second direction, or the first heat exchange portion 111 may extend along a straight line arranged at an angle to the second direction, or the first heat exchange portion 111 may extend along a curve and/or a broken line in the second direction.

It can be understood that the fourth heat exchange portion 125, the second heat exchange portion 121, the third heat exchange portion 122, and the first heat exchange portion 111 that is closest to the third heat exchange portion 122 are sequentially connected, and the plurality of first heat exchange portions 111 are spaced apart and sequentially connected in the first direction. In this way, the heat exchange fluid can sequentially flow through the fourth heat exchange portion 125, the second heat exchange portion 121, and the third heat exchange portion 122, and then enter the first heat exchange section 11. In the first heat exchange section 11, the fluid first passes through the first heat exchange portion 111 that is closest to the third heat exchange portion 122, and finally flows to the first heat exchange portion 111 that is farthest from the third heat exchange portion 122. Alternatively, the heat exchange fluid may first flow into the first heat exchange section 11. In the first heat exchange section 11, the fluid first flows through the first heat exchange portion 111 that is farthest from the third heat exchange portion 122, flows out of the first heat exchange portion 111 that is closest to the third heat exchange portion 122, then flows to the third heat exchange portion 122, and then sequentially flows through the second heat exchange portion 121 and the fourth heat exchange portion 125 after flowing through the third heat exchange portion 122.

In addition, the description "the first direction and the second direction are arranged at an included angle" is intended to illustrate that the first direction and the second direction may be arranged perpendicularly, or may only intersect non-perpendicularly. For example, the first direction and the second direction may be arranged at an angle of 30°, 60°, 80°, 120°, 150°, or 170°.

For example, as shown in FIG. 6, the first direction may be the length direction of the battery cells 2011, i.e., the Y1 direction shown in FIG. 6, and the second direction may be the thickness direction of the battery cells 2011, i.e., the X1 direction shown in FIG. 6. Taking the first heat exchange flow channel 10 arranged distal to the coordinate origin in the Y1 direction in the figure as an example, the first heat exchange portion 111 extends linearly in the X1 direction. The plurality of first heat exchange portions 111 are spaced apart in the Y1 direction. The second heat exchange portion 121 is arranged on a side of the plurality of first heat exchange portions 111 proximal to the coordinate origin in the X1 direction and extends linearly in the Y1 direction, and is configured to perform heat exchange with an edge on a side of the battery assembly 200 proximal to the coordinate origin in the X1 direction. The third heat exchange portion 122 is arranged on a side of the plurality of first heat exchange portions 111 distal to the coordinate origin in the Y1 direction and extends linearly in the X1 direction. The third heat exchange portion 122 is configured to perform heat exchange with an edge on a side of the battery assembly 200 distal to the coordinate origin in the Y1 direction. The fourth heat exchange portion 125 is arranged on a side of the plurality of first heat exchange portions 111 proximal to the coordinate origin in the Y1 direction and extends linearly in the X1 direction, and is configured to perform heat exchange with an edge on a side of the battery assembly 200 proximal to the coordinate origin in the Y1 direction.

In the above embodiment, by configuring the second heat exchange portion 121 to be located on one side of the plurality of first heat exchange portions 111 in the second direction, the third heat exchange portion 122 to be located on one side of the plurality of first heat exchange portions 111 in the first direction, and the fourth heat exchange portion 125 to be located on the other side of the plurality of first heat exchange portions 111 in the first direction, another layout of the first heat exchange flow channel 10 is defined. Therefore, the diversity of the first heat exchange flow channel 10 can be increased, such that the first heat exchange flow channel can meet the heat exchange requirements of different batteries 1000, simplifying the structure of the first heat exchange flow channel 10, and facilitating the processing and manufacturing.

According to some specific embodiments of the present application, as shown in FIG. 6, the first heat exchange portion 111, the third heat exchange portion 122, and the fourth heat exchange portion 125 extend in the second direction (e.g., the X1 direction shown in FIG. 6), and the second heat exchange portion 121 extends in the first direction (e.g., the Y1 direction shown in FIG. 6).

Furthermore, the first heat exchange portion 111, the third heat exchange portion 122, and the fourth heat exchange portion 125 extend linearly in the second direction, and the second heat exchange portion 121 extends linearly in the first direction. The linear structure is simple, allowing easy production and easy arrangement, thereby further reducing the production complexity and production cost of the first heat exchange flow channel 10.

In the above embodiment, by configuring the first heat exchange portion 111, the third heat exchange portion 122, and the fourth heat exchange portion 125 to extend in the second direction, and the second heat exchange portion 121 to extend in the first direction, the circuitous arrangement of the first heat exchange flow channel 10 can be facilitated, thereby reducing the production difficulty of the first heat exchange flow channel 10 and reducing the production cost of the heat exchange member 100. Meanwhile, such an arrangement further enables the structure of the first heat exchange flow channel 10 to be more compact and reliable.

According to some examples of the present application, as shown in FIG. 6, the first heat exchange portion 111 and the third heat exchange portion 122 extend in the second direction, the second heat exchange portion 121 extends in the first direction, and a length a2 of the third heat exchange portion 122 is greater than or equal to a length c1 of the first heat exchange portion 111 in the second direction.

In the above embodiment, by setting the length a2 of the third heat exchange portion 122 to be greater than the length c1 of the first heat exchange portion 111 in the second direction, the first heat exchange section 11 can be enclosed within the U-shaped region 120 of the second heat exchange section 12, the length of the third heat exchange portion 122 is increased, and the heat exchange area of the third heat exchange portion 122 is increased, such that the second heat exchange section 12 can enclose a larger U-shaped region 120, thereby improving the heat exchange effect of the heat exchange member 100. By setting the length a2 of the third heat exchange portion 122 to be equal to the length c1 of the first heat exchange portion 111, length dimensions of the third heat exchange portion 122 and the plurality of first heat exchange portions 121 of the first heat exchange flow channel 10 extending in the second direction can be similar, which facilitates controlling the temperature difference of the battery assembly 200 in the first direction and improving the temperature uniformity of the battery assembly 200.

According to an example of the present application, as shown in FIG. 4, the second heat exchange section 12 may further include a second bent portion 123 and a third bent portion 124. The second bent portion 123 and the third bent portion 124 are both arc-shaped, the second bent portion 123 is connected between the first end of the third heat exchange portion 122 and the second heat exchange portion 121, and the third bent portion 124 is connected between the second end of the third heat exchange portion 122 and the first heat exchange portion 111.

The second bent portion 123 and the third bent portion 124 are separately configured to connect the second heat exchange portion 121 to the third heat exchange portion 122 and the third heat exchange portion 122 to the first heat exchange portion 111. The second bent portion 123 is arc-shaped, that is, the second bent portion 123 extends along an arc. There is a certain included angle between fluid flow directions at two ends of the second bent portion 123. The third bent portion 124 is arc-shaped, that is, the third bent portion 124 extends along an arc. There is a certain included angle between fluid flow directions at two ends of the third bent portion 124.

In this way, the second bent portion 123 and the third bent portion 124 can change the flow direction of the heat exchange fluid, enabling the second heat exchange section 12 to extend within a preset region and be configured to perform heat exchange with the battery assembly 200. Meanwhile, the arc-shaped second bent portion 123 and the arc-shaped third bent portion 124 can reduce the flow resistance of the fluid and reduce the pressure drop, thereby increasing the flow rate of the heat exchange fluid and further enhancing the heat exchange efficiency of the first heat exchange flow channel 10.

In the above embodiment, by providing the second bent portion 123 and the third bent portion 124, the fluid flow direction inside the first heat exchange flow channel 10 can be changed, achieving a smooth transition and connection between the third heat exchange portion 122 and the second heat exchange portion 121, and achieving a smooth transition and connection between the third heat exchange portion 122 and the first heat exchange portion 111. Therefore, the second bent portion 123 and the third bent portion 124 can reduce the flow resistance of the fluid inside the second heat exchange section 12 and reduce the pressure drop, thereby increasing the flow rate of the heat exchange fluid and further enhancing the heat exchange efficiency of the first heat exchange flow channel 10. In addition, by providing the second bent portion 123 and the third bent portion 124, the circuitous arrangement of the first heat exchange flow channel 10 can also be achieved, such that the heat exchange area of the first heat exchange flow channel 10 can be increased and the structure can be more compact, which facilitates achieving a miniaturization design of the battery 1000 and improving the volumetric energy density of the battery 1000.

According to an example of the present application, as shown in FIG. 4, the second bent portion 123 may be in a quarter-circular arc shape.

That is, the second bent portion 123 may extend along a semi-circular arc. Specifically, the first bent portion 112 may extend along a quarter-circular arc protruding away from the first connection section. An included angle between an inlet and an outlet of the second bent portion 123 may be 90°. The second bent portion 123 is similar to a 90° elbow in piping materials, and can change the direction of the flow channel. After the fluid passes through the second bent portion 123, the fluid flow direction is changed by 90°. For example, the flow direction of the liquid may be changed from the Y1 direction to the X1 direction, or from the X1 direction to the Y1 direction. The second bent portion 123 connects the second heat exchange portion 121 to the third heat exchange portion 122. In this case, the second heat exchange portion 121 and the third heat exchange portion 122 are arranged perpendicular to each other, such that the layout of the second heat exchange section 12 can be more regular, and the flow channel of the second heat exchange section 12 can better fit the layout of the battery assembly 200, thereby enhancing the heat exchange effect of the second heat exchange section 12 on the battery assembly 200.

In other embodiments, the bending degree of the second bent portion 123 may also be adjusted based on the requirements. For example, the bending degree may be 50°, 80°, 120°, 135°, 150°, or the like, which is not limited in the embodiments of the present application.

In the above embodiment, by configuring the second bent portion 123 to be in the quarter-circular arc shape, the flow direction of the fluid can be changed from an original flow direction to a direction perpendicular to the original flow direction after the fluid passes through the second bent portion 123. Meanwhile, the circular arc shape can also reduce the flow resistance of the fluid, such that the fluid can flow smoothly within the second bent portion 123, thereby effectively preventing a decrease in the heat exchange efficiency caused by slow fluid flow.

According to an example of the present application, as shown in FIG. 4, the third bent portion 124 is in a quarter-circular arc shape.

That is, the third bent portion 124 may extend along a semi-circular arc. Specifically, the third bent portion 124 may extend along a quarter-circular arc protruding away from the first connection section. An included angle between an inlet and an outlet of the third bent portion 124 is 90°. The third bent portion 124 is similar to a 90° elbow in piping materials, and can change the direction of the flow channel. After the fluid passes through the third bent portion 124, the fluid flow direction is changed by 90°. For example, the flow direction of the liquid may be changed from the Y1 direction to the X1 direction, or from the X1 direction to the Y1 direction. The third bent portion 124 connects the third heat exchange portion 122 to the first heat exchange portion 111. In this case, the third heat exchange portion 122 and the first heat exchange portion 111 are arranged perpendicular to each other, such that the layout of the first heat exchange flow channel 10 can be more regular, and the first heat exchange flow channel 10 can better fit the layout of the battery assembly 200, thereby enhancing the heat exchange effect of the first heat exchange flow channel on the battery assembly 200.

In other embodiments, the bending degree of the third bent portion 124 may also be adjusted based on the requirements. For example, the bending degree may be 50°, 80°, 120°, 135°, 150°, or the like, which is not limited in the embodiments of the present application.

In the above embodiment, by configuring the third bent portion 124 to be in the quarter-circular arc shape, the flow direction of the fluid can be changed from an original flow direction to a direction perpendicular to the original flow direction after the fluid passes through the third bent portion 124. Meanwhile, the circular arc-shaped third bent portion 124 can also reduce the flow resistance of the fluid, such that the fluid can flow smoothly within the third bent portion 124, thereby effectively preventing a decrease in the heat exchange efficiency caused by slow fluid flow.

According to an example of the present application, as shown in FIG. 7, the second heat exchange section 12 may further include a fifth heat exchange portion 127. The fifth heat exchange portion 127 extends along a fourth-side peripheral edge of the first heat exchange section 11 and closes at least a portion of an opening of the U-shaped region 120 formed by the second heat exchange portion 121, the third heat exchange portion 122, and the fourth heat exchange portion 125.

It can be understood that the fifth heat exchange portion 127 may close a portion of the opening of the U-shaped region 120, or may completely close the opening of the U-shaped region 120, such that the second heat exchange section 12 can substantially cover the peripheral edge position of the battery assembly 200 and perform heat exchange with the peripheral edges of the battery assembly 200. In this way, the second heat exchange section 12 can perform heat exchange with all or most of the peripheral edges of the battery assembly 200, such that the structure of the first heat exchange flow channel 10 can be arranged according to the actual arrangement of the battery assembly 200 or the heat exchange requirements, and the second heat exchange section 12 provided with the fifth heat exchange portion 127 can be arranged, thereby optimizing the heat exchange structure of the first heat exchange flow channel 10 and improving the heat exchange efficiency.

In the above embodiment, by providing the fifth heat exchange portion 127, the second heat exchange section 12 can perform heat exchange with the peripheral edges at four sides of the battery assembly 200. As such, heat exchange with the peripheral edges at four sides of the battery assembly 200 can be performed by utilizing the second heat exchange section 12 of a single first heat exchange flow channel 10, thereby improving the heat exchange effect of the peripheral edges at four sides of the battery assembly 200 and improving the temperature uniformity of the battery assembly 200.

According to an example of the present application, as shown in FIG. 7, the fifth heat exchange portion 127 is arranged opposite to the second heat exchange portion 121, and the fifth heat exchange portion 127 is connected between the second end of the third heat exchange portion 122 and the first heat exchange section 11, and is connected to the third heat exchange portion 122 at an included angle and connected to the first heat exchange section 11 at an included angle.

It should be noted that, in the above embodiment, the second heat exchange portion 121 is arranged on one side of the first heat exchange section 11 in the first direction (e.g., a side of the plurality of first heat exchange portions 111 distal to the coordinate origin in the Y1 direction shown in FIG. 7); the fifth heat exchange portion 127 is arranged opposite to the second heat exchange portion 121, that is, the fifth heat exchange portion 127 is arranged on the other side of the first heat exchange section 11 in the first direction (e.g., a side of the plurality of first heat exchange portions 111 proximal to the coordinate origin in the Y1 direction shown in FIG. 7); the third heat exchange portion 122 is arranged on a side of the first heat exchange section 11 of the first heat exchange section 11 in the second direction (e.g., a side of the plurality of first heat exchange portions 111 proximal to the coordinate origin in the X1 direction shown in FIG. 7), and two ends of the third heat exchange portion 122 in the Y1 direction are separately connected to the second heat exchange portion 121 and the fifth heat exchange portion 127.

The fifth heat exchange portion 127 is connected to the third heat exchange portion 122 at an included angle. For example, the fifth heat exchange portion 127 is connected to the third heat exchange portion 122 at an angle of greater than 0° and less than or equal to 180°. For example, the included angle between the fifth heat exchange portion 127 and the third heat exchange portion 122 is 30°, 45°, 60°, 90°, 120°, 135°, 150°, or the like. The fifth heat exchange portion 127 is connected to the first heat exchange section 11 at an included angle. For example, the fifth heat exchange portion 127 is connected to the first heat exchange section 11 at an angle of greater than 0° and less than or equal to 180°. For example, the included angle between the fifth heat exchange portion 127 and the third heat exchange portion 122 is 30°, 45°, 60°, 90°, 120°, 135°, 150°, or the like.

Furthermore, the fifth heat exchange portion 127 may be connected to the third heat exchange portion 122 by an arc segment. For example, the fifth heat exchange portion 127 is connected to the third heat exchange portion 122 by a quarter-circular arc.

Furthermore, the fifth heat exchange portion 127 may be connected to the first heat exchange section 11 by an arc segment. For example, the fifth heat exchange portion 127 may be connected to the first heat exchange section 11 by a semi-circular arc.

In the above embodiment, by arranging the fifth heat exchange portion 127 opposite to the second heat exchange portion 121 and connecting the fifth heat exchange portion 127 between the third heat exchange portion 122 and the first heat exchange section 11, the structure of the first heat exchange flow channel 10 can be further optimized according to the heat exchange requirements of the battery assembly 200.

In some other specific embodiments, referring to FIG. 9, the fifth heat exchange portion 127 is arranged opposite to the second heat exchange portion 121, an end of the fifth heat exchange portion 127 is connected to an end of the fourth heat exchange portion 125 distal to the second heat exchange portion 121, and the fifth heat exchange portion 127 is connected to the fourth heat exchange portion 125 at an included angle.

The fifth heat exchange portion 127 is connected to the fourth heat exchange portion 125 at an included angle. For example, the fifth heat exchange portion 127 is connected to the fourth heat exchange portion 125 at an angle of greater than 0° and less than or equal to 180°. For example, the included angle between the fifth heat exchange portion 127 and the third heat exchange portion 122 is 30°, 45°, 60°, 90°, 120°, 135°, 150°, or the like.

For example, referring to FIG. 10, the second heat exchange portion 121 and the fifth heat exchange portion 127 are separately arranged on two sides of the first heat exchange section 11 in the X1 direction, the third heat exchange portion 122 and the fourth heat exchange portion 125 are separately arranged on two sides of the first heat exchange section 11 in the Y1 direction, the fifth heat exchange portion 127 extends in the Y1 direction, an end of the fifth heat exchange portion 127 proximal to the coordinate origin in the Y1 direction is connected to the fourth heat exchange portion 125, and an end of the fifth heat exchange portion 127 distal to the coordinate origin in the Y1 direction extends toward the third heat exchange section 13.

The fifth heat exchange portion 127 may be connected to the fourth heat exchange portion 125 by a circular arc. For example, the fifth heat exchange portion 127 may be connected to the fourth heat exchange portion 125 by a quarter-circular arc.

In the above embodiment, by arranging the fifth heat exchange portion 127 opposite to the second heat exchange portion 121 and connecting the fifth heat exchange portion 127 to the fourth heat exchange portion 125, the structure of the first heat exchange flow channel 10 can be further optimized according to the heat exchange requirements of the battery assembly 200.

In the above embodiment, by arranging the fifth heat exchange portion 127 opposite to the second heat exchange portion 121, and connecting the fifth heat exchange portion 127 between the second end of the third heat exchange portion 122 and the first heat exchange section 11, or connecting an end of the fifth heat exchange portion 127 to the end of the fourth heat exchange portion 125 distal to the second heat exchange portion 121, various arrangements of heat exchange flow channels can be achieved, thereby meeting the heat exchange requirements of various batteries 1000.

According to an example of the present application, as shown in FIGs. 4 to 8, the first heat exchange flow channel 10 may further include a third heat exchange section 13. The first heat exchange section 11 is connected between the third heat exchange section 13 and the second heat exchange section 12, and the third heat exchange section 13 is connected to the first heat exchange section 11 at an included angle.

That is, in the first heat exchange flow channel 10, the second heat exchange section 12, the first heat exchange section 11, and the third heat exchange section 13 are sequentially connected. The heat exchange fluid may flow from the second heat exchange section 12 to the third heat exchange section 13 through the first heat exchange section 11, or may flow from the third heat exchange section 13 to the second heat exchange section 12 through the first heat exchange section 11.

The third heat exchange section 13 is connected to the first heat exchange section 11 at an angle of greater than 0° and less than or equal to 180°. For example, the included angle between the third heat exchange section 13 and the first heat exchange section 11 is 30°, 45°, 60°, 90°, 120°, 135°, 150°, or the like.

In the above embodiment, by providing the third heat exchange section 13, the heat exchange area of the first heat exchange flow channel 10 can be further increased, thereby further improving the heat exchange effect of the first heat exchange flow channel 10.

According to an example of the present application, as shown in FIGs. 4 to 8, the first heat exchange section 11 includes a plurality of first heat exchange portions 111, and the plurality of first heat exchange portions 111 are sequentially connected in the first direction (for example, the Y1 direction shown in FIG. 4). The third heat exchange section 13 is arranged on a side of the first heat exchange section 11 facing away from the third heat exchange portion 122, and the third heat exchange section 13 is connected to one of the plurality of first heat exchange portions 111 that is closest to the second heat exchange portion 121 in the first direction.

Specifically, the third heat exchange section 13 is arranged adjacent to the fourth heat exchange portion 125 and between the fourth heat exchange portion 125 and the first heat exchange portion 111. Therefore, the third heat exchange section 13 is also arranged on the outer circumference of the first heat exchange section 11. In this way, the heat exchange area of the first heat exchange flow channel 10 in the circumferential direction can be increased, thereby improving the heat exchange efficiency of the first heat exchange flow channel 10 at positions on the circumferential side.

In addition, the third heat exchange section 13 and the fourth heat exchange portion 125 may be arranged inside and outside the first heat exchange section 11 on the same side, thereby further increasing the heat exchange area at this position and improving the heat exchange efficiency. In addition, the third heat exchange section 13 and the fourth heat exchange portion 125 are separately located at two ends of the first flow channel in the fluid flow direction, and the third heat exchange section 13 and the fourth heat exchange portion 125 can perform heat exchange with the same region of the battery assembly 200, thereby improving the temperature uniformity in the region.

Moreover, the third heat exchange section 13 is connected to one of the plurality of first heat exchange portions 111 that is closest to the second heat exchange portion 121 in the first direction, the plurality of first heat exchange portions 111 are sequentially connected in the first direction, and the third heat exchange portion 122 is connected to one of the plurality of first heat exchange portions 111 that is farthest from the second heat exchange portion 121 in the first direction. In this way, when heat exchange is performed with the battery assembly 200, in the first heat exchange flow channel 10, temperatures of the heat exchange fluid in the first heat exchange portion 111 that is closest to the second heat exchange portion 121 and the heat exchange fluid in the third heat exchange section 13 are relatively highest temperatures in the first heat exchange flow channel 10, and temperatures of the heat exchange fluid in the second heat exchange portion 121 and the heat exchange fluid in the fourth heat exchange portion 125 are relatively lowest temperatures, while the temperatures in remaining portions are in between.

Due to the heat dissipation effect of the battery 1000, the temperature at the edge of the battery 1000 is lower than the temperature in the middle. Thus, with the second heat exchange portion 121 and the first heat exchange portion 111 that is closest to the second heat exchange portion 121 performing heat exchange in the same region, and the third heat exchange section 13 and the fourth heat exchange portion 125 performing heat exchange in the same region, the temperature uniformity in the battery assembly 200 can be further improved, and the temperature difference of the battery assembly 200 can be balanced, thereby improving the temperature uniformity of the battery assembly 200.

In the above embodiment, by adding the third heat exchange section 13 and connecting the third heat exchange section 13 to the one of the plurality of first heat exchange portions 111 that is closest to the second heat exchange portion 121 in the first direction, the heat exchange area can be increased, and the temperature difference of the battery assembly 200 can be balanced, thereby improving the temperature uniformity of the battery assembly 200.

According to an example of the present application, as shown in FIGs. 4 to 8, the third heat exchange section 13 extends in the first direction toward a direction away from the second heat exchange portion 121, the first heat exchange portions 111 all extend in the second direction, and the first direction and the second direction are arranged at an included angle.

Specifically, one end of the third heat exchange portion 122 is connected to one of the plurality of first heat exchange portions 111 that is farthest from the second heat exchange portion 121 in the first direction, and the other end of the third heat exchange portion 122 extends toward the first heat exchange portion 111 that is farthest from the second heat exchange portion 121. Meanwhile, the fourth heat exchange portion 125 also extends toward the first heat exchange portion 111 that is farthest from the second heat exchange portion 121.

Furthermore, the third heat exchange section 13 is arranged on a side of the first heat exchange section 11 facing away from the third heat exchange portion 122. In this case, the third heat exchange section 13 and the fourth heat exchange portion 125 are arranged on the same outer side of the first heat exchange portion 111 in the circumferential direction. The third heat exchange section 13 and the fourth heat exchange portion 125 are separately located at two ends of the first flow channel in the fluid flow direction. When the third heat exchange section 13 and the fourth heat exchange portion 125 jointly perform heat exchange with the same region of the battery assembly 200, the temperature difference at the edge positions of the battery assembly 200 can be balanced, thereby improving the temperature uniformity at the edge positions of the battery assembly 200.

In the above embodiment, by configuring the third heat exchange section 13 to extend in the first direction toward the direction away from the second heat exchange portion 121, the heat exchange area of the first heat exchange flow channel 10 can be increased, thereby improving the heat exchange effect of the first heat exchange flow channel 10 on the battery cells 2011. Meanwhile, when the third heat exchange section 13 and the fourth heat exchange portion 125 jointly perform heat exchange with the battery assembly 200, the temperature difference in regions at edge positions of the battery assembly 200 can be balanced, thereby improving the temperature uniformity at the edge positions of the battery assembly 200.

According to an example of the present application, as shown in FIGs. 4 to 8, the third heat exchange section 13 extends in the first direction to a position proximal to one of the plurality of first heat exchange portions 111 that is farthest from the second heat exchange portion 121.

In the above embodiment, by configuring the third heat exchange section 13 to extend in the first direction to the position proximal to the one of the plurality of first heat exchange portions 111 that is farthest from the second heat exchange portion 121, the length of the third heat exchange portion 122 can be increased, and the heat exchange area of the third heat exchange portion 122 can be increased, thereby improving the heat exchange effect of the first heat exchange flow channel 10.

According to an example of the present application, as shown in FIGs. 4 to 8, the first heat exchange flow channel 10 may further include a fourth bent portion 14. The fourth bent portion 14 is arc-shaped and is connected between the third heat exchange section 13 and the first heat exchange portion 111 in a bent manner.

The fourth bent portion 14 is arc-shaped, that is, the fourth bent portion 14 extends along an arc. There is a certain included angle between fluid flow directions at two ends of the fourth bent portion 14. In this way, the fourth bent portion 14 can change the flow direction of the fluid, enabling the third heat exchange section 13 to extend in the preset direction. Meanwhile, the arc shape can reduce the flow resistance of the fluid and reduce the pressure drop, thereby increasing the flow rate of the fluid and further enhancing the heat exchange efficiency of the first heat exchange flow channel 10.

In the above embodiment, by providing the fourth bent portion 14, the flow direction of the fluid between the third heat exchange section 13 and the first heat exchange portion 111 can be changed. Meanwhile, the arc-shaped fourth bent portion 14 can reduce the flow resistance of the fluid and reduce the pressure drop, thereby increasing the flow rate of the fluid and further enhancing the heat exchange efficiency of the first heat exchange flow channel 10. In addition, by providing the fourth bent portion 14, the circuitous arrangement of the first heat exchange flow channel 10 can also be achieved, such that the heat exchange area of the first heat exchange flow channel 10 can be increased and the structure can be more compact, which facilitates achieving a miniaturization design of the battery 1000 and improving the volumetric energy density of the battery 1000.

According to an example of the present application, as shown in FIGs. 4 to 8, the fourth bent portion 14 is in a quarter-circular arc shape.

That is, the fourth bent portion 14 may extend along a semi-circular arc. Specifically, the fourth bent portion 14 may extend along a quarter-circular arc protruding toward a connection position between the second heat exchange portion 121 and the fourth heat exchange portion 125. An included angle between an inlet and an outlet of the fourth bent portion 14 is 90°. The fourth bent portion 14 is similar to a 90° elbow in piping materials, and can change the direction of the flow channel. After the fluid passes through the fourth bent portion 14, the fluid flow direction is changed by 90°. For example, the flow direction of the liquid may be changed from the X1 direction to the Y1 direction, or from the Y1 direction to the X1 direction.

Furthermore, the fourth bent portion 14 connects the third heat exchange section 13 to the first heat exchange portion 111. The third heat exchange section 13 and the first heat exchange portion 111 may be arranged perpendicular to each other. The first heat exchange portion 111 extends in the second direction, the third heat exchange section 13 extends in the first direction, and the first direction is perpendicular to the second direction. In this way, the layout of the first heat exchange flow channel 10 can be more regular, and the first heat exchange flow channel 10 can better fit the layout of the battery assembly 200, thereby enhancing the heat exchange effect of the first heat exchange flow channel on the battery assembly 200.

In other embodiments, the bending degree of the fourth bent portion 14 may also be adjusted based on the requirements. For example, the bending degree may be 50°, 80°, 120°, 135°, 150°, or the like, which is not limited in the embodiments of the present application.

In the above embodiment, by configuring the fourth bent portion 14 to be in the quarter-circular arc shape, the flow direction of the fluid can be changed from an original flow direction to a direction perpendicular to the original flow direction after the fluid passes through the fourth bent portion 14. Meanwhile, the circular arc shape can also reduce the flow resistance of the fluid, such that the fluid can flow smoothly within the fourth bent portion 14, thereby effectively preventing a decrease in the heat exchange efficiency caused by slow fluid flow.

According to an example of the present application, as shown in FIGs. 4 to 8, the first heat exchange flow channel 10 may further include a first inlet/outlet section 15. One end of the first inlet/outlet section 15 is connected to the third heat exchange section 13 at an included angle, and the other end of the first inlet/outlet section 15 is formed as a first inlet/outlet of the first heat exchange flow channel 10.

The first inlet/outlet is configured for the inlet or outlet of the heat exchange fluid. When the first inlet/outlet is configured for the inlet of the heat exchange fluid, the first inlet/outlet section 15 is configured to convey the heat exchange fluid into the third heat exchange section 13. When the first inlet/outlet is configured for the outlet of the heat exchange fluid, the first inlet/outlet section 15 is configured to guide the heat exchange fluid after heat exchange out of the first heat exchange flow channel 10 through the first inlet/outlet.

The first inlet/outlet section 15 is connected to the third heat exchange section 13 at an included angle. For example, the first inlet/outlet section 15 is connected to the third heat exchange section 13 at an angle of greater than 0° and less than or equal to 180°. For example, the included angle between the first inlet/outlet section 15 and the third heat exchange section 13 is 30°, 45°, 60°, 90°, 120°, 135°, 150°, or the like.

In the above embodiment, by providing the first inlet/outlet section 15, an external pipeline can be easily connected, such that the heat exchange medium can enter or exit the first heat exchange flow channel 10. Meanwhile, the heat exchange fluid entering or exiting the first heat exchange flow channel 10 can be guided, such that the heat exchange fluid can enter or exit quickly, thereby improving the heat exchange rate.

According to an example of the present application, as shown in FIGs. 4 to 8, the first inlet/outlet section 15 extends in the second direction toward a direction away from the first heat exchange section 11, and the third heat exchange section 13 extends in the first direction.

It can be understood that a certain included angle is formed between the first inlet/outlet section 15 and the third heat exchange section 13, such that a certain space is formed on a side of the third heat exchange section 13 facing the first inlet/outlet section 15, which facilitates the layout of other components in the battery 1000.

In the above embodiment, by configuring the first inlet/outlet section 15 to extend in the second direction toward the direction away from the first heat exchange section 11, the pipeline arrangement of the first heat exchange flow channel 10 can be more rational, and the connection with the external pipeline can be facilitated. Meanwhile, the first inlet/outlet can be distal to the battery assembly 200, which facilitates reducing the risk of damage to the battery assembly 200 due to water leakage at the first inlet/outlet.

According to an example of the present application, as shown in FIGs. 4 to 8, the first heat exchange flow channel 10 may further include a fifth bent portion 16. The fifth bent portion 16 is arc-shaped and is connected between the third heat exchange section 13 and the first inlet/outlet section 15 in a bent manner.

The fifth bent portion 16 is arc-shaped, that is, the fifth bent portion 16 extends along an arc. There is a certain included angle between fluid flow directions at two ends of the fifth bent portion 16. In this way, the communication between the third heat exchange section 13 and the first inlet/outlet section 15 can be achieved, and the heat exchange fluid can flow smoothly from the third heat exchange section 13 to the first inlet/outlet section 15 or from the first inlet/outlet section 15 to the third heat exchange section 13, thereby achieving the liquid inlet or liquid outlet of the first inlet/outlet section 15. Meanwhile, the arc shape can also reduce the flow resistance of the fluid and reduce the pressure drop, thereby increasing the flow rate of the heat exchange fluid and further enhancing the heat exchange efficiency of the first heat exchange flow channel 10.

In the above embodiment, by providing the fifth bent section, the heat exchange fluid can flow smoothly from the third heat exchange section 13 to the first inlet/outlet section 15 or from the first inlet/outlet section 15 to the third heat exchange section 13, achieving liquid inlet or liquid outlet of the first inlet/outlet section 15. Meanwhile, the arc-shaped fifth bent portion 16 can also reduce the flow resistance of the fluid and reduce the pressure drop, thereby increasing the flow rate of the heat exchange fluid and further enhancing the heat exchange efficiency of the first heat exchange flow channel 10.

According to an example of the present application, as shown in FIGs. 4 to 8, the fifth bent portion 16 is circular arc-shaped, and a central angle corresponding to the fifth bent portion 16 is greater than or equal to 90° and less than 180°.

For example, the central angle corresponding to the fifth bent portion 16 may be 90°, 120°, 150°, or 170°.

As shown in FIG. 4, the heat exchange member 100 includes two first heat exchange flow channels 10. The fifth bent portion 16 of the first heat exchange flow channel 10 on a side distal to the coordinate origin in the Y1 direction is in a quarter-circular arc shape, and the third heat exchange section 13 is arranged perpendicular to the first inlet/outlet section 15. Meanwhile, the first inlet/outlet section 15 of the first heat exchange flow channel 10 on the lower side includes a first extension segment and a second extension segment. The first extension segment is connected between the second extension segment and the third heat exchange section 13. The first extension segment extends along a straight line inclined relative to the second direction, the second extension segment extends along a straight line parallel to the second direction, the first extension segment is connected to the third heat exchange section 13 by the fifth bent portion 16, and the central angle corresponding to the circular arc of the fifth bent portion 16 is greater than 90° and less than 135°.

In the above embodiment, by configuring the fifth bent portion 16 to be in the circular arc shape, the flow resistance of the fluid can be further reduced, such that the fluid can flow smoothly within the fifth bent portion 16, thereby effectively preventing a decrease in the heat exchange efficiency caused by slow fluid flow. Meanwhile, the central angle corresponding to the fifth bent portion 16 is greater than or equal to 90° and less than 180°, such that a certain space can be further formed on the side of the third heat exchange section 13 facing the first inlet/outlet section 15, which facilitates the arrangement of other components in the battery 1000, thereby improving the rationality of the layout of the battery 1000.

According to an example of the present application, as shown in FIGs. 4 to 8, the second heat exchange section 12 further includes a sixth bent portion 126. The sixth bent portion 126 is connected between the fourth heat exchange portion 125 and the second heat exchange portion 121.

The sixth bent portion 126 is formed in an arc shape, that is, the sixth bent portion 126 extends along an arc. There is a certain included angle between fluid flow directions at two ends of the sixth bent portion 126. In this way, the sixth bent portion 126 can change the flow direction of the heat exchange fluid, enabling the second heat exchange portion 121 and the fourth heat exchange portion 125 to extend in the preset directions. Meanwhile, the arc-shaped sixth bent portion 126 can reduce the flow resistance of the fluid and reduce the pressure drop, thereby increasing the flow rate of the heat exchange fluid and further enhancing the heat exchange efficiency of the first heat exchange flow channel 10.

In the above embodiment, by providing the sixth bent portion 126, the fluid flow direction inside the first heat exchange flow channel 10 can be changed, achieving the circuitous arrangement of the first heat exchange flow channel 10, thereby increasing the heat exchange area of the first heat exchange flow channel 10 and improving the heat exchange efficiency of the first heat exchange flow channel 10. Meanwhile, the arc-shaped sixth bent portion 126 can also reduce the flow resistance of the fluid and reduce the pressure drop, thereby increasing the flow rate of the heat exchange fluid and further enhancing the heat exchange efficiency of the first heat exchange flow channel 10. In addition, by providing the sixth bent portion, the second heat exchange section 12 can form the U-shaped region 120, such that the second heat exchange section 12 can surround the first heat exchange section, thereby increasing the compactness of the arrangement of the first heat exchange flow channel 10, and achieving structural miniaturization of the first heat exchange flow channel 10, which facilitates improving the volumetric energy density of the battery.

According to an example of the present application, as shown in FIGs. 4 to 8, the sixth bent portion 126 is in a quarter-circular arc shape.

That is, the sixth bent portion 126 may extend along a semi-circular arc. Specifically, the sixth bent portion 126 may extend along a quarter-circular arc protruding away from the first heat exchange section 11. An included angle between an inlet and an outlet of the sixth bent portion 126 is 90°. The sixth bent portion 126 is similar to a 90° elbow in piping materials, and can change the direction of the flow channel. After the fluid passes through the sixth bent portion 126, the fluid flow direction is changed by 90°. For example, the flow direction of the liquid may be changed from the X1 direction to the Y1 direction, or from the Y1 direction to the X1 direction. The sixth bent portion 126 connects the second heat exchange portion 121 to the fourth heat exchange portion 125. In this case, the second heat exchange portion 121 is arranged perpendicular to the fourth heat exchange portion 125. In this way, the layout of the second heat exchange section 12 can be more regular, and the second heat exchange section 12 can better fit the layout of the battery assembly 200, thereby enhancing the heat exchange effect of the second heat exchange section 12 on the battery assembly 200.

In other embodiments, the bending degree of the sixth bent portion 126 may also be adjusted based on the requirements. For example, the bending degree may be 50°, 80°, 120°, 135°, 150°, or the like, which is not limited in the embodiments of the present application.

In the above embodiment, by configuring the sixth bent portion 126 to be in the quarter-circular arc shape, the flow direction of the fluid can be changed from an original flow direction to a direction perpendicular to the original flow direction after the fluid passes through the sixth bent portion 126. Meanwhile, the circular arc shape can further reduce the flow resistance of the fluid, such that the fluid can flow smoothly within the sixth bent portion 126, thereby effectively preventing a decrease in the heat exchange efficiency caused by slow fluid flow.

According to an example of the present application, as shown in FIGs. 4 to 8, the first heat exchange flow channel 10 may further include a second inlet/outlet section 17. One end of the second inlet/outlet section 17 is connected to the fourth heat exchange portion 125 at an included angle, and the other end of the second inlet/outlet section 17 is formed as a second inlet/outlet of the first heat exchange flow channel 10.

The second inlet/outlet is configured for the inlet or outlet of the heat exchange fluid. When the second inlet/outlet is configured for the inlet of the heat exchange fluid, the second inlet/outlet section 17 is configured to convey the heat exchange fluid into the third heat exchange section 13. When the second inlet/outlet is configured for the outlet of the heat exchange fluid, the second inlet/outlet section 17 is configured to guide the heat exchange fluid after heat exchange out of the first heat exchange flow channel 10 through the second inlet/outlet.

The second inlet/outlet section 17 is connected to the fourth heat exchange portion 125 at an included angle. For example, the second inlet/outlet section 17 is connected to the fourth heat exchange portion 125 at an angle of greater than 0° and less than or equal to 180°. For example, the included angle between the second inlet/outlet section 17 and the fourth heat exchange portion 125 is 30°, 45°, 60°, 90°, 120°, 135°, 150°, or the like.

In the above embodiment, by providing the second inlet/outlet section 17, an external pipeline can be easily connected, such that the heat exchange medium can enter or exit the first heat exchange flow channel 10 to complete the heat exchange with the battery cells 2011. Meanwhile, the heat exchange fluid entering or exiting the first heat exchange flow channel 10 can be guided, such that the heat exchange fluid can enter or exit quickly, thereby improving the heat exchange rate.

According to an example of the present application, as shown in FIGs. 4 to 8, the second inlet/outlet section 17 extends in the second direction toward a direction away from the first heat exchange section 11, and the fourth heat exchange portion 125 extends in the first direction (e.g., the Y1 direction shown in FIG. 4).

It can be understood that a certain included angle is formed between the second inlet/outlet section 17 and the fourth heat exchange portion 125, such that a certain space is formed on a side of the fourth heat exchange portion 125 facing the second inlet/outlet section 17, which facilitates the layout of other components (such as high-voltage boxes) in the battery 1000.

In the above embodiment, by configuring the second inlet/outlet section 17 to extend in the second direction toward the direction away from the first heat exchange section 11, the pipeline arrangement of the first heat exchange flow channel 10 can be more rational, and the connection with the external pipeline can be facilitated. Meanwhile, the second inlet/outlet can be distal to the battery assembly 200, which facilitates reducing the risk of damage to the battery assembly 200 due to water leakage at the second inlet/outlet.

According to an example of the present application, as shown in FIGs. 4 to 8, the first heat exchange flow channel 10 further includes a seventh bent portion 18. The seventh bent portion 18 is arc-shaped and is connected between the fourth heat exchange portion 125 and the second inlet/outlet section 17 in a bent manner.

The seventh bent portion 18 is arc-shaped, that is, there is a certain included angle in the seventh bent portion 18. In this way, the seventh bent portion 18 is connected between the fourth heat exchange portion 125 and the second inlet/outlet section 17 in a bent manner, such that the communication between the fourth heat exchange portion 125 and the second inlet/outlet section 17 can be achieved, and the heat exchange fluid can flow smoothly from the fourth heat exchange portion 125 to the second inlet/outlet section 17 or from the second inlet/outlet section 17 to the fourth heat exchange portion 125, thereby achieving the liquid inlet or liquid outlet of the second inlet/outlet section 17. Meanwhile, the arc shape can also reduce the flow resistance of the fluid and reduce the pressure drop, thereby increasing the flow rate of the heat exchange fluid and further enhancing the heat exchange efficiency of the first heat exchange flow channel 10.

In the above embodiment, by providing the seventh bent portion, the heat exchange fluid can flow smoothly from the fourth heat exchange portion 125 to the second inlet/outlet section 17 or from the second inlet/outlet section 17 to the fourth heat exchange portion 125, achieving liquid inlet or liquid outlet of the second inlet/outlet section 17. Meanwhile, the arc-shaped seventh bent portion 18 can also reduce the flow resistance of the fluid and reduce the pressure drop, thereby increasing the flow rate of the heat exchange fluid and further enhancing the heat exchange efficiency of the first heat exchange flow channel 10.

According to an example of the present application, as shown in FIGs. 4 to 8, the seventh bent portion 18 is circular arc-shaped, and a central angle corresponding to the seventh bent portion 18 is greater than or equal to 90° and less than 180°.

For example, the central angle corresponding to the seventh bent portion 18 may be 90°, 120°, 150°, or 170°.

As shown in FIG. 4, the heat exchange member 100 includes two first heat exchange flow channels 10. The seventh bent portion 18 of the first heat exchange flow channel 10 on a side distal to the coordinate origin in the Y1 direction is in a quarter-circular arc shape, and the fourth heat exchange portion 125 is arranged perpendicular to the second inlet/outlet section 17. Meanwhile, the second inlet/outlet section 17 of the first heat exchange flow channel 10 on the lower side includes a third extension segment and a fourth extension segment. The third extension segment is connected between the fourth extension segment and the fourth heat exchange portion 125. The third extension segment extends along a straight line inclined relative to the second direction, the fourth extension segment extends along a straight line parallel to the second direction, the third extension segment is connected to the fourth heat exchange portion 125 by the seventh bent portion 18, and the central angle corresponding to the circular arc of the seventh bent portion 18 is greater than 90° and less than 135°.

In the above embodiment, by configuring the seventh bent portion 18 to be in the circular arc shape, the flow resistance of the fluid can be further reduced, such that the fluid can flow smoothly within the seventh bent portion 18, thereby effectively preventing a decrease in the heat exchange efficiency caused by slow fluid flow. Meanwhile, the central angle corresponding to the seventh bent portion 18 is greater than or equal to 90° and less than 180°, such that a clearance space can be further formed on the side of the fourth heat exchange portion 125 facing the second inlet/outlet section 17, which facilitates the layout of other components in the battery 1000, thereby improving the rationality of the layout of the battery 1000.

According to an example of the present application, the first heat exchange section 11 is connected downstream of the second heat exchange section 12 in the fluid flow direction.

That is, the heat exchange fluid first flows through the second heat exchange section 12 and then flows into the first heat exchange section 11. The second heat exchange section 12 is wound around the circumference of the first heat exchange section 11. When the first heat exchange flow channel 10 performs heat exchange with the battery assembly 200, since the periphery of the battery assembly 200 dissipates heat faster, especially in low-temperature heating conditions, the high-temperature heat exchange fluid starts heat exchange from the second heat exchange section 12, such that the first heat exchange flow channel 10 can first perform heat exchange with the outer circumference of the battery assembly 200, which facilitates mitigating the internal and external temperature difference of the battery assembly 200, thereby improving the service life of the battery 1000 to a certain extent.

In the above embodiment, by configuring the first heat exchange section 11 to be connected downstream of the second heat exchange section 12 in the fluid flow direction, the first heat exchange flow channel 10 can first perform heat exchange with the outer circumference of the battery 1000, which facilitates mitigating the temperature difference of the battery 1000 in different environments, thereby improving the service life of the battery 1000 to a certain extent.

According to an example of the present application, the heat exchange member 100 is configured such that: during heating of the battery assembly 200 of the battery 1000, the first heat exchange section 11 is connected downstream of the second heat exchange section 12 in the fluid flow direction; during cooling of the battery assembly 200 of the battery 1000, the first heat exchange section 11 is connected upstream of the second heat exchange section 12 in the fluid flow direction.

Specifically, during heating of the battery assembly 200 of the battery 1000, the temperature of the heat exchange fluid flowing in the heat exchange member 100 is higher than the operating temperature of the battery 1000, and the heat exchange member 100 heats and raises the temperature of the battery assembly 200. The high-temperature heat exchange fluid first flows into the second heat exchange section 12 and then flows to the first heat exchange section 11. The temperature of the heat exchange fluid flowing inside the second heat exchange section 12 is higher than the temperature of the heat exchange fluid inside the first heat exchange section 11.

Since the high-temperature fluid first enters the second heat exchange section 12 located at the periphery of the first heat exchange flow channel 10, the second heat exchange section 12 may first heat the battery cells 2011 at the periphery of the battery assembly 200, and the heat exchange fluid may cool the battery cells 2011 at the central position of the battery assembly 200 after entering the first heat exchange section 11. Since the battery cells 2011 at the periphery of the battery 1000 dissipate much heat to the external environment, the temperature of the battery cells 2011 at the periphery of the battery 1000 decreases more. The heat exchange fluid heats the battery cells 2011 at the periphery of the battery 1000 first, such that the heat exchange fluid at a high temperature can increase the temperature of the battery cells 2011 at the periphery while compensating for the heat lost by the battery cells 2011 due to heat dissipation to the external environment to meet the heating requirements. The battery cells 2011 at the central position of the battery assembly 200 have less contact area with the external environment and thus have less heat loss. The heat exchange fluid at a lower temperature flowing in the first heat exchange section 11 can cooperate with the heat generated by the battery cells 2011 to well meet their heating requirements. In this way, the heating effect obtained by the battery cells 2011 at the periphery of the battery assembly 200 is substantially consistent with that obtained by the battery cells 2011 at the central position of the battery assembly 200, and then the temperature of the battery cells 2011 at the periphery of the battery assembly 200 can be consistent with that of the battery cells 2011 at the central position of the battery assembly 200 after heating and temperature raising, such that the temperature distribution in the battery 1000 is more uniform.

During cooling of the battery assembly 200 of the battery 1000, the temperature of the heat exchange fluid flowing in the heat exchange member 100 is lower than the operating temperature of the battery 1000, and the heat exchange member 100 is used to cool the battery 1000. The heat exchange fluid flows from the first heat exchange section 11 to the second heat exchange section 12. The temperature of the heat exchange fluid flowing in the first heat exchange section 11 is lower than the temperature of the heat exchange fluid inside the second heat exchange section 12.

During cooling of the battery 1000, the heat exchange fluid flows from the first heat exchange section 11 to the second heat exchange section 12, that is, the heat exchange fluid flows from the middle part of the battery assembly 200 to the edge position of the battery assembly 200 and performs heat exchange. Since the heat dissipation condition of the battery cells 2011 at the peripheral edge position of the battery 1000 is better than that of the internal battery cells 2011, the heat exchange fluid at the lower temperature in the first heat exchange section 11 can better meet the heat dissipation requirements of the battery cells 2011 at the central position of the battery 1000. Meanwhile, since the battery cells 2011 at the peripheral edge position of the battery assembly 200 can directly dissipate heat naturally to the external environment, a slightly higher temperature of the heat exchange fluid in the second heat exchange section 12 can still meet the heat dissipation requirements of the peripheral battery cells 2011. In this way, the cooling effect obtained by the battery cells 2011 at the peripheral edge position of the battery 1000 is generally consistent with that obtained by the battery cells 2011 at the central position of the battery 1000, and then the temperature of the battery cells 2011 at the peripheral edge position of the battery 1000 can be consistent with that of the battery cells 2011 at the central position of the battery 1000 after cooling and heat dissipation, such that the internal and external temperature difference of the battery assembly 200 can be reduced, and the temperature distribution in the battery 1000 is more uniform.

In the above embodiment, the heat exchange member 100 is configured such that: during heating of the battery assembly 200 of the battery 1000, the first heat exchange section 11 is connected downstream of the second heat exchange section 12 in the fluid flow direction; during cooling of the battery assembly 200 of the battery 1000, the first heat exchange section 11 is connected upstream of the second heat exchange section 12 in the fluid flow direction, thereby further improving the heat exchange effect of the battery 1000, and improving the temperature uniformity of the battery assembly 200.

According to an example of the present application, as shown in FIGs. 4 to 10, the heat exchange member 100 is provided with one or a plurality of heat exchange flow channels. When a plurality of heat exchange flow channels are provided, the plurality of heat exchange flow channels are spaced apart in the first direction or are arranged in a winding manner relative to each other, at least one heat exchange flow channel is formed as the first heat exchange flow channel 10, and the plurality of heat exchange flow channels are arranged in parallel.

It can be understood that one, two, three, four, or more heat exchange flow channels may be provided in the heat exchange member 100. When a plurality of heat exchange flow channels are provided, one of the plurality of heat exchange flow channels may be formed as the first heat exchange flow channel 10, or two, three, four, or more heat exchange flow channels may be formed as the first heat exchange flow channels 10, or the plurality of heat exchange flow channels may all be formed as the first heat exchange flow channels 10.

In some specific embodiments, the plurality of heat exchange flow channels are spaced apart in the first direction. For example, as shown in FIG. 4, the heat exchange member 100 may include two heat exchange flow channels. The two first heat exchange flow channels 10 are spaced apart in the first direction. Furthermore, the two heat exchange flow channels may both be formed as the first heat exchange flow channels 10. For another example, the heat exchange member 100 may include three heat exchange flow channels. The three heat exchange flow channels are sequentially arranged in the first direction. Furthermore, two of the three heat exchange flow channels are the first heat exchange flow channels 10 and one is the second heat exchange flow channel 30, and the second heat exchange flow channel 30 is arranged between the two first heat exchange flow channels 10.

In some other embodiments, the plurality of heat exchange flow channels are arranged in a winding manner relative to each other. For example, as shown in FIG. 9, the heat exchange member 100 is provided with two heat exchange flow channels arranged in parallel, and the two heat exchange flow channels are arranged in a winding manner relative to each other. Furthermore, the two heat exchange flow channels may both be formed as the first heat exchange flow channels 10. For another example, as shown in FIG. 10, the heat exchange member 100 is provided with three heat exchange flow channels arranged in parallel, the three heat exchange flow channels are arranged in a winding manner relative to each other, and the three heat exchange flow channels may all be formed as the first heat exchange flow channels.

The plurality of heat exchange flow channels are arranged in parallel, that is, inlets of the plurality of heat exchange flow channels are connected to the same liquid supply tube, and outlets of the plurality of heat exchange flow channels are connected to the same liquid outlet tube.

In the above embodiment, by configuring the heat exchange member 100 to be provided with one or a plurality of heat exchange flow channels and the plurality of heat exchange flow channels to be spaced apart in the first direction or to be arranged in a winding manner relative to each other, the diversity of the heat exchange flow channels can be increased, thereby improving the adaptability of the heat exchange member 100, allowing the heat exchange member to meet the requirements of different batteries 1000, and thus improving the market competitiveness of the batteries 1000. Meanwhile, the plurality of heat exchange flow channels are arranged in parallel, such that the plurality of heat exchange flow channels can simultaneously perform heat exchange, thereby reducing the heat exchange time of the heat exchange member 100 and improving the heat exchange efficiency.

According to an example of the present application, as shown in FIG. 4, the plurality of heat exchange flow channels are spaced apart in the first direction, and two heat exchange flow channels located at two ends in the first direction are both the first heat exchange flow channels 10; the two first heat exchange flow channels 10 are arranged symmetrically about a center line of the heat exchange member 100 in the second direction, and the second direction and the first direction are arranged at an included angle.

It can be understood that by arranging the second heat exchange section 12 of the first heat exchange flow channel 10 at the peripheral edge of the battery assembly 200, the temperature uniformity inside and outside the battery assembly 200 can be improved. Therefore, by forming the two heat exchange flow channels at two ends in the first direction both as the first heat exchange flow channels 10, the temperature uniformity of the battery cells 2011 located at two ends of the battery assembly 200 in the first direction can be better, thereby achieving overall temperature uniformity of the battery assembly 200.

Furthermore, the fluid flow directions and the inlets/outlets at two ends of the two first heat exchange flow channels 10 are arranged symmetrically, such that the two first heat exchange flow channels 10 can synchronously perform heat exchange with the two ends of the battery assembly 200 in the first direction, thereby achieving a better temperature uniformity effect.

The description "the second direction and the first direction are arranged at an included angle" is intended to illustrate that the first direction and the second direction may be arranged perpendicularly, or may only intersect non-perpendicularly. For example, the first direction and the second direction may be arranged at an angle of 30°, 60°, or 80°.

In the above embodiment, by providing the two first heat exchange flow channels 10 arranged symmetrically, simultaneous liquid inlet on both sides can be achieved, increasing the liquid inlet flow rate, reducing the length of a single heat exchange flow channel, and reducing the pressure drop in the single heat exchange flow channel, thereby improving the heat exchange efficiency.

According to an example of the present application, as shown in FIG. 4, the plurality of heat exchange flow channels are arranged symmetrically about the center line of the heat exchange member 100 in the second direction.

The flow directions and the inlets/outlets at two ends of the plurality of heat exchange flow channels are also arranged symmetrically, such that the heat exchange member 100 is divided into two symmetrically distributed portions. In this way, during the heat exchange process, the fluid distribution in the two symmetrical portions of the heat exchange member 100 is consistent, such that the temperature consistency in regions of the battery assembly 200 that have heat exchange with the two corresponding portions of the heat exchange member 100 can be improved, thereby further improving the temperature uniformity effect of the battery assembly 200.

In the above embodiment, by configuring the plurality of heat exchange flow channels to be arranged symmetrically about the center line of the heat exchange member 100 in the second direction, the plurality of heat exchange flow channels can synchronously perform heat exchange with the battery assembly 200, thereby improving the heat exchange efficiency. Meanwhile, the temperature consistency in regions of the battery assembly 200 that have heat exchange with the two symmetrically arranged portions of the heat exchange member 100 can also be improved, thereby further improving the temperature uniformity effect of the battery assembly 200.

In some specific embodiments of the present application, the plurality of heat exchange flow channels are arranged asymmetrically about the center line of the heat exchange member 100 in the second direction. In this way, the plurality of heat exchange flow channels may be designed according to the actual situation of the battery assembly 200, such that the heat exchange member 100 can meet the heat exchange requirements of the battery assembly 200, thereby further ensuring the heat exchange effect of the battery assembly 200.

According to an example of the present application, as shown in FIG. 8, the plurality of heat exchange flow channels further include at least one second heat exchange flow channel 30. The second heat exchange flow channel 30 is arranged between two first heat exchange flow channels 10, and the structure of any second heat exchange flow channel 30 is the same as or different from the structure of the first heat exchange flow channel 10.

Specifically, the second heat exchange flow channel 30 is arranged between the two first heat exchange flow channels 10 and is mainly configured to perform heat exchange with the middle position of the battery assembly 200. The temperature of the battery units 201 arranged in the middle part is relatively uniform. Therefore, the structure of any second heat exchange flow channel 30 may be the same as or different from the structure of the first heat exchange flow channel 10. For example, the structure of the second heat exchange flow channel 30 may be a simple U-shaped structure. Furthermore, the structure of the second heat exchange flow channel 30 may be designed according to the actual heat exchange situation of the battery 1000.

In addition, one or a plurality of second heat exchange flow channels 30 may be provided. For example, one, two, three, or more second heat exchange flow channels 30 may be provided, and the number of the second heat exchange flow channels 30 may be selected according to the arrangement of the battery assembly 200.

In the above embodiment, by providing the at least one second heat exchange flow channel 30, the diversity of the arrangement of the heat exchange flow channels can be increased, enabling the heat exchange member 100 to better perform heat exchange with the battery assembly 200, thereby improving the heat exchange effect of the heat exchange member 100.

According to an example of the present application, as shown in FIG. 8, the second heat exchange flow channel 30 includes a plurality of fourth heat exchange sections 31. The plurality of fourth heat exchange sections 31 are sequentially connected in the fluid flow direction, the fourth heat exchange sections 31 extend in the second direction, and the plurality of fourth heat exchange sections 31 are spaced apart in the first direction.

Specifically, the plurality of fourth heat exchange sections 31 are sequentially connected to form a U-shaped heat exchange flow channel or an S-shaped heat exchange flow channel.

For example, two, three, or more fourth heat exchange sections 31 may be provided, and the number of the fourth heat exchange sections 31 may be designed according to the dimension of the battery assembly 200.

In the above embodiment, by configuring the second heat exchange flow channel 30 to include the plurality of fourth heat exchange sections 31 that are sequentially connected, the structural complexity of the second heat exchange flow channel 30 can be reduced, thereby reducing the production cost of the second heat exchange flow channel 30, and thus reducing the production cost of the heat exchange member 100.

According to an example of the present application, as shown in FIG. 9, the heat exchange member 100 is provided with a plurality of heat exchange flow channels. The plurality of heat exchange flow channels include one first heat exchange flow channel 10 and at least one third heat exchange flow channel 40. The third heat exchange flow channel 40 is arranged in a bent manner within the U-shaped region 120 of the first heat exchange flow channel 10, the first heat exchange flow channel 10 and the third heat exchange flow channel 40 are bent in the same plane, and bent structures of the first heat exchange flow channel 10 and the third heat exchange flow channel 40 are the same or different.

It can be understood that the bent structures of the first heat exchange flow channel 10 and the third heat exchange flow channel 40 may be the same or different. One or a plurality of third heat exchange flow channels 40 are provided. For example, one, two, three, or more third heat exchange flow channels 40 may be provided.

For example, as shown in FIG. 9, the plurality of heat exchange flow channels include one first heat exchange flow channel 10 and one third heat exchange flow channel 40, the structure of the third heat exchange flow channel 40 is the same as the structure of the first heat exchange flow channel 10, and the third heat exchange flow channel 40 is arranged in a bent manner within the U-shaped region 120 of the first heat exchange flow channel 10.

Specifically, the first heat exchange flow channel 10 and the third heat exchange flow channel 40 each include the first heat exchange portion 111, the second heat exchange portion 121, the third heat exchange portion 122, and the fourth heat exchange portion 125. A plurality of first heat exchange portions 111, third heat exchange portions 122, and fourth heat exchange portions 125 of the first heat exchange flow channel 10 and the third heat exchange flow channel 40 each extend in the X1 direction, and the second heat exchange portions 121 extend in the Y1 direction. The fourth heat exchange portion 125, the second heat exchange portion 121, and the third heat exchange portion 122 are sequentially connected in a bent manner to form a U-shaped structure with an opening facing a side distal to the coordinate origin in the X1 direction. A plurality of first heat exchange portions 111 are provided. The plurality of first heat exchange portions 111 are arranged within the U-shaped region 120, and are spaced apart in the Y1 direction and sequentially connected in a bent manner.

The third heat exchange portion 122 of the first heat exchange flow channel 10 is arranged on a side of the plurality of first heat exchange portions 111 distal to the coordinate origin in the Y1 direction, and the fourth heat exchange portion 125 is arranged on a side of the plurality of first heat exchange portions 111 proximal to the coordinate origin in the Y1 direction. The third heat exchange flow channel 40 is connected to the first heat exchange portion 111 at a position that is farthest from the coordinate origin in the Y1 direction. The third heat exchange portion 122 of the third heat exchange flow channel 40 is arranged on a side of the plurality of first heat exchange portions 111 proximal to the coordinate origin in the Y1 direction, and the fourth heat exchange portion 125 is arranged on a side of the plurality of first heat exchange portions 111 distal to the coordinate origin in the Y1 direction. The third heat exchange portion 122 of the third heat exchange flow channel 40 is connected to the first heat exchange portion 111 at a position that is closest to the coordinate origin in the Y1 direction. The third heat exchange flow channel 40 is arranged between the fourth heat exchange portion 125 of the first heat exchange flow channel 10 and the plurality of first heat exchange portions 111.

In addition, the first heat exchange flow channel 10 and the third heat exchange flow channel 40 each further include a first inlet/outlet section 15 and a second inlet/outlet section 17. The first inlet/outlet section 15 of the first heat exchange flow channel 10 is connected to the fourth heat exchange portion 125, and the second inlet/outlet section 17 is connected to the first heat exchange portion 111 at the position that is closest to the coordinate origin in the Y1 direction. The first inlet/outlet section 15 of the third heat exchange flow channel 40 is connected to the first heat exchange portion 111 at the position that is farthest from the coordinate origin in the Y1 direction, and the second inlet/outlet section 17 is connected to the fourth heat exchange portion 125.

In the above embodiment, by providing the plurality of heat exchange flow channels, the diversity of the heat exchange flow channels can be increased, such that the arrangement of the heat exchange flow channels can be designed according to the cooling requirements of the battery 1000, thereby further enhancing the heat exchange effect of the heat exchange member 100 and improving the temperature uniformity of the battery 1000.

According to an example of the present application, as shown in FIG. 10, the third heat exchange flow channel 40 includes a U-shaped region 120 with the same structure as the U-shaped region of the first heat exchange flow channel 10, and at least a portion of the first heat exchange section 11 of the first heat exchange flow channel 10 is arranged within the U-shaped region 120 of the third heat exchange flow channel 40.

It can be understood that only a portion of the first heat exchange section 11 of the first heat exchange flow channel 10 may be arranged within the U-shaped region 120 of the third heat exchange flow channel 40, or the entire first heat exchange section may be arranged within the U-shaped region 120 of the third heat exchange flow channel 40.

For example, as shown in FIG. 10, the plurality of heat exchange flow channels include one first heat exchange flow channel 10 and two third heat exchange flow channels 40, and the structure of the two third heat exchange flow channels 40 is the same as the structure of the first heat exchange flow channel 10.

Specifically, the first heat exchange flow channel 10 and the two third heat exchange flow channels 40 each include the first heat exchange portion 111, the second heat exchange portion 121, the third heat exchange portion 122, and the fourth heat exchange portion 125. The fourth heat exchange portion 125, the second heat exchange portion 121, and the third heat exchange portion 122 of any one of the first heat exchange flow channel 10 and the two third heat exchange flow channels 40 are sequentially connected in a bent manner to form a U-shaped structure with an opening facing a side distal to the coordinate origin in the X1 direction. A plurality of first heat exchange portions 111 are provided. The plurality of first heat exchange portions 111 are arranged within the U-shaped region 120, and the plurality of first heat exchange portions 111 extend linearly in the X1 direction, and are spaced apart in the Y1 direction and sequentially connected in a bent manner. The second heat exchange portion 121 extends in the Y1 direction, and the third heat exchange portion 122 and the fourth heat exchange portion 125 both extend in the X1 direction.

The third heat exchange portion 122 of the first heat exchange flow channel 10 is located on a side of the plurality of first heat exchange portions 111 distal to the coordinate origin in the Y1 direction, and is connected to the first heat exchange portion 111 at a position that is farthest from the coordinate origin in the Y1 direction. The fourth heat exchange portion 125 is located on a side of the plurality of first heat exchange portions 111 proximal to the coordinate origin in the Y1 direction.

The third heat exchange portion 122 of the third heat exchange flow channel 40a is located on the side of the plurality of first heat exchange portions 111 distal to the coordinate origin in the Y1 direction, and is connected to the first heat exchange portion 111 at the position that is farthest from the coordinate origin in the Y1 direction. The third heat exchange portion 122 of the third heat exchange flow channel 40a and the first heat exchange portion 111 of the third heat exchange flow channel 40a at the position that is farthest from the coordinate origin in the Y1 direction are located between the third heat exchange portion 122 of the first heat exchange flow channel 10 and the plurality of first heat exchange portions 111 of the first heat exchange flow channel 10. The plurality of first heat exchange portions 111 of the first heat exchange flow channel 10 are located between the first heat exchange portion 111 of the third heat exchange flow channel 40a at the position that is farthest from the coordinate origin in the Y1 direction and the second first heat exchange portion 111 of the third heat exchange flow channel 40a on a side distal to the coordinate origin in the Y1 direction.

The third heat exchange flow channel 40b is located between the fourth heat exchange portion 125 of the third heat exchange flow channel 40a and the plurality of first heat exchange portions 111 of the third heat exchange flow channel 40a. The fourth heat exchange portion 125 of the third heat exchange flow channel 40b is located on the side of the plurality of first heat exchange portions 111 of the third heat exchange flow channel 40b distal to the coordinate origin in the Y1 direction. The third heat exchange portion 122 of the third heat exchange flow channel 40b is connected to the first heat exchange portion 111 of the third heat exchange flow channel 40 at a position that is closest to the coordinate origin in the Y1 direction.

In addition, the first heat exchange flow channel 10 and the two third heat exchange flow channels 40 each further include a first inlet/outlet section 15 and a second inlet/outlet section 17. The first inlet/outlet section 15 and the second inlet/outlet section 17 are respectively connected to the fourth heat exchange portion 125 and the first heat exchange portion 111.

In the above embodiment, by configuring the third heat exchange flow channel 40 to include the U-shaped region 120 with the same structure as the U-shaped region of first heat exchange flow channel 10, and at least a portion of the first heat exchange section 11 of the first heat exchange flow channel 10 to be arranged within the U-shaped region 120 of the third heat exchange flow channel 40, at least a portion of the first heat exchange flow channel 10 and at least a portion of the third heat exchange flow channel 40 can be arranged in a winding manner relative to each other. As such, the winding method of the heat exchange flow channels can be provided according to the heat exchange requirements of various parts of the battery assembly 200, thereby further enhancing the heat exchange effect of the heat exchange member 100 and improving the temperature uniformity of the battery 1000.

According to an example of the present application, as shown in FIGs. 9 and 10, the U-shaped region 120 of the second heat exchange section 12 of the first heat exchange flow channel 10 is located at an outermost circumference of the heat exchange member 100.

That is, the U-shaped region 120 of the second heat exchange section 12 of the first heat exchange flow channel 10 is formed as the outermost heat exchange flow channel of the heat exchange member 100. In this way, the U-shaped region 120 of the first heat exchange flow channel 10 can be configured to perform heat exchange with the outer peripheral edge of the battery assembly 200, thereby improving the heat exchange effect on the peripheral edge of the battery assembly 200.

In the above embodiment, by configuring the U-shaped region 120 of the second heat exchange section 12 of the first heat exchange flow channel 10 to be located at the outermost circumference of the heat exchange member 100, the second heat exchange section 12 can perform heat exchange with the outer circumference of the battery 1000, which facilitates mitigating the temperature difference of the battery 1000 in different environments, thereby improving the service life of the battery 1000 to a certain extent.

According to an example of the present application, the heat exchange member 100 includes at least one heat exchange tube. In the case that a plurality of heat exchange tubes are provided, the plurality of heat exchange tubes are spaced apart in the first direction, and one heat exchange flow channel is defined in an inner side of each heat exchange tube.

For example, one, two, three, or more heat exchange tubes may be provided, and the number of the heat exchange tubes may be designed according to the dimension of the battery assembly 200.

Specifically, the heat exchange flow channel is defined within the heat exchange tube for the flow of the heat exchange fluid. The heat exchange tube may be in various shapes. For example, the heat exchange tube may be a round tube, a flat tube, or the like. Meanwhile, the heat exchange flow channel defined in the heat exchange tube may also be in various shapes. For example, the heat exchange flow channel may be a U-shaped heat exchange flow channel, a serpentine heat exchange flow channel, or the like.

Furthermore, the plurality of heat exchange tubes are arranged in parallel. For example, inlet ends of the plurality of heat exchange tubes are connected to a flow splitter cavity of the manifold 20, and outlet ends of the plurality of heat exchange tubes are all connected to a flow collection cavity of the manifold 20.

The plurality of heat exchange tubes may be sequentially arranged in the first direction. For example, the plurality of heat exchange tubes may be spaced apart in the Y1 direction. Certainly, the plurality of heat exchange tubes may also be arranged in a winding manner relative to each other. Furthermore, the plurality of heat exchange tubes may be arranged in a winding manner relative to each other in the same plane.

In the above embodiment, by configuring the heat exchange member 100 to include the at least one heat exchange tube, not only can the process complexity of the heat exchange member 100 be reduced, thereby improving the production rate of the heat exchange member 100, but also the fluid pressure drop in a single heat exchange tube can be reduced, thereby improving the heat exchange efficiency. In addition, the tubular structure is simpler than a plate-shaped structure, achieving lower costs and easier processing.

According to an example of the present application, the heat exchange tube may be formed by bending a single tube.

Being formed by bending a single tube means that the heat exchange tube may be formed by bending a single straight pipe a plurality of times through machining processes such as pressing and rolling. For example, the single straight pipe may be bent at a plurality of preset positions to form V-shapes, U-shapes, or the like at the bent positions. The bending shape of the single straight pipe may be designed according to the actual situation.

In the above embodiment, by configuring the heat exchange tube to be formed by bending a single tube, the number of welding spots on the heat exchange member 100 can be reduced, thereby reducing the risk of leakage in the heat exchange member 100 and improving the use reliability of the heat exchange member 100. Meanwhile, compared with a manufacturing process of the plate-shaped structure, the process of bending a single tube is simpler in operation, which can significantly reduce the cost of the heat exchange member 100.

According to an example of the present application, the heat exchange tube is bent in an arc shape at bent positions.

The arc-shaped bending can reduce the flow resistance of the fluid and reduce the pressure drop. Therefore, bending the heat exchange tube in an arc shape at the bent positions can increase the flow rate of the heat exchange fluid in the heat exchange flow channel, thereby enhancing the heat exchange efficiency of the heat exchange member 100.

In the above embodiment, by configuring the heat exchange tube to be bent in an arc shape at the bent positions, the flow resistance of the fluid can be reduced, and the pressure drop can be reduced, thereby increasing the flow rate of the heat exchange fluid in the heat exchange flow channel, and enhancing the heat exchange efficiency of the heat exchange member 100.

According to an example of the present application, as shown in FIG. 11, a bending angle of the heat exchange tube at the bent positions is less than 180°.

For example, the bending angle of the heat exchange tube at the bent positions may be 30°, 60°, 90°, 120°, 150°, or 179°.

In the above embodiment, by setting the bending angle of the heat exchange tube at the bent positions to be less than 180°, the probability of bending-induced damage of the heat exchange tube can be reduced.

According to an example of the present application, as shown in FIG. 11, the heat exchange tube is bent in a circular arc shape at the bent positions, and a ratio of a bending radius r of the heat exchange tube on a center line in a length direction to a width d of the heat exchange tube is greater than or equal to 0.6.

For example, the ratio of the bending radius r of the heat exchange tube on the center line in the length direction to the width d of the heat exchange tube may be 0.6, 0.8, 1.0, 1.2, 1.4, 1.6, 1.8, 2.0, or more.

It should be noted that during the bending of the heat exchange tube, under the action of internal compressive stress, the circular cross-section tends to become elliptical, resulting in a minor axis and a major axis. A tube bending machine may generate additional stress at the major axis, and a greater ellipticity, i.e., a greater bending angle, results in a smaller ratio of the bending radius to the width of the heat exchange tube, leading to a greater additional stress. This may even form a high-stress region, causing local plastic deformation which, upon reaching a certain extent, may lead to a reduction in the load carrying capacity of the bent tube and cause failure.

In the above embodiment, by setting the ratio of the bending radius r of the heat exchange tube on the center line in the length direction to the width d of the heat exchange tube to be greater than or equal to 0.6, the bending and stretching of the heat exchange tube are less likely to cause damage, thereby reducing the probability of damage to the heat exchange tube during bending, improving the structural strength of the heat exchange tube at the bent positions, and improving the sealing performance of the heat exchange tube at the bent positions.

According to an example of the present application, the ratio of the bending radius r of the heat exchange tube to the width d of the heat exchange tube is greater than or equal to 0.8.

For example, the ratio of the bending radius of the heat exchange tube to the width of the heat exchange tube may be 0.8, 1.0, 1.2, 1.4, 1.6, 1.8, 2.0, or more.

In the above embodiment, by setting the ratio of the bending radius of the heat exchange tube to the width of the heat exchange tube to be greater than or equal to 0.8, the probability of damage to the heat exchange tube during bending can be further reduced, further improving the structural strength of the heat exchange tube at the bent positions, and improving the sealing performance of the heat exchange tube at the bent positions.

According to an example of the present application, a wall thickness of the heat exchange tube at the bent positions is greater than or equal to 0.2 mm.

For example, the wall thickness of the heat exchange tube at the bent positions may be 0.2 mm, 0.3 mm, 0.4 mm, or more.

In the above embodiment, by setting the wall thickness of the heat exchange tube at the bent positions to be greater than or equal to 0.2 mm, the wall thickness of the heat exchange tube at the bent positions is not too thin, which facilitates ensuring the strength of the heat exchange tube at the bent positions, thereby effectively reducing the risk of leakage at the bent positions of the heat exchange tube, and improving the use reliability of the heat exchange tube.

According to an example of the present application, a thinning rate of the wall thickness of the heat exchange tube due to bending is less than or equal to 50% at the bent positions of the heat exchange tube.

The thinning rate due to bending is equal to a thickness loss due to extension of the heat exchange tube divided by an original thickness, multiplied by 100%.

For example, the thinning rate of the wall thickness of the heat exchange tube due to bending may be 2%, 5%, 10%, 20%, 30%, 40%, or 50%.

In the above embodiment, by setting the thinning rate of the wall thickness of the heat exchange tube due to bending to be less than or equal to 50%, the wall thickness loss of the heat exchange tube can be maintained within a preset range, such that the wall thickness of the heat exchange tube at the bent positions is not too thin, which facilitates ensuring the strength of the heat exchange tube at the bent positions, thereby effectively reducing the risk of leakage at the bent positions of the heat exchange tube, and improving the use reliability of the heat exchange tube.

According to an example of the present application, the thinning rate of the heat exchange tube due to bending is less than or equal to 30%.

For example, the thinning rate of the wall thickness of the heat exchange tube due to bending may be 2%, 5%, 10%, 20%, or 30%.

In the above embodiment, by setting the thinning rate of the heat exchange tube due to bending to be less than or equal to 30%, the wall thickness loss of the heat exchange tube after bending can be further reduced, further improving the strength of the heat exchange tube at the bent positions.

According to an example of the present application, the heat exchange tube may be a flat tube or a harmonica tube.

It can be understood that in some embodiments, the heat exchange tube is a flat tube, and in some other embodiments, the heat exchange tube is a harmonica tube. The flat tube refers to a heat exchange tube whose cross-section perpendicular to its extension direction is non-circular. For example, the cross-section of the heat exchange tube is elliptical, rectangular, or the like. The harmonica tube is a type of flat tube.

Specifically, the upper and lower surfaces of the flat tube are flat and have a large contact area, which can increase the heat transfer area of the heat exchange member 100, thereby enhancing the heat exchange effect of the heat exchange member 100. Meanwhile, the flat tube has a relatively lower weight with the same bending strength and torsional strength. Therefore, using the flat tube as the heat exchange tube can also reduce the overall weight of the heat exchange member 100, thereby improving the energy density of the battery 1000.

Furthermore, one heat exchange flow channel may be formed inside the flat tube, or a plurality of heat exchange flow channels may be formed by arranging a separation member inside the flat tube. For example, both the flat tube and the harmonica tube may be provided with separation ribs inside. The separation ribs may extend in the length direction of the flat tube or the harmonica tube and separate the heat exchange flow channel inside the flat tube or the harmonica tube into a plurality of flow sub-channels.

In the above embodiment, by configuring the heat exchange tube to be a flat tube or a harmonica tube, the heat transfer area of the heat exchange member 100 can be increased, thereby enhancing the heat exchange effect of the heat exchange member 100. Meanwhile, the overall weight of the heat exchange member 100 can also be reduced, thereby improving the energy density of the battery 1000.

According to an example of the present application, as shown in FIG. 11, the wall thickness m of the heat exchange tube may be 0.2 mm to 3 mm.

For example, the wall thickness m of the heat exchange tube may be 0.2 mm, 0.3 mm, 0.4 mm, 0.5 mm, 0.6 mm, 0.8 mm, 1.0 mm, 1.2 mm, 1.4 mm, 1.6 mm, 1.8 mm, 2.0 mm, 2.5 mm, or 3 mm.

In the above embodiment, by setting the wall thickness m of the heat exchange tube to be 0.2 mm to 3 mm, the heat exchange tube has an appropriate thickness, such that the wall thickness of the heat exchange tube is not excessively small, thereby ensuring the use strength of the heat exchange tube and effectively reducing the risk of damage to the heat exchange tube. In addition, the wall thickness of the heat exchange tube is not excessively large, which facilitates reducing the overall weight of the heat exchange tube, thereby reducing the overall weight of the battery 1000 and achieving lightweighting of the battery 1000.

According to an example of the present application, as shown in FIG. 11, the wall thickness m of the heat exchange tube may be 0.5 mm to 1.2 mm.

For example, the wall thickness m of the heat exchange tube may be 0.5 mm, 0.6 mm, 0.7 mm, 0.8 mm, 0.9 mm, 1.0 mm, 1.1 mm, or 1.2 mm.

In the above embodiment, by setting the wall thickness m of the heat exchange tube to be 0.5 mm to 1.2 mm, the strength of the heat exchange tube can be ensured while reducing the overall weight of the heat exchange tube, thereby achieving lightweighting of the battery 1000.

According to an example of the present application, the heat exchange member 100 may include a heat exchange plate, and the heat exchange flow channel may be formed on the heat exchange plate by stamping.

Stamping is a forming method that uses presses and molds to apply external forces to plates, strips, tubes, profiles, or the like, causing them to undergo plastic deformation or separation, thereby obtaining workpieces (stamped members) with required shapes and dimensions. In this way, the heat exchange member 100 does not require assembly, thereby reducing the number of components of the heat exchange member 100, reducing the assembly steps of the battery 1000, and improving the assembly rate of the battery 1000.

In the above embodiment, by configuring the heat exchange flow channel to be formed on the heat exchange plate by stamping, the process steps for the heat exchange member 100 can be reduced, thereby improving the production rate of the heat exchange member 100. Meanwhile, stamping is simple and has low material consumption, such that the production cost of the heat exchange member 100 can also be reduced.

According to an example of the present application, as shown in FIG. 11, the width f of the heat exchange flow channel may be 3 mm to 200 mm.

For example, the width f of the heat exchange flow channel may be 3 mm, 5 mm, 10 mm, 20 mm, 30 mm, 60 mm, 90 mm, 120 mm, 150 mm, 180 mm, or 200 mm. The width of the heat exchange flow channel may be designed according to the layout of the heat exchange flow channel and the width dimension of the battery cell 2011.

In the above embodiment, by setting the width f of the heat exchange flow channel to be 3 mm to 200 mm, the width of the heat exchange flow channel is not excessively large, which facilitates the layout of the heat exchange flow channel and can meet the heat exchange effect required by the heat exchange member 100. In addition, the width of the heat exchange flow channel is not excessively small, such that the number of arranged first heat exchange sections 11 can be reduced, thereby reducing the overall cost of the heat exchange member 100.

According to an example of the present application, the width f of the heat exchange flow channel is 5 mm to 80 mm.

For example, the width f of the heat exchange flow channel may be 5 mm, 10 mm, 15 mm, 20 mm, 30 mm, 40 mm, 50 mm, 60 mm, 70 mm, or 80 mm.

In the above embodiment, by setting the width f of the heat exchange flow channel to be 5 mm to 80 mm, the layout of the heat exchange flow channel is facilitated and the heat exchange effect required by the heat exchange member 100 can be met. Meanwhile, the number of arranged first heat exchange sections 11 can be reduced, thereby reducing the overall cost of the heat exchange member 100.

According to an example of the present application, the height of the heat exchange flow channel in a third direction is 1 mm to 20 mm.

For example, the third direction may refer to the direction from top to bottom as shown in FIG. 3. The height of the heat exchange flow channel in the third direction may be 1 mm, 2 mm, 3 mm, 4 mm, 6 mm, 8 mm, 10 mm, 12 mm, 14 mm, 16 mm, 18 mm, or 20 mm.

In the above embodiment, by setting the height of the heat exchange flow channel in the third direction to be 1 mm to 20 mm, the height of the heat exchange member 100 is not excessively small, thereby ensuring the flow of the heat exchange fluid in the heat exchange member 100, and ensuring the heat exchange effect of the heat exchange member 100. Meanwhile, the height of the heat exchange member 100 is not excessively large, which facilitates reducing the occupied space of the heat exchange member 100 and achieving the miniaturization of the battery 1000.

According to an example of the present application, the height of the heat exchange flow channel in the third direction is 4 mm to 6 mm.

For example, the height of the heat exchange flow channel in the third direction may be 4 mm, 5 mm, or 6 mm.

In the above embodiment, by setting the height of the heat exchange flow channel in the third direction to be 4 mm to 6 mm, the heat exchange effect of the heat exchange member 100 can be ensured while the occupied space of the heat exchange member 100 can be reduced, thereby achieving the miniaturization of the battery 1000.

According to an example of the present application, the number of the heat exchange flow channels is 2 to 4.

For example, the number of the heat exchange flow channels may be 2, 3, or 4, and the number of the heat exchange flow channels may be designed according to actual requirements.

In the above embodiment, by setting the number of the heat exchange flow channels to be 2 to 4, the length of a single heat exchange flow channel can be reduced, thereby reducing the friction resistance of the heat exchange flow channel, reducing the pressure drop, and thus improving the heat exchange efficiency of the heat exchange member 100.

The manifold 20 according to the embodiments of the present application is described below with reference to FIGs. 12 and 13. FIG. 12 is a schematic diagram of the manifold 20 according to an embodiment of the present application. FIG. 13 is a schematic diagram of the manifold 20 from another angle according to an embodiment of the present application.

According to an example of the present application, as shown in FIGs. 12 and 13, the heat exchange member 100 may further include a manifold 20. The manifold 20 includes: a tube body 21, a plurality of first flow channel interfaces 22, a plurality of second flow channel interfaces 23, and a separation structure 24. The plurality of first flow channel interfaces 22 are in one-to-one correspondence with and connected to first inlets/outlets of the plurality of heat exchange channels. The plurality of second flow channel interfaces 23 are in one-to-one correspondence with and connected to second inlets/outlets of the plurality of heat exchange channels. At least two second flow channel interfaces 23 are respectively located on two sides of the plurality of first flow channel interfaces 22 in an extension direction of the tube body 21. The separation structure 24 is arranged inside the tube body 21, the separation structure 24 separates the first flow channel interfaces 22 from the second flow channel interfaces 23 inside the tube body 21, and the plurality of second flow channel interfaces 23 are in communication with each other inside the tube body 21.

Specifically, the tube body 21 is configured to collect and split the heat exchange fluid. The first flow channel interfaces 22 and the second flow channel interfaces 23 are arranged on the tube body 21, and the first flow channel interfaces 22 and the second flow channel interfaces 23 are separately connected to the inlets/outlets of the heat exchange flow channels for inputting and outputting the heat exchange fluid to and from the manifold pipes. The separation structure 24 is arranged inside the tube body 21 and separates the first flow channel interfaces 22 from the second flow channel interfaces 23 inside the tube body 21, that is, the first flow channel interfaces 22 and the second flow channel interfaces 23 are not in communication with each other inside the tube body 21. This allows the first flow channel interfaces 22 and the second flow channel interfaces 23 to serve as an input end and an output end of the heat exchange flow channels, respectively, enabling the tube body 21 and the heat exchange flow channels to form a complete passage, such that the liquid can enter the heat exchange flow channels from the tube body 21 for heat exchange and then be discharged from the tube body 21 to complete the heat exchange task. Therefore, the liquid inlet and liquid outlet tasks can be completed by using a single tube body 21, thereby reducing the number of manifold pipes used, and thus reducing the production cost and the occupied space of heat exchange management assemblies.

In addition, a plurality of first flow channel interfaces 22 and a plurality of second flow channel interfaces 23 are provided. For example, two, three, or more first flow channel interfaces 22 and two, three, or more second flow channel interfaces 23 may be provided. The plurality of second flow channel interfaces 23 are in communication with each other inside the tube body 21. At least two second flow channel interfaces 23 are respectively located on two sides of the first flow channel interfaces 22 in the extension direction of the tube body 21, that is, the at least two second flow channel interfaces 23 are arranged at two ends of the tube body 21, and the plurality of first flow channel interfaces 22 are arranged between the at least two second flow channel interfaces 23. In this way, the heat exchange fluid may flow out of the tube body 21 from the second flow channel interfaces 23 on the two sides, perform heat exchange, and then flow back to the tube body 21 from the first flow channel interfaces 22 in the central part; or the heat exchange fluid may flow out of the tube body 21 from the first flow channel interfaces 22 in the central region of the tube body 21, perform heat exchange, and then flow back to the tube body 21 from the second flow channel interfaces 23 at the two ends of the tube body 21. In this way, the heat exchange fluid can flow from the periphery of the battery 1000 to the central region to achieve heat exchange, and the heat exchange fluid can also flow from the central region of the battery 1000 to the periphery to achieve heat exchange, thereby improving the temperature uniformity of the battery 1000, reducing the assembly steps and the mounting space of the heat management assemblies, improving the temperature uniformity effect of the battery 1000, and prolonging the service life of the battery 1000.

In the above embodiment, by providing the manifold 20, separating the plurality of first flow channel interfaces 22 from the plurality of second flow channel interfaces 23 by the separation structure 24, and configuring the plurality of second flow channel interfaces 23 to be in communication with each other inside the tube body 21, the first flow channel interfaces 22 and the second flow channel interfaces 23 can be separately formed as the input end and the output end of the heat exchange flow channels, such that the liquid inlet and liquid outlet tasks can be completed by using a single tube body 21, thereby reducing the number of manifold pipes used. Meanwhile, the use of external communicating pipelines can also be reduced, thereby reducing the production cost and the occupied space of the heat exchange management assemblies, and reducing the assembly steps and the mounting space of the heat management assemblies. In addition, since the plurality of second flow channel interfaces 23 are provided and at least two second flow channel interfaces 23 are located on two sides of the first flow channel interfaces 22, the heat exchange fluid can flow from the periphery of the battery 1000 to the central region to achieve heat exchange, and the heat exchange fluid can also flow from the central region of the battery 1000 to the periphery to achieve heat exchange, thereby improving the temperature uniformity of the battery 1000 and prolonging the service life of the battery 1000.

According to an example of the present application, as shown in FIGs. 12 and 13, the tube body 21 is separated by the separation structure 24 into a first space 211 and a second space 212 that are independent of each other. The first space 211 is in communication with the first flow channel interfaces 22, and the second space 212 is in communication with the second flow channel interfaces 23. The second space 212 includes a first segment, a second segment, and a third segment that are sequentially in communication with each other in the extension direction of the tube body 21, the first segment and the third segment are respectively located on two sides of the first space 211, and the second segment is arranged side by side with the first space 211.

The first space 211 and the second space 212 are independent of each other and not in communication with each other, thus forming two independent flow channels. The second space 212 includes the first segment, the second segment, and the third segment that are sequentially in communication with each other. The first segment and the third segment are each provided with the second flow channel interfaces 23. The second space 212 allows the plurality of second flow channel interfaces 23 to be in communication with each other. The first space 211 and the second segment are arranged side by side. The first space 211 is in communication with the first flow channel interfaces 22. Thus, the first flow channel interfaces 22 are arranged at a middle position of the plurality of second flow channel interfaces 23.

For example, as shown in FIG. 12, two first flow channel interfaces 22 and two second flow channel interfaces 23 are provided. The two second flow channel interfaces 23 are arranged on two sides of the two first flow channel interfaces 22. The second space 212 is C-shaped in the length direction of the tube body 21. The first space 211 is arranged in parallel with the second segment and is arranged between the first segment and the third segment.

In the above embodiment, by configuring the first space 211 and the second space 212 to be independent of each other and not in communication with each other, two independent flow channels can be formed inside the tube body 21, such that the inlet and the outlet of the heat exchange fluid do not interfere with each other. Meanwhile, the first space 211 and the second space 212 are arranged side by side, such that the dimension of the tube body 21 can be reduced, thereby reducing the occupied space of the manifold pipes.

According to an example of the present application, as shown in FIGs. 12 and 13, the separation structure 24 includes a first separation plate 241 and a second separation plate 242. The first separation plate 241 is configured to separate the second segment from the first space 211, at least two second separation plates 242 are provided and located at two ends of the first separation plate 241 in the extension direction of the tube body 21, respectively, and the second separation plates 242 are configured to separate the first segment from the first space 211, and separate the third segment from the first space 211.

Specifically, the first separation plate 241 may be formed as a plate body with a certain dimension, and the dimension of the first separation plate 241 may be set according to the positions and dimensions of the tube body 21 and the first flow channel interfaces 22. The first separation plate 241 extends in the length direction of the tube body 21 (e.g., the Y1 direction shown in FIG. 12), with two ends of the first separation plate 241 in the width direction being in sealing connection with the inner wall surface of the tube body 21, and is configured to separate the second segment from the first space 211 in the width direction of the tube body 21 (e.g., the X1 direction shown in FIG. 13), such that the second segment and the first space 211 are arranged side by side in the width direction of the tube body 21.

At least two second separation plates 242 are provided, that is, two, three, or more second separation plates 242 may be provided. When only two second separation plates 242 are provided, the second separation plates 242 are respectively located at two ends of the first separation plate 241 in the length direction, and are in sealing connection with the first separation plate 241 and the inner wall surface of the tube body 21, such that the first space 211 and the second space 212 are completely independent of each other and not in communication with each other.

In the above embodiment, by providing the first separation plate 241 and the second separation plates 242, two independent spaces can be formed inside the tube body 21, such that the inflow and the outflow of the liquid do not interfere with each other, thereby improving the heat exchange effect of the battery 1000.

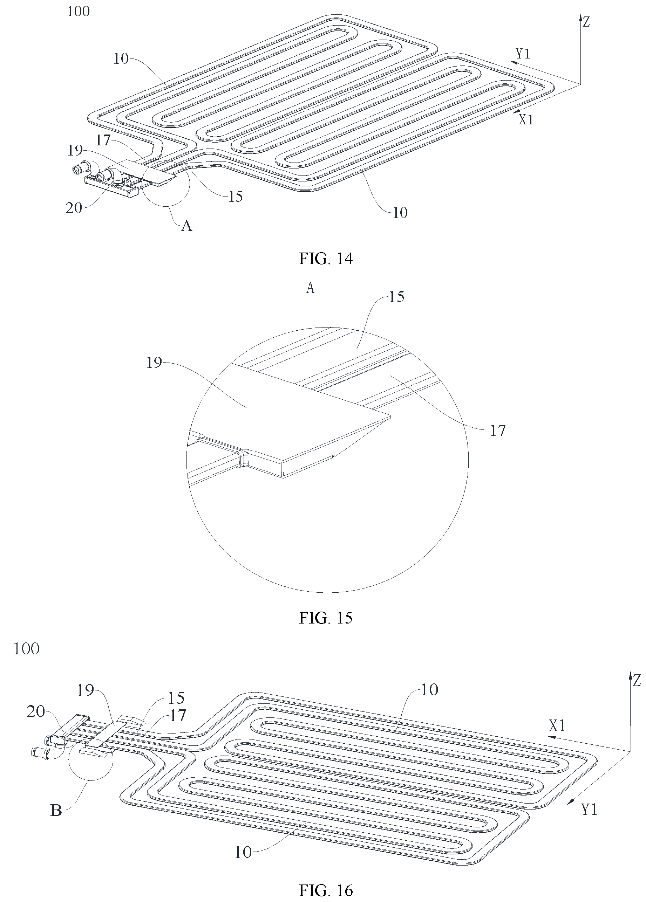

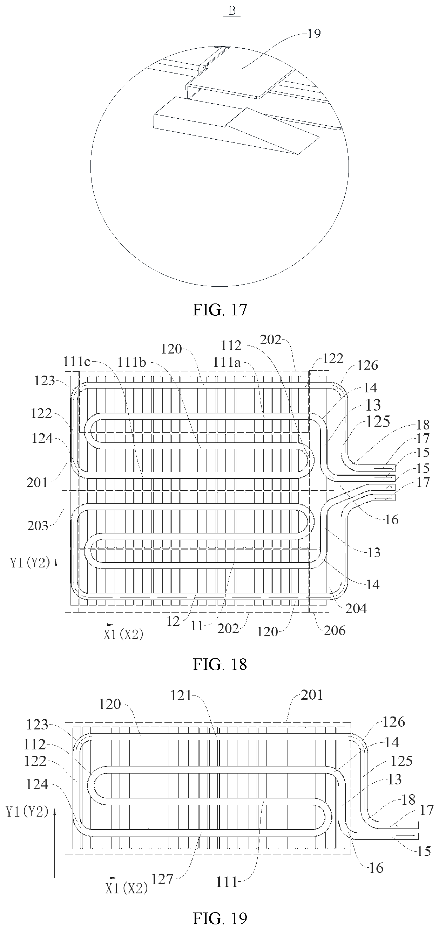

The mounting member 19 according to the embodiments of the present application is described below with reference to FIGs. 14 to 17. FIG. 14 is a schematic diagram of a heat exchange member 100 according to another embodiment of the present application. FIG. 15 is an enlarged view of the circled portion A in FIG. 14. FIG. 16 is a schematic diagram of the heat exchange member 100 shown in FIG. 14 from another angle. FIG. 17 is an enlarged view of the circled portion B in FIG. 16.

According to an example of the present application, as shown in FIGs. 14 to 17, the heat exchange member 100 further includes: a first tube portion, a second tube portion, and a mounting member 19.

One end of the first tube portion is formed as the first inlet/outlet of the heat exchange flow channel, and one end of the second tube portion is formed as the second inlet/outlet of the heat exchange flow channel.

Specifically, the first tube portion and the second tube portion are mainly configured for the manifold 20, to provide the heat exchange fluid to the heat exchange flow channel or discharge the heat exchange fluid after heat exchange, such that the heat exchange member 100 can achieve heat exchange. Both the first inlet/outlet and the second inlet/outlet can be configured for the inlet and outlet of the heat exchange fluid. When the first inlet/outlet serves as the liquid inlet end for the heat exchange fluid, the second inlet/outlet serves as the liquid outlet end for the heat exchange fluid. When the first inlet/outlet serves as the liquid outlet end for the heat exchange fluid, the second inlet/outlet serves as the liquid inlet end for the heat exchange fluid.

The mounting member 19 is configured to be in sealing connection with a case 300 of the battery 1000. Through holes communicating with spaces on two sides of the mounting member 19 are formed in the mounting member 19, and the first tube portion and/or the second tube portion pass through the through holes and are in sealing connection with the peripheral edges of the through holes. That is, at least one of the first tube portion and the second tube portion passes through the through hole and is in sealing connection with the through hole.

Specifically, the spaces on the two sides of the mounting member 19 are separately a space where the heat exchange member 100 is placed and a space where the first inlet/outlet and the second inlet/outlet are connected to the external pipeline. The mounting member 19 is configured to be in sealing connection with the case 300 of the battery 1000, such that the spaces on the two sides of the mounting member 19 can be independent of each other. In this way, when leakage occurs at the joint between the first and second inlets/outlets and the manifold 20, the heat exchange fluid will not enter the space where the heat exchange member 100 is placed, thereby effectively reducing the risk of corrosion of the heat exchange member 100.

In the prior art, to reduce the risk of corrosion of the heat exchange member 100, the gaps between the first and second pipelines and the case 300 are usually sealed. This requires a large amount of sealing structural adhesive and considerable manpower, resulting in low production efficiency and a high production cost of the battery 1000.

In the above embodiment, the mounting member 19 is sealed with the case 300 after the mounting member 19 is sealed with the first and second pipelines. This not only increases the structural strength at the positions of the first and second pipelines, but also reduces the labor and materials required for sealing, thereby improving the production rate of the battery 1000 and reducing the labor cost for producing the battery 1000.

In the above embodiment, by providing the mounting member 19, it is not necessary to separately seal the first tube portion and the second tube portion with the case 300 during the assembly of the battery 1000, which can reduce the labor and materials required for the assembly of the battery 1000, thereby improving the production rate of the battery 1000 and reducing the labor cost for producing the battery 1000.

According to an example of the present application, as shown in FIGs. 14 to 17, the mounting member 19 is provided with a cavity with one side open, the mounting member 19 is provided with a mounting plate arranged opposite to an opening of the cavity, the through holes penetrate through the mounting plate, the mounting member 19 is adapted to be arranged between a case body 401 and a bottom protective plate 302 of the case 300, and an outer peripheral surface of the mounting member 19 is adapted to be in sealing connection with the case body 401 and the bottom protective plate 302.

The mounting member 19 is provided with the cavity with one side open. It should be noted that the open side of the mounting member 19 may face a side of the space where the first inlet/outlet and the second inlet/outlet are located, or may face a side of a space facing away from the first inlet/outlet and the second inlet/outlet.

Furthermore, the open side of the mounting member 19 faces the side of the space facing away from the first inlet/outlet and the second inlet/outlet. For example, the opening of the cavity is arranged away from the manifold 20, which can effectively prevent dust and other impurities from accumulating inside the mounting member 19.

The mounting member 19 is adapted to be arranged between the case body 401 and the bottom protective plate 302, that is, the heat exchange member 100 is arranged between the bottom wall of the case body 401 and the protection plate, that is, the heat exchange member 100 is arranged on the outer side of the case body 401, which can effectively reduce the risk of damage to the battery cells 2011 due to leakage of the heat exchange member 100. In addition, the bottom protective plate 302 is arranged on the lower side of the case body 401, which can further increase the structural strength of the bottom of the battery 1000, increase the carrying strength of the bottom plate, and meanwhile, protect against bottom impacts, thereby effectively reducing the risk of safety problems for the plurality of battery cells 2011 and the heat exchange member 100 due to bottom impacts.

The outer peripheral surface of the mounting member 19 is adapted to be in sealing connection with the case body 401 and the bottom protective plate 302. It should be noted that the outer peripheral surface of the mounting member 19 may be designed according to the specific structures of the case body 401 and the bottom protective plate 302. For example, the bottom of the case body 401 and the bottom protective plate 302 are both flat plates, and the outer peripheral surface of the mounting member 19 is also formed in a flat plate shape, such that the mounting member can be in sealing connection with the bottom plate and the bottom protective plate 302, thereby improving the sealing performance of the bottom plate and the bottom protective plate 302.

For example, as shown in FIGs. 14 to 17, the mounting member 19 includes a first plate, a second plate, and a mounting plate. The mounting plate is vertically arranged, the first plate is horizontally arranged and connected to one end of the mounting plate in the Z direction, the second plate is horizontally arranged and connected to the other end of the mounting plate in the Z direction, and the first plate and the second plate are located on the same side of the mounting plate in a thickness direction and are spaced apart in the Z direction. A plurality of through holes are formed in the mounting plate, which are separately a first through hole and a second through hole. The first tube portion is provided in the first through hole in a penetrating manner, and the second tube portion is provided in the second through hole in a penetrating manner.

Furthermore, the first tube portion is connected to the peripheral edge of the first through hole by welding, and the second tube portion is connected to the peripheral edge of the second through hole by welding.

Furthermore, one or a plurality of first through holes are provided, and the first through holes are in one-to-one correspondence with the first tube portions. One or a plurality of second through holes are provided, and the second through holes are arranged in one-to-one correspondence with the second tube portions.

Furthermore, one end of the first plate is connected to the mounting plate and the other end of the first plate extends toward the first heat exchange section 11, and one end of the second plate is connected to the mounting plate and the other end of the second plate extends toward the first heat exchange section 11. Still further, in a direction from the mounting member 19 toward the first heat exchange section 11, the length of the first plate is different from the length of the second plate. For example, the length of the first plate is less than the length of the second plate. Specifically, the length of the first plate is less than two-thirds of the length of the second plate.

Furthermore, the first plate, the second plate, and the mounting plate are integrally formed.

Furthermore, the mounting member 19 further includes stopper blocks. The stopper blocks are arranged at two ends of the mounting plate in a length direction, and the stopper blocks are connected to and in sealing connection with each of the mounting plate, the first plate, and the second plate. For example, the stopper blocks may be connected to each of the mounting plate, the first plate, and the second plate by welding or an adhesive. The mounting plate, the first plate, the second plate, and the two stopper blocks enclose the cavity.

The surface of the stopper block on a side facing away from the mounting plate is formed as an inclined surface, the length of the first plate is less than the length of the second plate, an end of the inclined surface facing the first plate is flush with an end of the first plate facing away from the mounting plate, and the other end of the inclined surface extends obliquely to an end of the second plate facing away from the mounting plate in a direction from the first plate toward the second plate.

In addition, it should be further noted that a sealing member is provided at a peripheral edge of the heat exchange member 100. The sealing member extends in the circumferential direction of the heat exchange member 100. The sealing member extends in an annular shape, or after the sealing member surrounds the heat exchange member 100, two ends of the sealing member are connected to the mounting member 19. The sealing member may be a sealant.

In the above embodiment, by configuring the mounting member 19 to be provided with the cavity with one side open, the overall weight of the mounting member 19 can be reduced, thereby reducing the overall weight of the entire battery 1000 and achieving lightweighting of the battery 1000. Meanwhile, by configuring the mounting member 19 to be adapted to be arranged between the case body 401 and the bottom protective plate 302 of the case 300, the bottom of the case body 401 can isolate the heat exchange member 100 from a plurality of battery cells 2011. Therefore, the damage of the heat exchange member 100 will not affect the plurality of battery cells 2011, thereby reducing the cost of maintenance of the battery 1000.

Referring to FIGs. 4 to 8 again, in an embodiment of the present application, the battery 1000 is provided with the heat exchange member 100 according to the embodiments of the first aspect. The second heat exchange section 12 of the heat exchange member 100 is bent to form the U-shaped region 120, and the first heat exchange section 11 is arranged in a bent manner within the U-shaped region 120. When the heat exchange member 100 is used for heat exchange with the battery assembly 200, the U-shaped region 120 formed by the peripheral second heat exchange section 12 may be aligned with the peripheral battery cells of the battery, and the first heat exchange section 11 within the U-shaped region 120 may be aligned with the internal battery cells. This allows the heat exchange member 100 to compensate for the internal and external temperature difference caused by heat exchange between the peripheral battery cells 2011 and the environment, such that the heat exchange effects of the battery cells 2011 at the periphery of the battery assembly 200 and the battery cells 2011 inside the battery assembly 200 tend to be consistent, improving the temperature uniformity of the battery 1000, thereby improving the service life of the battery 1000 to a certain extent, and improving the overall performance of the battery 1000.

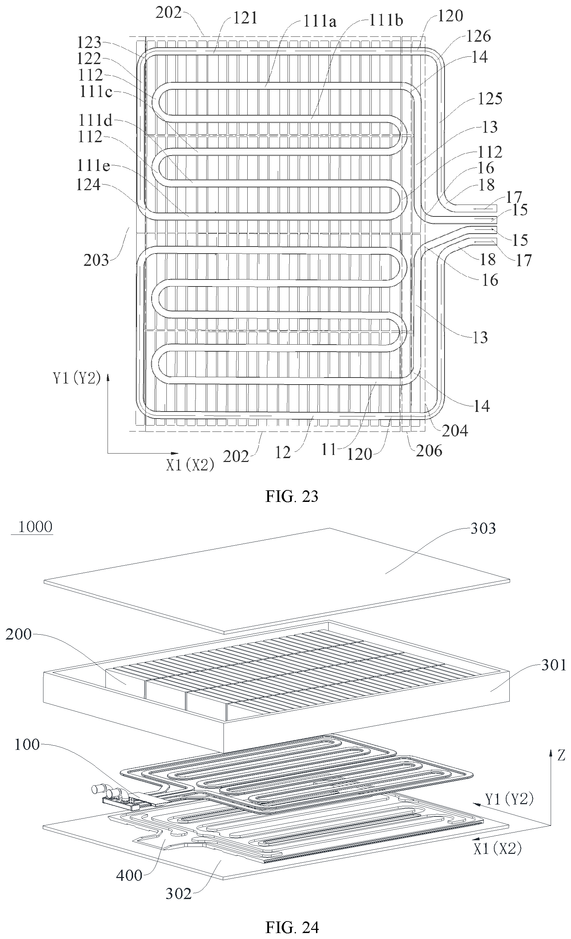

According to an example of the present application, as shown in FIGs. 18 to 24, the battery 1000 specifically includes a battery assembly 200. The battery assembly 200 includes a battery unit 201. The battery unit 201 includes a plurality of battery cells 2011 sequentially stacked in a third direction (e.g., the X2 direction shown in FIG. 24). The heat exchange member 100 is arranged on a side of the battery assembly 200 in a fourth direction (e.g., the Z direction shown in FIG. 24) and performs heat exchange with the battery assembly 200. The third direction and the fourth direction are arranged at an included angle.

Specifically, the battery assembly 200 is mainly configured to store and release energy, and is a core component of the battery 1000. The heat exchange member 100 is configured to perform heat exchange with the battery assembly 200, such that the temperature of the battery assembly 200 can be maintained within a safe operating temperature range, thereby improving the use reliability and service life of the battery assembly 200.

In addition, the description "the third direction and the fourth direction are arranged at an included angle" is intended to illustrate that the third direction and the fourth direction may be arranged perpendicularly. For example, as shown in FIG. 24, the third direction may be a thickness direction of the battery cells 2011, i.e., the X2 direction shown in FIG. 24, and the fourth direction may be a height direction of the battery cells 2011, i.e., the Z direction shown in FIG. 24. Therefore, the plurality of battery cells 2011 are stacked in the thickness direction of the battery cells 2011 to form the battery unit 201. The heat exchange member 100 is arranged on a side of the battery assembly 200 in the height direction for heat exchange with the battery assembly 200. Alternatively, the third direction and the fourth direction may only intersect non-perpendicularly. For example, the third direction and the fourth direction may be arranged at an angle of 30°, 60°, or 80°.

Optionally, one or a plurality of battery units 201 may be provided. For example, one, two, three, or more battery units 201 may be provided.

In the above embodiment, by configuring the heat exchange member 100 to be arranged on the side of the battery assembly 200 in the fourth direction and perform heat exchange with the battery assembly 200, the temperature of the battery assembly 200 can be maintained within a safe operating temperature range, thereby improving the use reliability and service life of the battery assembly 200

According to an example of the present application, as shown in FIGs. 4 and 18, a plurality of battery cells 2011 located at an outermost circumferential periphery of the battery assembly 200 form a peripheral battery cell group, and at least a portion of the second heat exchange section 12 is attached to the peripheral battery cell group.

It can be understood that the second heat exchange section 12 may be at least partially attached to the peripheral battery cell group, or may be entirely attached to the peripheral battery cell group. Since the peripheral edge of the battery assembly 200 dissipates more heat to the environment, the temperature of the peripheral battery cell group is lower than the temperature of the internal battery cells. The temperature of the heat exchange fluid in the second heat exchange section 12 is always the highest. Therefore, by configuring at least the portion of the second heat exchange section 12 to be attached to the peripheral battery cell group, the heat exchange efficiency of the peripheral battery cell group can be improved, thereby further balancing the temperature difference in the battery assembly 200 caused by heat dissipation.

In the above embodiment, by configuring at least the portion of the second heat exchange section 12 to be attached to the peripheral battery cell group, the heat exchange efficiency of the peripheral battery cell group can be improved, thereby further balancing the temperature difference in the battery assembly 200 caused by heat dissipation.

According to an example of the present application, as shown in FIGs. 7 and 19, the battery assembly 200 includes one battery unit 201, and all battery cells 2011 of the battery unit 201 jointly form the peripheral battery cells; or the battery assembly 200 includes a plurality of battery units 201, the plurality of battery units 201 are sequentially arranged in a fifth direction (e.g., the Y2 direction shown in FIG. 19), and a plurality of battery cells 2011, located at an outermost periphery of the battery assembly 200, of the plurality of battery units 201 jointly form the peripheral battery cells. The third direction, the fourth direction, and the fifth direction are arranged at an included angle to each other.

The number of the battery units 201 included in the battery assembly 200 may be designed according to the actual situation. One or a plurality of battery units 201 may be provided. For example, one, two, three, or more battery units 201 may be provided.

Specifically, when the battery assembly 200 includes one battery unit 201 and all the battery cells 2011 of the battery unit 201 jointly form the peripheral battery cells, the entire second heat exchange section 12 and the first heat exchange section 11 both perform heat exchange with the peripheral battery cells. Specifically, the second heat exchange section 12 performs heat exchange with the peripheral edge of the peripheral battery cells, and the first heat exchange section 11 performs heat exchange with the middle position of the peripheral battery cells.

When the battery assembly 200 includes the plurality of battery units 201, the plurality of battery cells 2011, located at the outermost periphery of the battery assembly 200, of the plurality of battery units 201 jointly form the peripheral battery cells, such that the heat exchange position of the second heat exchange section 12 can be defined, which facilitates the layout of the heat exchange flow channel.

In the above embodiment, by configuring all the battery cells 2011 of the battery unit 201 to jointly form the peripheral battery cells in the case that the battery assembly 200 includes one battery unit 201, the entire second heat exchange section 12 and the first heat exchange section 11 both perform heat exchange with the peripheral battery cells, such that the specific structure and layout of the second heat exchange section 12 and the first heat exchange section 11 are not limited, thereby reducing the layout complexity of the first heat exchange flow channel 10. By configuring the plurality of battery cells 2011, located at the outermost periphery of the battery assembly 200, of the plurality of battery units 201 to jointly form the peripheral battery cells, the heat exchange position of the second heat exchange section 12 can be defined, which facilitates the layout of the heat exchange flow channel.

In the above embodiment, by configuring the plurality of battery cells 2011, located at the outermost periphery of the battery assembly 200, of the plurality of battery units 201 to jointly form the peripheral battery cells, the heat exchange position of the second heat exchange section 12 can be defined, which facilitates the layout of the heat exchange flow channel.

Referring to FIGs. 4 and 18 again, the peripheral battery cell group includes a first group of battery cells 202, a second group of battery cells 203, and a third group of battery cells 204 that are arranged adjacently. A plurality of battery cells 2011 included in the first group of battery cells 202 are stacked in the third direction, a plurality of battery cells 2011 included in the second group of battery cells 203 are stacked in the fifth direction, and a plurality of battery cells 2011 included in the third group of battery cells 204 are stacked in the fifth direction.

For example, as shown in FIG. 18, the third direction may be the thickness direction of the battery cells 2011, i.e., the X2 direction shown in FIG. 18, and the fifth direction may be the length direction of the battery cells 2011, i.e., the Y2 direction shown in FIG. 18. Therefore, the plurality of battery cells 2011 included in the first group of battery cells 202 are stacked in the thickness direction of the battery cells 2011, the plurality of battery cells 2011 included in the second group of battery cells 203 are stacked in the length direction of the battery cells 2011, and the plurality of battery cells 2011 included in the third group of battery cells 204 are stacked in the length direction of the battery cells 2011. As shown in FIG. 18, the first group of battery cells 202 is arranged at one of two ends of the battery assembly 200 in the Y2 direction; the second group of battery cells 203 and the third group of battery cells 204 are respectively arranged at two ends of the battery assembly 200 in the X1 direction.

The second heat exchange section 12 includes a second heat exchange portion 121, a third heat exchange portion 122, and a fourth heat exchange portion 125 that are connected. The second heat exchange portion 121 extends and is attached to the first group of battery cells 202 to enable heat exchange, and/or the third heat exchange portion 122 extends and is attached to the second group of battery cells 203 to enable heat exchange, and/or the fourth heat exchange portion 125 extends and is attached to the third group of battery cells 204 to enable heat exchange.

It can be understood that when the second heat exchange section 12 is attached to the peripheral battery cells for heat exchange, only one of the second heat exchange portion 121, the third heat exchange portion 122, or the fourth heat exchange portion 125 may be attached to the peripheral battery cells. For example, the second heat exchange portion 121 is attached to the first group of battery cells 202 for heat exchange, or the third heat exchange portion 122 is attached to the second group of battery cells 203 for heat exchange, or the fourth heat exchange portion 125 is attached to the third group of battery cells 204 for heat exchange. Alternatively, two of the second heat exchange portion 121, the third heat exchange portion 122, or the fourth heat exchange portion 125 may be attached to the peripheral battery cells. For example, the second heat exchange portion 121 is attached to the first group of battery cells 202 for heat exchange and the third heat exchange portion 122 is attached to the second group of battery cells 203 for heat exchange, or the second heat exchange portion 121 is attached to the first group of battery cells 202 for heat exchange and the fourth heat exchange portion 125 is attached to the third group of battery cells 204 for heat exchange, or the third heat exchange portion 122 is attached to the second group of battery cells 203 for heat exchange and the fourth heat exchange portion 125 is attached to the third group of battery cells 204 for heat exchange. Further alternatively, the second heat exchange portion 121, the third heat exchange portion 122, and the fourth heat exchange portion 125 may all be attached to the peripheral battery cells. For example, the second heat exchange portion 121 is attached to the first group of battery cells 202 for heat exchange, the third heat exchange portion 122 is attached to the second group of battery cells 203 for heat exchange, and the fourth heat exchange portion 125 is attached to the third group of battery cells 204 for heat exchange.

In the above embodiment, since the first group of battery cells 202, the second group of battery cells 203, and the third group of battery cells 204 are all peripheral battery cell groups, and the peripheral battery cell groups are arranged at the outermost periphery of the battery assembly 200 and closest to the side wall of the case 300 of the battery, and exchange more heat with the environment and thus have a lower temperature than the battery cells at other positions, by configuring at least one of the second heat exchange portion 121, the third heat exchange portion 122, and the fourth heat exchange portion 125 to be attached to the peripheral battery cells for heat exchange, the heat exchange member 100 can stably and reliably cool or heat the peripheral battery cell group, such that the battery assembly 200 can achieve a good heat exchange effect, and the temperature distribution in the battery assembly 200 is more uniform, thereby enabling the operation of the battery 1000 to be more stable.

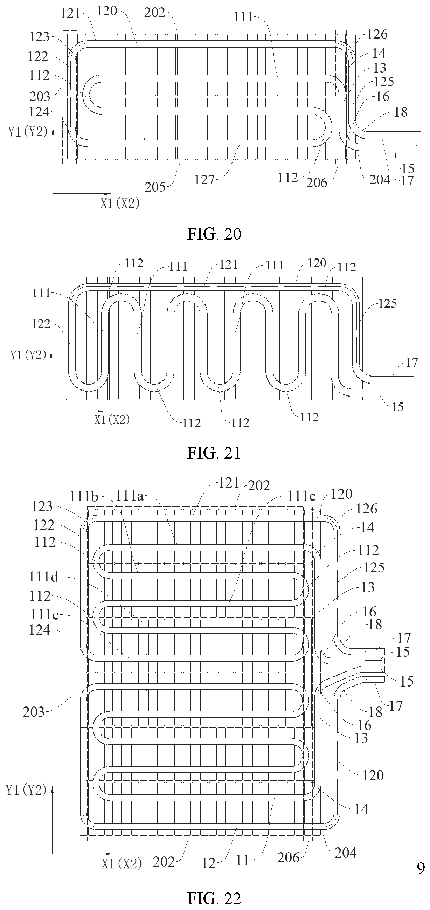

According to an example of the present application, as shown in FIG. 20, the peripheral battery cells further include a fourth group of battery cells 205. A plurality of battery cells 2011 included in the fourth group of battery cells 205 are arranged in the third direction. The second heat exchange section 12 further includes a fifth heat exchange portion 127. The fifth heat exchange portion 127 closes at least a portion of the opening of the U-shaped region 120 formed by the second heat exchange portion 121, the third heat exchange portion 122, and the fourth heat exchange portion 125, and the fifth heat exchange portion 127 extends and is attached to the fourth group of battery cells 205 to enable heat exchange.

In the above embodiment, the peripheral battery cell group further includes the fourth group of battery cells 205, the fourth group of battery cells 205 may be arranged opposite to the first group of battery cells 202 in the fifth direction, and the fourth group of battery cells 205 is arranged on a side of the battery assembly 200 proximal to the side wall of the battery 1000. For example, the fourth group of battery cells 205 and the first group of battery cells 202 may be respectively arranged at two ends of the battery assembly 200 in the Y2 direction. The fifth heat exchange portion 127 of the second heat exchange section 12 is attached to the fourth group of battery cells 205. When the heat exchange fluid flows along the second heat exchange section 12, the heat exchange fluid performs heat exchange with the fourth battery cell group along the fifth heat exchange portion 127.

For example, when the heat exchange member 100 performs heat exchange with the battery assembly 200, the heat exchange fluid may first enter the second heat exchange section 12. In the second heat exchange section 12, the heat exchange fluid first flows into the fourth heat exchange portion 125, flows in the fourth heat exchange portion 125 in the fifth direction, and performs heat exchange with the third group of battery cells 204 in an attached manner. Then, the heat exchange fluid enters the second heat exchange portion 121, flows in the second heat exchange portion 121 in the third direction, and performs heat exchange with the first group of battery cells 202 in an attached manner. Next, the heat exchange fluid enters the third heat exchange portion 122, flows in the third heat exchange portion 122 in the fifth direction, and performs heat exchange with the second group of battery cells 203 in an attached manner. Then, the heat exchange fluid enters the fifth heat exchange portion 127, flows in the third direction, and performs heat exchange with the fourth group of battery cells 205 in an attached manner. Finally, the heat exchange fluid flows into the first heat exchange section 11 to perform heat exchange with the battery cells 2011 located on the inner side of the peripheral battery cell group in the battery assembly 200. Certainly, the heat exchange fluid may also first flow into the first heat exchange section 11 and then flow into the second heat exchange section 12 to perform heat exchange with the battery assembly 200, which is not described in detail herein.

In the above embodiment, by arranging the fifth heat exchange portion 127 in the second heat exchange section 12 to be attached to the fourth group of battery cells 205, the heat exchange member 100 can better coordinate with the heat dissipation conditions of battery cells 2011 at different positions in the battery 1000 to facilitate the arrangement of the heat exchange flow channel, such that the heat exchange effect of the heat exchange member 100 on the battery assembly 200 is improved, and the internal temperature distribution of the battery 1000 is more uniform during operation, thereby enabling the operation of the battery 1000 to be more stable.

Referring to FIGs. 4 and 18 again, in an embodiment of the present application, the second heat exchange portion 121 extends in a second direction, where the second direction and the third direction are the same direction; the third heat exchange portion 122 and the fourth heat exchange portion 125 extend in a first direction, where the first direction and the fifth direction are the same direction.

Specifically, the battery unit 201 includes a plurality of battery cells 2011 sequentially stacked in the third direction, and the plurality of battery units 201 are sequentially arranged in the fifth direction. Therefore, the second heat exchange portion 121 extends in the stacking direction of the plurality of battery cells 2011, and the third heat exchange portion 122 and the fourth heat exchange portion 125 extend in the arrangement direction of the plurality of battery units 201. That is, the second heat exchange portion 121 may perform heat exchange with a plurality of battery cells 2011 of one battery unit 201, and the third heat exchange portion 122 and the fourth heat exchange portion 125 may perform heat exchange with the plurality of battery cells 2011 of the plurality of battery units 201.

It should be noted that there are generally two stacking methods for the plurality of battery cells 2011. One method involves stacking in the thickness direction of the battery cells 2011, and the other method involves stacking in the length direction of the battery cells 2011. When the plurality of battery cells 2011 are stacked in the thickness direction of the battery cells 2011, the plurality of battery units 201 are sequentially arranged in the length direction of the battery cells 2011. When the plurality of battery cells 2011 are stacked in the length direction of the battery cells 2011, the plurality of battery units 201 are sequentially arranged in the thickness direction of the battery cells 2011. Therefore, when the plurality of battery cells 2011 are stacked in the thickness direction of the battery cells 2011, the second heat exchange portion 121 can perform heat exchange with the plurality of battery cells 2011 of one battery unit 201 in the thickness direction of the battery cells 2011, and the third heat exchange portion 122 and the fourth heat exchange portion 125 can perform heat exchange with the plurality of battery cells 2011 of the plurality of battery units 201 in the length direction of the battery cells 2011. When the plurality of battery cells 2011 are stacked in the length direction of the battery cells 2011, the second heat exchange portion 121 can perform heat exchange with the plurality of battery cells 2011 of one battery unit 201 in the length direction of the battery cells 2011, and the third heat exchange portion 122 and the fourth heat exchange portion 125 can perform heat exchange with the battery cells 2011 of the plurality of battery units 201 in the width direction of the battery cells 2011, thereby ensuring the heat exchange efficiency and effect.

Referring to FIG. 18 again, the second direction is the thickness direction of the battery cells 2011, i.e., the X2 direction shown in FIG. 18, and the first direction is the length direction of the battery cells 2011, i.e., the Y2 direction shown in FIG. 18. Therefore, the plurality of battery cells 2011 included in the battery unit 201 are stacked in the thickness direction of the battery cells 2011, and the plurality of battery units 201 included in the battery assembly 200 are sequentially arranged in the length direction of the battery cells 2011. In this way, the second heat exchange portion 121 may extend in the thickness direction of the battery cells 2011 to perform heat exchange with the plurality of battery cells 2011, and the third heat exchange portion 122 and the fourth heat exchange portion 125 may extend in the length direction of the battery cells 2011 and perform heat exchange with the battery cells 2011, such that the arrangement of the first heat exchange flow channel 10 of the heat exchange member 100 can be more rational, thereby enhancing the heat exchange effect of the heat exchange member 100 on the battery assembly 200.

In the above embodiment, by configuring the second heat exchange portion 121 to extend in the second direction, where the second direction and the third direction are the same direction, and the third heat exchange portion 122 and the fourth heat exchange portion 125 to extend in the first direction, where the first direction and the fifth direction are the same direction, the extension directions of the second heat exchange portion 121, the third heat exchange portion 122, and the fourth heat exchange portion 125 can be designed according to the arrangement of the battery units 201, thereby enabling the arrangement of the first heat exchange flow channel 10 to better meet the heat exchange requirements of the battery assembly 200 and improving the heat exchange efficiency.

Referring to FIG. 21 again, in an embodiment of the present application, the first heat exchange portion 111 extends in a first direction, where the first direction and the fifth direction are the same direction.

It should be noted that in this embodiment, the first heat exchange portion 111, the third heat exchange portion 122, and the fourth heat exchange portion 125 may all extend in the first direction, and the second heat exchange portion 121 may extend in the second direction. In this way, the plurality of connected first heat exchange portions 111 can form an S-shaped heat exchange flow channel extending in the second direction.

The first direction may be the length direction of the battery cells 2011. For example, as shown in FIG. 21, the first direction is the length direction of the battery cells 2011, i.e., the Y2 direction shown in FIG. 21. As such, the first heat exchange portion 111 extends in the length direction of the battery cells 2011 and performs heat exchange with the battery cells 2011, which can increase the heat exchange area between the first heat exchange portion 111 and the battery cells 2011, thereby enhancing the heat exchange effect of the battery cells 2011. Alternatively, the first direction may be the thickness direction of the battery cells 2011, which can achieve heat exchange with a plurality of battery cells 2011.

In the above embodiment, by configuring the first heat exchange portion 111 to extend in the first direction, where the first direction and the fifth direction are the same direction, the first heat exchange portion 111 can extend in the arrangement direction of the plurality of battery units 201, such that the first heat exchange portion 111 can perform heat exchange with the plurality of battery cells 2011 of the plurality of battery units 201. When the plurality of battery units 201 are sequentially arranged in the thickness direction of the battery cells 2011, the first heat exchange portion 111 can perform heat exchange with the plurality of battery cells 2011. When the plurality of battery units 201 are sequentially arranged in the length direction of the battery cells 2011, the heat exchange area between the first heat exchange portion 111 and the battery cells 2011 is increased, thereby enhancing the heat exchange effect of the battery cells 2011.

In some specific embodiments of the present application, the first heat exchange portion 111 extends in the second direction, where the second direction and the third direction are the same direction.

It can be understood that extension directions of the first heat exchange portion 111 and the second heat exchange portion 121 are the same, the first heat exchange portion 111 and the second heat exchange portion 121 are arranged in parallel and spaced apart, the third heat exchange portion 122 and the fourth heat exchange portion 125 extend in the first direction, and the first direction and the fifth direction are the same direction.

Referring to FIG. 20 again, the second direction is the thickness direction of the battery cells 2011, i.e., the X2 direction shown in FIG. 20, and the first direction is the length direction of the battery cells 2011, i.e., the Y2 direction shown in FIG. 20. In this case, the first heat exchange portion 111 and the second heat exchange portion 121 both extend in the thickness direction of the battery cells 2011, and can perform heat exchange with the battery cells 2011 in the thickness direction of the battery cells 2011. Therefore, when the length of the first heat exchange portion 111 is fixed, the first heat exchange portion 111 extending in the second direction can perform heat exchange with more battery cells 2011 than the first heat exchange portion 111 extending in the first direction. When the number of bends of the first heat exchange section 11 is fixed, compared with the first heat exchange portion 111 extending in the first direction, the first heat exchange portion 111 extending in the second direction has a smaller distance between two adjacent first heat exchange portions 111, resulting in a better heat exchange effect. When it is specified that one battery cell 2011 performs heat exchange with two heat exchange portions, the number of first heat exchange portions 111 used that extend in the second direction and are arranged in the first direction is lower than the number of first heat exchange portions 111 used that extend in the first direction and are spaced apart in the second direction, that is, fewer bends are required, such that the forming difficulty of the first heat exchange portion 11 is lower, and the processing is more convenient.

Therefore, by configuring the first heat exchange portion 111 to extend in the second direction, the heat exchange effect can be satisfied while reducing the number of the first heat exchange portions 111, thereby reducing the number of bends of the first heat exchange flow channel 10, reducing the pressure drop of the heat exchange fluid in the first heat exchange flow channel 10, and improving the heat exchange efficiency. Meanwhile, the forming difficulty and the manufacturing cost of the heat exchange member 100 can also be reduced, thereby improving the production rate of the heat exchange member 100.

In the above embodiment, by configuring the first heat exchange portion 111 to extend in the second direction, the number of the first heat exchange portions 111 can be reduced, the number of bends of the first heat exchange flow channel 10 can be reduced, and the pressure drop of the heat exchange fluid in the first heat exchange flow channel 10 can be reduced, thereby improving the heat exchange efficiency.

Referring to FIGs. 18 to 23 again, in an embodiment of the present application, the battery assembly 200 includes a plurality of battery units 201 sequentially arranged in the fifth direction, at least one battery unit 201 located at two ends in the fifth direction is the first group of battery cells 202, and the second heat exchange portion 121 and at least one first heat exchange portion 111 of the first heat exchange section 11 are jointly attached to the first group of battery cells 202 to enable heat exchange.

The above description "at least one battery unit 201 located at two ends in the fifth direction is the first group of battery cells 202" is intended to illustrate that one of the battery units 201 located at two ends in the fifth direction may be formed as the first group of battery cells 202, or both of the two battery units 201 located at two ends in the fifth direction may be formed as the first group of battery cells 202.

The above description "the second heat exchange portion 121 and at least one first heat exchange portion 111 of the first heat exchange section 11 are jointly attached to the first group of battery cells 202" is intended to illustrate that the first group of battery cells 202 may be attached to the second heat exchange portion 121 and one first heat exchange portion 111 for heat exchange, or may be attached to the second heat exchange portion 121 and a plurality of first heat exchange portions 111 for heat exchange. For example, two, three, or more first heat exchange portions 111 may be attached to the first group of battery cells 202 for heat exchange.

In the above embodiment, by configuring the second heat exchange portion 121 and the at least one first heat exchange portion 111 of the first heat exchange section 11 to be jointly attached to the first group of battery cells 202 for heat exchange, the heat exchange area between the first heat exchange flow channel 10 and the first group of battery cells 202 can be increased. Meanwhile, the temperature difference at different positions of the first group of battery cells 202 can be balanced, thereby improving the temperature uniformity of the first group of battery cells 202.

According to an example of the present application, as shown in FIG. 18, a plurality of first heat exchange portions 111 are provided, and the plurality of first heat exchange portions are sequentially connected in a bent manner in the first direction (e.g., the Y1 direction shown in FIG. 18). The second heat exchange portion 121 and a first heat exchange portion 111 that is farthest from the second heat exchange portion 121 along a connecting line of the sequential connection perform heat exchange with the first group of battery cells 202.

The first heat exchange portion 111 and the second heat exchange portion 121 both extend in the second direction (e.g., the X1 direction shown in FIG. 18), the first heat exchange portion 111 is connected to the second heat exchange portion 121 by the third heat exchange portion 122, and the third heat exchange portion 122 is connected to one of the plurality of first heat exchange portions 111 that is farthest from the second heat exchange portion 121 in the first direction. Therefore, the second heat exchange portion 121 and the first heat exchange portion 111 that is farthest from the second heat exchange portion 121 along the connecting line of the sequential connection perform heat exchange with the first group of battery cells 202, that is, the second heat exchange portion 121 and the first heat exchange portion 111 that is closest to the second heat exchange portion 121 perform heat exchange with the first group of battery cells 202.

Specifically, during heating of the battery assembly 200, the high-temperature heat exchange fluid may enter the second heat exchange portion 121 through the fourth heat exchange portion 125. In this case, the temperature of the heat exchange fluid in the second heat exchange portion 121 is high. Then, the heat exchange fluid flows into the first heat exchange section 11 through the third heat exchange portion 122. In the first heat exchange section 11, the heat exchange fluid first enters the first heat exchange portion 111 that is farthest from the second heat exchange portion 121, and then sequentially passes through the plurality of first heat exchange portions 111 to perform heat exchange with the battery assembly 200, until it flows into the first heat exchange portion 111 that is farthest in the fluid flow direction, where the first heat exchange portion 111 is closest in straight-line distance to the second heat exchange portion 121 and, together with the second heat exchange portion 121, performs heat exchange with the first group of battery cells 202. The temperature of the heat exchange fluid entering the second heat exchange portion 121 is high and close to the inlet temperature of the first heat exchange flow channel 10. The temperature of the heat exchange fluid in the first heat exchange portion 111 that is closest to the second heat exchange portion 121 is low and close to the outlet temperature of the first heat exchange flow channel 10.

During cooling of the battery assembly 200, the low-temperature heat exchange fluid may first enter the first heat exchange section 11. In the first heat exchange section 11, the heat exchange fluid first enters the first heat exchange portion 111 arranged adjacent to the second heat exchange portion 121 to perform heat exchange with the first group of battery cells 202, then sequentially flows in the plurality of first heat exchange portions 111 to perform heat exchange with the battery assembly 200, enters the third heat exchange portion 122 through the first heat exchange portion 111 that is farthest from the second heat exchange portion 121, and flows into the second heat exchange portion 121 through the third heat exchange portion 122. During the heat exchange process, the temperature of the heat exchange fluid in the first heat exchange portion 111 that is closest to the second heat exchange portion 121 is low and close to the inlet temperature of the first heat exchange flow channel 10, and the temperature of the heat exchange fluid entering the second heat exchange portion 121 is high and close to the outlet temperature of the first heat exchange flow channel 10.

Therefore, the second heat exchange portion 121 and the adjacent first heat exchange portion 111 jointly perform heat exchange with the first group of battery cells 202, such that the temperature difference of the first group of battery cells 202 can be balanced, thereby improving the temperature uniformity of the first group of battery cells 202. Meanwhile, due to the heat dissipation from the peripheral side of the battery assembly 200 to the environment, the first group of battery cells 202 dissipates more heat than the battery cells 2011 located in the central part of the battery assembly 200, resulting in a lower temperature. Therefore, the fluid at a high temperature flowing in the second heat exchange portion 121 performs heat exchange with the first group of battery cells 202, which can increase the temperature of the first group of battery cells 202, compensating for the heat loss due to heat exchange between the first group of battery cells 202 and the environment, thereby improving the temperature uniformity of the first group of battery cells 202 and the remaining battery cells 2011.

In addition, the temperature at the edge position of the first group of battery cells 202 is lower than the temperature on the other side. Therefore, the first group of battery cells 202 perform heat exchange with the second heat exchange portion 121 and the first heat exchange portion 111 that is farthest from the second heat exchange portion 121 along the connecting line of the sequential connection, which can balance the temperature difference between the two sides of the first group of battery cells 202, thereby improving the temperature uniformity of the first group of battery cells 202.

In the above embodiment, by configuring the second heat exchange portion 121 and the first heat exchange portion 111 that is farthest from the second heat exchange portion 121 along the connecting line of the sequential connection to perform heat exchange with the first group of battery cells 202, the second heat exchange portion 121 and the adjacent first heat exchange portion 111 perform heat exchange with the first group of battery cells 202, such that the second heat exchange portion 121 can perform heat exchange with an edge position of the first group of battery cells 202, and the first heat exchange portion 111 can perform heat exchange with the other side of the first group of battery cells 202. The temperature difference between the heat exchange fluid in the second heat exchange portion 121 and that in the first heat exchange portion 111 is large, and the heat exchange temperature of the first group of battery cells 202 is approximately an average temperature of the second heat exchange portion 121 and the adjacent first heat exchange portion 111, such that the temperature difference of the first group of battery cells 202 can be balanced, thereby improving the temperature uniformity of the first group of battery cells 202.

According to an example of the present application, as shown in FIG. 4, the second heat exchange section 12 includes the second heat exchange portion 121, the third heat exchange portion 122, and the fourth heat exchange portion 125 that are connected. A first end of the third heat exchange portion 122 is connected to the second heat exchange portion 121 at an included angle, and a second end of the third heat exchange portion 122 is connected to the first heat exchange section 11 at an included angle.

In some specific embodiments, the second heat exchange portion 121 extends and is attached to the first group of battery cells 202 to enable heat exchange, the third heat exchange portion 122 extends and is attached to the second group of battery cells 203 to enable heat exchange, and the fourth heat exchange portion 125 extends and is attached to the third group of battery cells 204 to enable heat exchange.

The plurality of battery cells 2011 included in the first group of battery cells 202 are stacked in the third direction, the plurality of battery cells 2011 included in the second group of battery cells 203 are stacked in the fifth direction, and the plurality of battery cells 2011 included in the third group of battery cells 204 are stacked in the fifth direction. In this way, the second heat exchange portion 121 extending and being attached to the first group of battery cells 202 means that the second heat exchange portion 121 extends in the third direction and performs heat exchange with the first group of battery cells 202. The third heat exchange portion 122 extending and being attached to the second group of battery cells 203 means that the third heat exchange portion 122 extends in the fifth direction and performs heat exchange with the second group of battery cells 203. The fourth heat exchange portion 125 extending and being attached to the third group of battery cells 204 means that the fourth heat exchange portion 125 extends in the fifth direction and performs heat exchange with the third battery cell.

In the above embodiment, by configuring the second heat exchange portion 121 to extend and be attached to the first group of battery cells 202 to enable heat exchange, the third heat exchange portion 122 to extend and be attached to the second group of battery cells 203 to enable heat exchange, and the fourth heat exchange portion 125 to extend and be attached to the third group of battery cells 204 to enable heat exchange, the second heat exchange section 12 can perform heat exchange with peripheral edges of the battery assembly 200, thereby balancing the temperature difference caused by heat dissipation of the battery assembly 200.

In other specific embodiments, the second heat exchange portion 121 is attached to the second group of battery cells 203 to enable heat exchange, and the third heat exchange portion 122 is attached to the first group of battery cells 202 to enable heat exchange.

Specifically, the plurality of battery cells 2011 included in the first group of battery cells 202 are stacked in the third direction, and the plurality of battery cells 2011 included in the second group of battery cells 203 are stacked in the fifth direction. The second heat exchange portion 121 is attached to the second group of battery cells 203, and the third heat exchange portion 122 is attached to the first group of battery cells 202. That is, the second heat exchange portion 121 extends in the fifth direction and is attached to the second group of battery cells 203 for heat exchange, and the third heat exchange portion 122 extends in the third direction and is attached to the first group of battery cells 202 for heat exchange.

In the above embodiment, by configuring the second heat exchange portion 121 to be attached to the second group of battery cells 203 to enable heat exchange, and the third heat exchange portion 122 to be attached to the first group of battery cells 202 to enable heat exchange, the heat exchange flow channel can be designed for the heat exchange member 100 according to the arrangement of the plurality of battery cells 2011, thereby improving the applicability of the heat exchange member 100, enabling the heat exchange member to meet the cooling requirements of different batteries 1000, and enhancing the heat exchange efficiency and temperature uniformity effect of the battery 1000.

According to an example of the present application, as shown in FIGs. 4 and 18, the first heat exchange flow channel 10 further includes a third heat exchange section 13. The third heat exchange section 13 is in communication with an end of the first heat exchange section 11 distal to the second heat exchange section 12 in the fluid flow direction and is connected to the first heat exchange section 11 at an included angle. The battery assembly 200 is further provided with a fifth group of battery cells 206, a plurality of battery cells 2011 included in the fifth group of battery cells 206 are stacked in the fifth direction, and the fifth group of battery cells 206 is arranged adjacent to the third group of battery cells 204.

In some specific embodiments, the third heat exchange section 13 and the fourth heat exchange portion 125 are both attached to the third group of battery cells 204 to enable heat exchange.

Specifically, the third heat exchange section 13 is in communication with the end of the first heat exchange section 11 distal to the second heat exchange section 12 in the fluid flow direction. The fourth heat exchange portion 125, the second heat exchange portion 121, and the third heat exchange portion 122 are sequentially connected to form a U-shaped structure, and the other end of the third heat exchange portion 122 is connected to the first heat exchange section 11 in a bent manner. In this way, the third heat exchange section 13 and the fourth heat exchange portion 125 can respectively serve as the liquid inlet end and the liquid outlet end of the first heat exchange flow channel 10. When the third heat exchange section 13 serves as the liquid inlet end of the first heat exchange flow channel 10, the fourth heat exchange portion 125 may serve as the liquid outlet end of the first heat exchange flow channel 10. When the third heat exchange section 13 serves as the liquid outlet end of the first heat exchange flow channel 10, the fourth heat exchange portion 125 may serve as the liquid inlet end of the first heat exchange flow channel 10.

In this way, the flow directions of the heat exchange fluids in the third heat exchange section 13 and the fourth heat exchange portion 125 are opposite, resulting in the largest temperature difference. For example, when the fluid enters from the fourth heat exchange portion 125 to heat and maintain the temperature of the battery 1000, the temperature of the fourth heat exchange portion 125 is the highest, and the temperature of the third heat exchange section 13 is the lowest; when the fluid cools the battery 1000 for heat exchange, the temperature of the fourth heat exchange portion 125 is the lowest, and the temperature of the third heat exchange section 13 is the highest. Therefore, when the third heat exchange section 13 and the fourth heat exchange portion 125 are both attached to the third group of battery cells 204 to enable heat exchange, the temperature difference of the third group of battery cells 204 can be balanced, thereby improving the temperature uniformity of the third group of battery cells 204.

In other specific embodiments, the third heat exchange section 13 is attached to the fifth group of battery cells 206 to enable heat exchange, and the fourth heat exchange portion 125 is attached to the third group of battery cells 204 to enable heat exchange.

Specifically, in these embodiments, the third heat exchange section 13 and the fourth heat exchange portion 125 both extend in the fifth direction. When the fifth direction is the length direction of the battery cells 2011, the contact area between the third heat exchange section 13 and the fourth heat exchange section 31 and the battery cells 2011 can be increased, thereby enhancing the heat exchange effect on the fifth group of battery cells 206 and the third group of battery cells 204. Meanwhile, since the fifth group of battery cells 206 is arranged adjacent to the third group of battery cells 204, the third heat exchange section 13 being attached to the fifth group of battery cells 206 to enable heat exchange and the fourth heat exchange portion 125 being attached to the third group of battery cells 204 to enable heat exchange can also balance the temperature difference at the edge positions of the battery assembly 200 caused by water temperature differences.

In some other specific embodiments, the third heat exchange section 13 is attached to the third group of battery cells 204 to enable heat exchange, and the fourth heat exchange portion 125 is arranged on an outer side of the battery assembly 200 in the third direction.

That is, the fourth heat exchange portion 125 does not perform heat exchange with the battery assembly 200, and the third heat exchange portion 122 extends in the fifth direction and is attached to the third group of battery cells 204 for heat exchange. Therefore, when the fifth direction is the length direction of the battery cells 2011, the contact area between the third heat exchange section 13 and the third group of battery cells 204 can be increased, thereby improving the heat exchange effect of the heat exchange member 100.

In the above embodiment, by configuring the third heat exchange section 13 and the fourth heat exchange portion 125 to be both attached to the third group of battery cells 204 for heat exchange, the temperature difference of the third group of battery cells 204 can be balanced, thereby improving the temperature uniformity of the third group of battery cells 204. By configuring the third heat exchange section 13 to be attached to the third group of battery cells 204 for heat exchange, and the fourth heat exchange portion 125 to be arranged on the outer side of the battery assembly 200 in the third direction, the heat exchange process can be simplified, thereby reducing the production difficulty of the heat exchange member 100.

According to an example of the present application, as shown in FIGs. 18 to 23, the first heat exchange portion 111 of the first heat exchange section 11 and the second heat exchange portion 121 of the second heat exchange section 12 both extend in the second direction (e.g., the X1 direction shown in FIG. 18) and are spaced apart in the first direction (e.g., the Y1 direction shown in FIG. 18). One battery unit 201 is attached to one second heat exchange portion 121 and at least one first heat exchange portion 111 to enable heat exchange; or one battery unit 201 is attached to at least two first heat exchange portions 111 to enable heat exchange.

It can be understood that in some embodiments, one battery unit 201 is attached to one second heat exchange portion 121 and at least one first heat exchange portion 111 to enable heat exchange. One, two, three, or more first heat exchange portions 111 may perform heat exchange with the same battery unit 201 together with the second heat exchange portion 121. In some other embodiments, one battery unit 201 is attached to at least two first heat exchange portions 111 to enable heat exchange. For example, when one battery unit 201 only performs heat exchange with the first heat exchange portions 111, two, three, four, or more first heat exchange portions 111 may be provided. That is, one battery unit 201 performs heat exchange with at least two heat exchange portions, which can not only increase the heat exchange area, thereby enhancing the heat exchange effect, but also improve the temperature uniformity of the battery unit 201.

In the above embodiment, by configuring one battery unit 201 to be attached to one second heat exchange portion 121 and at least one first heat exchange portion 111 to enable heat exchange, or one battery unit 201 to be attached to at least two first heat exchange portions 111 to enable heat exchange, one battery unit 201 can perform heat exchange with at least two heat exchange portions, such that the heat exchange area can be increased, thereby enhancing the heat exchange effect.

According to an example of the present application, a total number of the first heat exchange portions 111 and the second heat exchange portions 121 of the first heat exchange flow channel 10 is greater than or equal to 4.

For example, the total number of the first heat exchange portions 111 and the second heat exchange portions 121 of the first heat exchange flow channel 10 may be 4, 5, 6, 7, or more.

In the above embodiment, by setting the total number of the first heat exchange portions 111 and the second heat exchange portions 121 of the first heat exchange flow channel 10 to be greater than or equal to 4, the length of each heat exchange flow channel can be increased, the total number of the heat exchange flow channels can be reduced, and the sealing performance of the heat exchange member 100 can be improved.

According to an example of the present application, as shown in FIGs. 4 and 18, two first heat exchange flow channels 10 are provided, and each first heat exchange flow channel 10 includes: three first heat exchange portions 111, one second heat exchange portion 121, one third heat exchange portion 122, one fourth heat exchange portion 125, and one third heat exchange section 13. Four battery units 201 are provided. The battery unit 201 located at an end in the fifth direction is attached to one first heat exchange portion 111 and one second heat exchange portion 121 to enable heat exchange, and any one of the remaining battery units 201 is attached to two first heat exchange portions 111 to enable exchange. The third heat exchange portion 122 is connected to the second heat exchange portion 121 and the first heat exchange portion 111 that is farthest from the second heat exchange portion 121, and is attached to the second group of battery cells 203 to enable heat exchange. The third heat exchange section 13 is connected to the first heat exchange portion 111 that is closest to the second heat exchange portion 121, and the third heat exchange section 13 and/or the fourth heat exchange portion 125 are attached to the third group of battery cells 204 to enable heat exchange.

Specifically, for the four battery units 201, due to more heat dissipation at the peripheral edge position of the battery assembly 200, the temperatures of the two first groups of battery cells 202 located at two ends in the fifth direction are lower than the temperatures of two battery units 201 at the middle part; the temperatures of the second group of battery cells 203 and the third group of battery cells 204 located at two ends in the third direction are lower than the temperatures of the battery cells 2011 at other positions.

The battery unit 201 located at the end in the fifth direction is attached to the first heat exchange portion 111 that is closest to the second heat exchange portion 121 and the second heat exchange portion 121, and any one of the remaining battery units 201 is attached to the other two first heat exchange portions 111. During cooling or heating of the battery assembly 200, the temperature of the heat exchange fluid flowing in the second heat exchange portion 121 is higher and close to the inlet temperature of the first heat exchange flow channel 10, the temperature in the first heat exchange portion 111 that is closest to the second heat exchange portion 121 is lower and close to the outlet temperature of the first heat exchange flow channel 10, the temperatures in the remaining two first heat exchange portions 111 are between the two temperatures, and the temperatures of the three first heat exchange portions 111 do not differ much. Therefore, the average temperature of the second heat exchange portion 121 and the first heat exchange portion 111 that is closest to the second heat exchange portion 121 is higher than the average temperature of the remaining two first heat exchange portions 111, such that the average heat exchange temperature corresponding to the battery unit 201 located at the end in the fifth direction is relatively high, thereby compensating for the temperature difference caused by heat dissipation.

In addition, the third heat exchange section 13 and/or the fourth heat exchange portion 125 are attached to the third group of battery cells 204 to enable heat exchange. It can be understood that only the third heat exchange section 13 may be attached to the third group of battery cells 204 for heat exchange, or only the fourth heat exchange portion 125 may be attached to the third group of battery cells 204 for heat exchange, or both the third heat exchange section 13 and the fourth heat exchange portion 125 may be attached to the third group of battery cells 204 for heat exchange.

For example, as shown in FIG. 18, the fifth direction is the length direction of the battery cells 2011, i.e., the Y2 direction shown in the figure, and the third direction is the thickness direction of the battery cells 2011, i.e., the X2 direction shown in the figure. A plurality of battery cells 2011 included in the four battery units 201 extend in the thickness direction of the battery cells 2011, and are spaced apart in the length direction of the battery cells 2011. The two first heat exchange flow channels 10 are arranged symmetrically in the Y2 direction and separately perform heat exchange with two battery units 201.

Specifically, taking the first heat exchange flow channel 10 arranged on a side distal to the coordinate origin in the Y2 direction in the figure as an example, the first heat exchange flow channel 10 includes one second heat exchange portion 121, three first heat exchange portions 111, one third heat exchange portion 122, one fourth heat exchange portion 125, and one third heat exchange section 13. The second heat exchange portion 121, the first heat exchange portion 111a, the first heat exchange portion 111b, and the first heat exchange portion 111c extend in the thickness direction of the battery cells 2011 and are arranged sequentially from the side distal to the coordinate origin to a side proximal to the coordinate origin in the Y2 direction. The first heat exchange portion 111a, the first heat exchange portion 111b, and the first heat exchange portion 111c are sequentially connected. The second heat exchange portion 121 and the first heat exchange portion 111a perform heat exchange with the first group of battery cells 202, and the first heat exchange portion 111b and the first heat exchange portion 111c perform heat exchange with the battery unit 201 adjacent to the first group of battery cells 202. The third heat exchange portion 122 extends in the length direction of the battery cells 2011 and is connected between an end of the second heat exchange portion 121 proximal to the coordinate origin in the X2 direction and the first heat exchange portion 111c for heat exchange with the second group of battery cells 203. The fourth heat exchange portion 125 is connected to an end of the second heat exchange portion 121 distal to the coordinate origin in the X2 direction and extends in the length direction of the battery cells 2011 to a position proximal to the first heat exchange portion 111c. The third heat exchange section 13 is connected to an end of the first heat exchange portion 111a distal to the coordinate origin in the X1 direction and extends in the length direction of the battery cells 2011 to a position proximal to the first heat exchange portion 111c, and performs heat exchange with the third group of battery cells 204.

In the above embodiment, by configuring the four battery units 201 to match the two first heat exchange flow channels 10, and each first heat exchange flow channel 10 to include three first heat exchange portions 111 and one second heat exchange portion 121, each battery unit 201 can perform heat exchange with two heat exchange portions, such that the temperature uniformity of each battery unit 201 can be improved, thereby improving the temperature uniformity of the entire battery 1000.

According to an example of the present application, as shown in FIG. 22, two first heat exchange flow channels 10 are provided, and each first heat exchange flow channel 10 includes: five first heat exchange portions 111, one second heat exchange portion 121, one third heat exchange portion 122, one fourth heat exchange portion 125, and one third heat exchange section 13. Six battery units 201 are provided. The battery unit 201 located at an end in the fifth direction is attached to one first heat exchange portion 111 and one second heat exchange portion 121 to enable heat exchange, and any one of the remaining battery units 201 is attached to two first heat exchange portions 111 to enable heat exchange. The third heat exchange portion 122 is connected to the second heat exchange portion 121 and the first heat exchange portion 111 that is farthest from the second heat exchange portion 121, and is attached to the second group of battery cells 203 to enable heat exchange. The third heat exchange section 13 is connected to the first heat exchange portion 111 that is closest to the second heat exchange portion 121, and the third heat exchange section 13 and/or the fourth heat exchange portion 125 are attached to the third group of battery cells 204 to enable heat exchange.

Specifically, for the six battery units 201 matching the two first heat exchange flow channels 10, each first heat exchange flow channel 10 needs to perform heat exchange with three battery units 201. Each first heat exchange flow channel 10 includes five first heat exchange portions 111 and one second heat exchange portion 121. Therefore, each battery unit 201 performs heat exchange with two heat exchange portions.

The battery unit 201 located at the end in the fifth direction is attached to the first heat exchange portion 111 that is closest to the second heat exchange portion 121 and the second heat exchange portion 121, and any one of the remaining battery units 201 is attached to the other two first heat exchange portions 111. During cooling or heating of the battery assembly 200, the temperature of the heat exchange fluid flowing in the second heat exchange portion 121 is higher and close to the inlet temperature of the first heat exchange flow channel 10, the temperature in the first heat exchange portion 111 that is closest to the second heat exchange portion 121 is lower and close to the outlet temperature of the first heat exchange flow channel 10, the temperatures in the remaining four first heat exchange portions 111 are between the two temperatures, and the temperatures of the five first heat exchange portions 111 do not differ much. Therefore, the average temperature of the second heat exchange portion 121 and the first heat exchange portion 111 that is closest to the second heat exchange portion 121 is higher than the average temperature of the remaining two first heat exchange portions 111, such that the average heat exchange temperature corresponding to the battery unit 201 located at the end in the fifth direction is relatively high, thereby compensating for the temperature difference caused by heat dissipation.

In addition, the third heat exchange section 13 and/or the fourth heat exchange portion 125 are attached to the third group of battery cells 204 to enable heat exchange. It can be understood that only the third heat exchange section 13 may be attached to the third group of battery cells 204 for heat exchange, or only the fourth heat exchange portion 125 may be attached to the third group of battery cells 204 for heat exchange, or both the third heat exchange section 13 and the fourth heat exchange portion 125 may be attached to the third group of battery cells 204 for heat exchange.

For example, as shown in FIG. 22, the fifth direction is the length direction of the battery cells 2011, i.e., the Y2 direction shown in the figure, and the third direction is the thickness direction of the battery cells 2011, i.e., the X2 direction shown in the figure. A plurality of battery cells 2011 included in the six battery units 201 extend in the thickness direction of the battery cells 2011, and are spaced apart in the length direction of the battery cells 2011. The two first heat exchange flow channels 10 are arranged symmetrically in the Y2 direction and separately perform heat exchange with three battery units 201.

Specifically, taking the first heat exchange flow channel 10 arranged on a side distal to the coordinate origin in the Y2 direction in the figure as an example, the first heat exchange flow channel 10 includes one second heat exchange portion 121, five first heat exchange portions 111, one third heat exchange portion 122, one fourth heat exchange portion 125, and one third heat exchange section 13. The second heat exchange portion 121, the first heat exchange portion 111a, the first heat exchange portion 111b, the first heat exchange portion 111c, the first heat exchange portion 111d, and the first heat exchange portion 111e extend in the thickness direction of the battery cells 2011 and are arranged sequentially from the side distal to the coordinate origin to a side proximal to the coordinate origin in the Y2 direction. The first heat exchange portion 111a, the first heat exchange portion 111b, the first heat exchange portion 111c, the first heat exchange portion 111d, and the first heat exchange portion 111e are sequentially connected. The second heat exchange portion 121 and the first heat exchange portion 111a perform heat exchange with the first group of battery cells 202, the first heat exchange portion 111b and the first heat exchange portion 111c perform heat exchange with the battery unit 201 adjacent to the first group of battery cells 202, and the first heat exchange portion 111d and the first heat exchange portion 111e perform heat exchange with the battery unit 201 distal to the first group of battery cells 202. The third heat exchange portion 122 extends in the length direction of the battery cells 2011 and is connected between an end of the second heat exchange portion 121 proximal to the coordinate origin in the X2 direction and the first heat exchange portion 111e for heat exchange with the second group of battery cells 203. The fourth heat exchange portion 125 is connected to an end of the second heat exchange portion 121 distal to the coordinate origin in the X2 direction and extends in the length direction of the battery cells 2011 to a position proximal to the first heat exchange portion 111e. The third heat exchange section 13 is connected to an end of the first heat exchange portion 111a distal to the coordinate origin in the X2 direction and extends in the length direction of the battery cells 2011 to a position proximal to the first heat exchange portion 111e, and performs heat exchange with the third group of battery cells 204.

In the above embodiment, by configuring the six battery units 201 to match the two first heat exchange flow channels 10, and each first heat exchange flow channel 10 to include five first heat exchange portions 111 and one second heat exchange portion 121, it can be ensured that each battery unit 201 can perform heat exchange with two heat exchange portions, thereby ensuring the temperature uniformity of each battery unit 201.

According to an example of the present application, as shown in FIG. 23, two first heat exchange flow channels 10 are provided, and each first heat exchange flow channel 10 includes: five first heat exchange portions 111, one second heat exchange portion 121, one third heat exchange portion 122, one fourth heat exchange portion 125, and one third heat exchange section 13. Four battery units 201 are provided. The battery unit 201 located at an end in the fifth direction is attached to two first heat exchange portions 111 and one second heat exchange portion 121 to enable heat exchange, and any one of the remaining battery units 201 is attached to three first heat exchange portions 111 to enable heat exchange. The third heat exchange portion 122 is connected to the second heat exchange portion 121 and the first heat exchange portion 111 that is farthest from the second heat exchange portion 121, and is attached to the second group of battery cells 203 to enable heat exchange. The third heat exchange section 13 is connected to the first heat exchange portion 111 that is closest to the second heat exchange portion 121, and the third heat exchange section 13 and/or the fourth heat exchange portion 125 are attached to the third group of battery cells 204 to enable heat exchange.

Specifically, for the four battery units 201 matching the two first heat exchange flow channels 10, each first heat exchange flow channel 10 needs to perform heat exchange with two battery units 201. Each first heat exchange flow channel 10 includes five first heat exchange portions 111 and one second heat exchange portion 121. Therefore, each battery unit 201 performs heat exchange with three heat exchange portions.

The battery unit 201 located at the end in the fifth direction is attached to two first heat exchange portions 111 that are closest to the second heat exchange portion 121 and the second heat exchange portion 121 for heat exchange, and any one of the remaining battery units 201 is attached to the other three first heat exchange portions 111 for heat exchange. During cooling or heating of the battery assembly 200, the temperature of the heat exchange fluid flowing in the second heat exchange portion 121 is higher and close to the inlet temperature of the first heat exchange flow channel 10, the temperature in the two first heat exchange portions 111 that are closest to the second heat exchange portion 121 is lower and close to the outlet temperature of the first heat exchange flow channel 10, the temperatures in the remaining three first heat exchange portions 111 are between the two temperatures, and the temperatures of the five first heat exchange portions 111 do not differ much. Therefore, the average temperature of the second heat exchange portion 121 and the two first heat exchange portions 111 that are closest to the second heat exchange portion 121 is higher than the average temperature of the remaining two first heat exchange portions 111, such that the average heat exchange temperature corresponding to the battery unit 201 located at the end in the fifth direction is relatively high, thereby balancing the temperature difference caused by heat dissipation.

In addition, the third heat exchange section 13 and/or the fourth heat exchange portion 125 are attached to the third group of battery cells 204 to enable heat exchange. It can be understood that only the third heat exchange section 13 may be attached to the third group of battery cells 204 for heat exchange, or only the fourth heat exchange portion 125 may be attached to the third group of battery cells 204 for heat exchange, or both the third heat exchange section 13 and the fourth heat exchange portion 125 may be attached to the third group of battery cells 204 for heat exchange.

For example, as shown in FIG. 23, the fifth direction is the length direction of the battery cells 2011, i.e., the Y2 direction shown in the figure, and the third direction is the thickness direction of the battery cells 2011, i.e., the X2 direction shown in the figure. A plurality of battery cells 2011 included in the four battery units 201 extend in the thickness direction of the battery cells 2011, and are spaced apart in the length direction of the battery cells 2011. The two first heat exchange flow channels 10 are arranged symmetrically in the Y2 direction and separately perform heat exchange with two battery units 201.

Specifically, taking the first heat exchange flow channel 10 arranged on a side distal to the coordinate origin in the Y2 direction in the figure as an example, the first heat exchange flow channel 10 includes one second heat exchange portion 121, five first heat exchange portions 111, one third heat exchange portion 122, one fourth heat exchange portion 125, and one third heat exchange section 13. The second heat exchange portion 121, the first heat exchange portion 111a, the first heat exchange portion 111b, the first heat exchange portion 111c, the first heat exchange portion 111d, and the first heat exchange portion 111e extend in the thickness direction of the battery cells 2011 and are arranged sequentially from the side distal to the coordinate origin to a side proximal to the coordinate origin in the Y2 direction. The first heat exchange portion 111a, the first heat exchange portion 111b, the first heat exchange portion 111c, the first heat exchange portion 111d, and the first heat exchange portion 111e are sequentially connected. The second heat exchange portion 121, the first heat exchange portion 111a, and the first heat exchange portion 111b perform heat exchange with the first group of battery cells 202, and the first heat exchange portion 111c, the first heat exchange portion 111d, and the first heat exchange portion 111e perform heat exchange with the battery unit 201 adjacent to the first group of battery cells 202. The third heat exchange portion 122 extends in the length direction of the battery cells 2011 and is connected between an end of the second heat exchange portion 121 proximal to the coordinate origin in the X2 direction and the first heat exchange portion 111e for heat exchange with the second group of battery cells 203. The fourth heat exchange portion 125 is connected to an end of the second heat exchange portion 121 distal to the coordinate origin in the X2 direction and extends in the length direction of the battery cells 2011 to a position proximal to the first heat exchange portion 111e. The third heat exchange section 13 is connected to an end of the first heat exchange portion 111a distal to the coordinate origin in the X2 direction and extends in the length direction of the battery cells 2011 to a position proximal to the first heat exchange portion 111e, and performs heat exchange with the third group of battery cells 204.

In the above embodiment, by configuring the four battery units 201 to match the two first heat exchange flow channels 10, and each first heat exchange flow channel 10 to include five first heat exchange portions 111 and one second heat exchange portion 121, each battery unit 201 can perform heat exchange with three heat exchange portions, such that the temperature uniformity of each battery unit 201 can be further improved. Meanwhile, the heat exchange area of the heat exchange member 100 for each battery unit 201 can also be increased, thereby improving the heat exchange effect of the heat exchange member 100, and improving the temperature uniformity of the battery 1000.

According to an example of the present application, the number of the battery units 201 is 2 to 8.

For example, the number of the battery units 201 may be 2, 3, 4, 5, 6, 7, or 8.

In the above embodiment, by setting the number of the battery units 201 to be 2 to 8, the overall design of the battery 1000 and the heat exchange member 100 is facilitated, and the production difficulty of the heat exchange member 100 and the battery 1000 is reduced. Meanwhile, the application range of the battery 1000 can also be increased, thereby improving the market competitiveness of the battery 1000.

According to an example of the present application, as shown in FIG. 24, the battery 1000 includes a case 300 and a battery assembly 200. The case 300 includes a case body 401. The case body 401 is an integrally stamped member and includes a bottom wall and a surrounding wall. The battery assembly 200 is arranged within the case body 401, the battery assembly 200 includes a plurality of battery units 201, and the plurality of battery units 201 are arranged in the first direction. The battery unit 201 includes a plurality of battery cells 2011 sequentially stacked in the second direction.

Specifically, an accommodating cavity with one side open is formed inside the case body 401, and the plurality of battery cells 2011 are arranged in the accommodating cavity. The case body 401 provides a mounting space for the plurality of battery cells 2011. The plurality of battery cells 2011 are core components of the battery 1000 and are mainly configured to store and release energy.

Stamping is a forming method that uses presses and molds to apply external forces to plates, strips, tubes, profiles, or the like, causing them to undergo plastic deformation or separation, thereby obtaining workpieces (stamped members) with required shapes and dimensions. Stamping can produce thin-walled, lightweight, rigid, high-surface-quality, and complex-shaped parts that other processing methods cannot or find difficult to manufacture, and also provides advantages such as high material utilization, convenient operation, and low production costs. Therefore, the case body 401 being the integrally stamped member can reduce the process steps for the case body 401, thereby reducing the production cost of the case body 401. Meanwhile, the overall weight of the case body 401 can be reduced while ensuring the rigidity of the case body 401, thereby reducing the overall weight of the battery 1000, and reducing the load on the vehicle 1.

Optionally, the case 300 further includes a cover plate 303. The cover plate 303 is formed in a flat plate shape arranged horizontally. The cover plate 303 is arranged on a side of the case 300 facing away from the bottom wall, and is configured to seal the case 300.

Optionally, the cover plate 303 may be a carbon steel plate, an aluminum plate, or a composite material plate.

In the above embodiment, by configuring the case body 401 to be the integrally stamped member, the process steps for the case 300 can be reduced, thereby reducing the production cost of the case 300. Meanwhile, the overall weight of the case 300 can be reduced while ensuring the rigidity of the case 300, thereby reducing the overall weight of the battery 1000, and reducing the load on the vehicle 1.

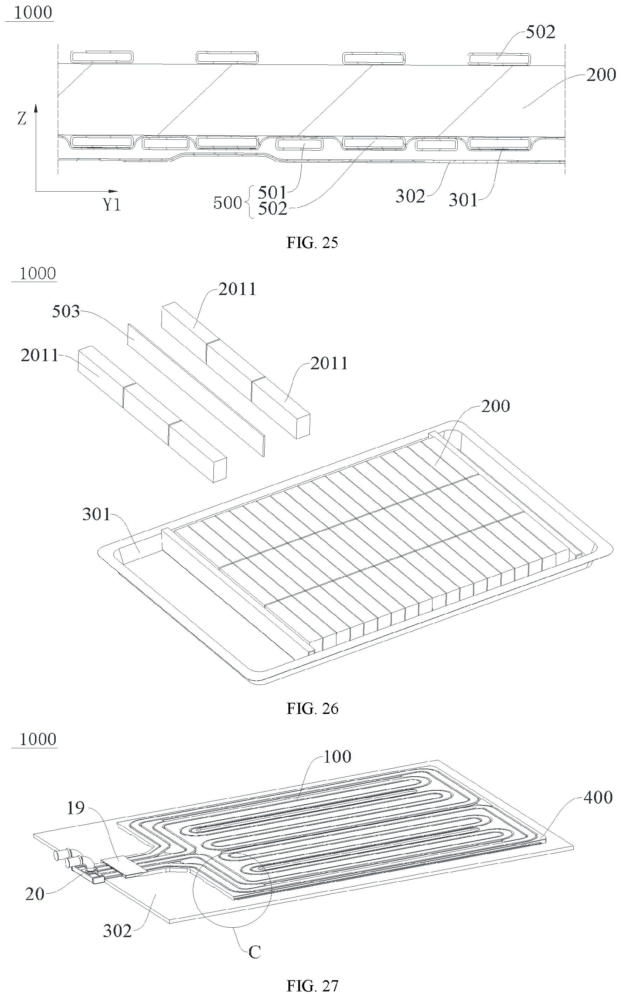

According to an example of the present application, as shown in FIGs. 24 and 25, a thermal management system of the battery 1000 includes a temperature adjustment member 500. The temperature adjustment member 500 includes at least one of a first temperature adjustment member 501 and a second temperature adjustment member 502. The first temperature adjustment member 501 is arranged outside the case body 401 and attached to the outer wall of the case 300. The second temperature adjustment member 502 is arranged within the case 300 and located between any side of the outer peripheral surface of the battery cell 2011 and the case 300. At least one of the first temperature adjustment member 501 and the second temperature adjustment member 502 forms the heat exchange member 100.

Specifically, the temperature adjustment member 500 is configured to adjust the operating temperature of the battery 1000, such that the operating temperature can be maintained within a safe operating range. From the above description "the temperature adjustment member 500 includes at least one of a first temperature adjustment member 501 and a second temperature adjustment member 502", it can be understood that the temperature adjustment member may only include the first temperature adjustment member 501, or only include the second temperature adjustment member 502, or include both the first temperature adjustment member 501 and the second temperature adjustment member 502.

From the description "at least one of the first temperature adjustment member 501 and the second temperature adjustment member 502 forms the heat exchange member 100", it can be understood that only the first temperature adjustment member 501 may be formed as the heat exchange member 100, or only the second temperature adjustment member 502 may be formed as the heat exchange member 100, or both may be formed as the heat exchange member 100.

From the description "the second temperature adjustment member 502 is arranged within the case 300 and located between any side of the outer peripheral surface of the battery cell 2011 and the case 300", it can be understood that the second temperature adjustment member 502 may be arranged between the battery cell 2011 and the bottom wall of the case body 401, or between the battery cell 2011 and the cover plate 303 of the case 300, or between the battery cell 2011 and the surrounding wall of the case 300.

When the temperature adjustment member 500 only includes the first temperature adjustment member 501, the first temperature adjustment member 501 is formed as the heat exchange member 100. The temperature adjustment member 500 is arranged outside the case body 401 and attached to the outer wall of the bottom wall of the case body 401. The bottom of the case body 401 can act as a heat spreader to uniformly transmit the temperature of the heat exchange member 100 to the battery assembly 200 and perform heat exchange with the battery assembly 200. In this case, the bottom of the case body 401 can also provide an isolation effect, preventing leakage of the heat exchange member 100 from affecting the internal battery cells 2011.

When the temperature adjustment member 500 only includes the second temperature adjustment member 502, the second temperature adjustment member 502 is formed as the heat exchange member 100. The temperature adjustment member 500 is arranged within the case 300 of the battery 1000 and located between any side of the outer peripheral surface of the battery cell 2011 and the case 300. In this case, the heat exchange member 100 can directly perform heat exchange with the battery cell 2011, thereby improving the heat transfer effect of the heat exchange member 100.

When the temperature adjustment member 500 includes both the first temperature adjustment member 501 and the second temperature adjustment member 502, the first temperature adjustment member 501 is arranged outside the case body 401 and attached to the outer wall of the bottom wall of the case body 401, and the second temperature adjustment member 502 is arranged within the case 300 and located between any side of the outer peripheral surface of the battery cell 2011 and the case 300. Meanwhile, one of the first temperature adjustment member 501 and the second temperature adjustment member 502 may be formed as the heat exchange member 100, or both may be formed as the heat exchange member 100.

In the above embodiment, by configuring at least one of the first temperature adjustment member 501 and the second temperature adjustment member 502 to be formed as the heat exchange member 100, the thermal management system of the battery 1000 can better perform thermal management on the battery 1000, such that during the operation of the battery 1000, the battery assembly 200 can operate in a good temperature environment, enabling the operation of the battery 1000 to be more stable and enabling a better performance of the battery 1000.

According to an example of the present application, as shown in FIG. 26, the thermal management system of the battery 1000 further includes a third temperature adjustment member 503. The third temperature adjustment member 503 is arranged within the case body 401 and located between two adjacent battery cells 2011. The structure of the third temperature adjustment member 503 is the same as or different from the structure of the heat exchange member 100.

Specifically, in some embodiments, the structure of the third temperature adjustment member 503 is the same as the structure of the heat exchange member 100. In other embodiments, the structure of the third temperature adjustment member 503 is different from the structure of the heat exchange member 100. For example, the third temperature adjustment member 503 may be formed as a harmonica tube plate or a U-shaped tube.

Furthermore, a plurality of third temperature adjustment members 503 are provided, and the plurality of third temperature adjustment members 503 are separately arranged between two adjacent battery cells 2011.

In the above embodiment, by providing the third temperature adjustment member 503 arranged between two adjacent battery cells 2011, the third temperature adjustment member 503 can be in contact with the large surface of the battery cells 2011, thereby increasing the contact area between the third temperature adjustment member 503 and the battery cells 2011, improving the heat exchange effect of the third temperature adjustment member 503, and improving the heat exchange efficiency of the entire battery 1000.

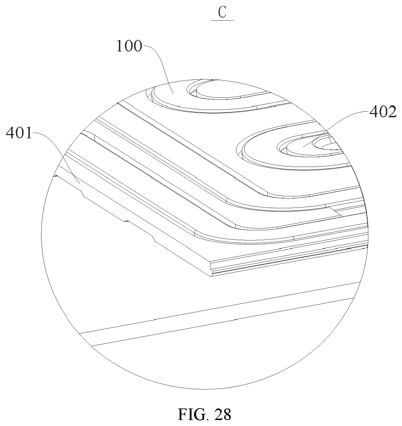

According to an example of the present application, as shown in FIGs. 24, 27, and 28, the case 300 further includes a bottom protective plate 302, the bottom protective plate 302 is arranged on a lower side of the case body 401, and the heat exchange member 100 is arranged between the case body 401 and the bottom protective plate 302. The battery 1000 further includes a foam member 400, and at least a portion of the foam member 400 is filled in a gap formed by the bending of the heat exchange tube of the heat exchange member 100.

It can be understood that the foam member 400 may be partially filled in the gap formed by the bending of the heat exchange tube of the heat exchange member 100, or may be completely filled in the gap formed by the bending of the heat exchange tube of the heat exchange member 100. The gap formed by the bending of the heat exchange tube of the heat exchange member 100 mainly includes gaps between the plurality of first heat exchange portions 111 of the first heat exchange section 11, a gap between the first heat exchange section 11 and the second heat exchange section 12, a gap between the second heat exchange section 12 and the third heat exchange section 13, and a gap between the first inlet/outlet section 15 and the second inlet/outlet section 17.

Furthermore, when a plurality of heat exchange tubes of the heat exchange member 100 are provided, the foam member 400 may also be filled in a gap between adjacent heat exchange tubes.

Furthermore, a portion of the foam member 400 may also be filled at the outer circumference of the heat exchange member 100.

Specifically, the foam member 400 is a component formed by foaming a foam material. The component formed by foaming has a honeycomb structure or a porous structure, such that when the battery 1000 is subjected to an external impact, the porous structure of the foam member 400 can absorb certain impact energy, thereby further reducing the probability of damage to the heat exchange member 100.

Optionally, the foam member 400 may be formed by foaming in a foaming mold. The foam member 400 may be integrally connected to the bottom protective plate 302 in the foaming mold through foaming, or may be integrally connected to the case main body 301 in the foaming mold through foaming. In this way, the foam member 400 can be integrally formed with the bottom protective plate 302 or the case main body 301, thereby reducing the number of components, reducing the assembly steps, enhancing the assembly efficiency, and improving the connection reliability between the foam member 400 and the bottom protective plate 302 or the case main body 301. In addition, the foam member 400 may also be directly formed by foaming in the case 300. Specifically, the foam material may be directly filled between the bottom protective plate 302, the heat exchange member 100, and the case body 401, such that the foam member is formed in the gaps between the bottom protective plate 302, the heat exchange member 100, and the case body 401.

In the above embodiment, by providing the foam member 400 and filling at least a portion of the foam member 400 in the gap formed by the bending of the heat exchange tube of the heat exchange member 100, the heat exchange member 100 can be fixed to a certain extent, such that the heat exchange member 100 can be more stably arranged between the bottom protective plate 302 and the bottom wall of the case body 401. Meanwhile, when the battery 1000 is subjected to an external impact, the foam member 400 can also absorb certain impact energy to provide a certain protective effect on the heat exchange member 100, thereby further reducing the probability of damage to the heat exchange member 100.

According to an example of the present application, as shown in FIGs. 24, 27, and 28, the foam member 400 includes a body 401 and a plurality of ribs 402. The plurality of ribs 402 are formed on the surface of the body 401 on a side in the thickness direction, and the plurality of ribs 402 and the body 401 cooperatively define an accommodating groove. The heat exchange tube is arranged in the accommodating groove, and the thickness of the heat exchange tube is greater than the depth of the accommodating groove.

Specifically, the plurality of ribs 402 are formed on a side of the body 401 facing the heat exchange member 100 in the thickness direction, and the plurality of ribs 402 are arranged in the gap of the heat exchange tube and may be configured to limit the movement of the heat exchange tube, thereby improving the stability of the heat exchange member 100.

The description "the thickness of the heat exchange tube is greater than the depth of the accommodating groove" is intended to illustrate that when the heat exchange tube is arranged in the accommodating groove, a side of the heat exchange tube facing away from the bottom wall of the accommodating groove may protrude from an end surface of the rib 402 distal to the body 401. In other words, the heat exchange tube may protrude from the surface of the foam member 400. In this way, the heat exchange tube can be directly attached to the case main body 301 for heat exchange, thereby ensuring the heat exchange effect of the heat exchange tube.

In the above embodiment, by providing the plurality of ribs 402, the movement of the heat exchange tube can be limited, thereby improving the stability of the heat exchange member 100. Meanwhile, by setting the thickness of the heat exchange tube to be greater than the depth of the accommodating groove, the heat exchange effect of the heat exchange tube can be ensured.

In a third aspect, an embodiment of the present application provides an electric device. The electric device includes the battery 1000 according to the embodiments of the second aspect of the present application.

In the electric device according to the embodiment of the present application, by providing the battery 1000 according to the embodiments of the second aspect, the overall performance of the electric device is improved.

Nine specific implementable examples of the battery 1000 according to the present application will be described below with reference to FIGs. 2 to 28.

### Example 1

Referring to FIG. 24, the battery 1000 includes a battery assembly 200, a heat exchange member 100, a case 300, and a foam member 400. Specifically, the case 300 includes a case body 401 and a bottom protective plate 302. The battery assembly 200 is arranged within the case body 401, and the heat exchange member 100 is arranged between the case body 401 and the bottom protective plate 302.

Specifically, as shown in FIG. 4, the battery assembly 200 includes four battery units 201. Each battery unit 201 includes a plurality of battery cells 2011, and the plurality of battery cells 2011 are stacked in the thickness direction of the battery cells 2011. The four battery units 201 are arranged side by side in the length direction of the battery cells 2011. The thickness direction of the battery cells 2011 is the X1 direction, and the length direction of the battery cells 2011 is the Y1 direction. In addition, two groups of battery cells located at two ends of the battery assembly 200X1 are a third group of battery cells 204 and a second group of battery cells 203, respectively, a group of battery cells adjacent to the third group of battery cells 204 is a fifth group of battery cells 206, and two groups of battery cells located at two ends of the battery assembly 200Y1 are both first groups of battery cells 202.

The heat exchange member 100 includes two heat exchange tubes, each of the two heat exchange tubes defines a first heat exchange flow channel 10 inside, the two first heat exchange flow channels 10 are spaced apart in the Y1 direction and are arranged symmetrically about the center of the battery assembly 200 in the X1 direction, and each first heat exchange flow channel 10 includes: three first heat exchange portions 111, one second heat exchange portion 121, one third heat exchange portion 122, one fourth heat exchange portion 125, and one third heat exchange section 13. The fourth heat exchange portion 125, the second heat exchange portion 121, and the third heat exchange portion 122 are sequentially connected to form a U-shaped structure, and the three first heat exchange portions 111 are arranged in a bent manner within the U-shaped structure.

Specifically, the second heat exchange portion 121 and the first heat exchange portions 111 both extend linearly in the X1 direction and are spaced apart in the Y1 direction. The second heat exchange portion 121 is arranged on a side of the first heat exchange portions 111 proximal to an edge position of the battery 1000 in the Y1 direction. The third heat exchange portion 122, the fourth heat exchange portion 125, and the third heat exchange section 13 all extend linearly in the Y1 direction. The third heat exchange portion 122 is arranged on a side of the three first heat exchange portions 111 proximal to the coordinate origin in the X1 direction, and is connected to an end of the second heat exchange portion 121 proximal to the coordinate origin in the X1 direction and an end, that is proximal to the coordinate origin in the X1 direction, of the first heat exchange portion 111 at a position that is farthest from the second heat exchange portion 121. The fourth heat exchange portion 125 is arranged on a side of the three first heat exchange portions 111 distal to the coordinate origin in the X1 direction and is connected to an end of the second heat exchange portion 121 distal to the coordinate origin in the X1 direction. The third heat exchange section 13 is arranged on a side of the plurality of first heat exchange portions 111 distal to the coordinate origin in the X1 direction, and an end of the third heat exchange section 13 is connected to an end, that is distal to the coordinate origin in the X1 direction, of the first heat exchange portion 111 at a position that is closest to the second heat exchange portion 121.

Furthermore, the second heat exchange portion 121 and the first heat exchange portion 111 that is closest to the second heat exchange portion 121 perform heat exchange with the first group of battery cells 202, the third heat exchange portion 122 performs heat exchange with the second group of battery cells 203, the third heat exchange section 13 performs heat exchange with the third group of battery cells 204, and the fourth heat exchange portion 125 is arranged on the outer side of the battery assembly 200.

As shown in FIG. 4, taking the first heat exchange flow channel 10 arranged on a side distal to the coordinate origin in the Y1 direction as an example, the second heat exchange portion 121, the first heat exchange portion 111a, the first heat exchange portion 111b, and the first heat exchange portion 111c extend linearly in the X1 direction and are arranged sequentially from the side distal to the coordinate origin to a side proximal to the coordinate origin in the Y1 direction. The first heat exchange portion 111a, the first heat exchange portion 111b, and the first heat exchange portion 111c are sequentially connected. The second heat exchange portion 121 and the first heat exchange portion 111a perform heat exchange with the first group of battery cells 202, and the first heat exchange portion 111b and the first heat exchange portion 111c perform heat exchange with the battery unit 201 adjacent to the first group of battery cells 202. The third heat exchange portion 122 extends linearly in the Y1 direction and is connected between the end of the second heat exchange portion 121 proximal to the coordinate origin in the X1 direction and the first heat exchange portion 111c for heat exchange with the second group of battery cells 203. The fourth heat exchange portion 125 is connected to the end of the second heat exchange portion 121 distal to the coordinate origin in the X1 direction and extends in the length direction of the battery cells 2011 to a position proximal to the first heat exchange portion 111c. The third heat exchange section 13 is connected to an end of the first heat exchange portion 111a distal to the coordinate origin in the X1 direction and extends in the length direction of the battery cells 2011 to a position proximal to the first heat exchange portion 111c, and performs heat exchange with the third group of battery cells 204.

During the process of heating and maintaining the temperature of the battery assembly 200, the flow direction of the first heat exchange flow channel 10 is sequentially the fourth heat exchange portion 125, the second heat exchange portion 121, the third heat exchange portion 122, the first heat exchange portion 111c, the first heat exchange portion 111b, the first heat exchange portion 111a, and the third heat exchange section 13. During the process of cooling the battery assembly 200, the flow direction of the first heat exchange flow channel 10 is sequentially the third heat exchange section 13, the first heat exchange portion 111a, the first heat exchange portion 111b, the first heat exchange portion 111c, the third heat exchange portion 122, the second heat exchange portion 121, and the fourth heat exchange portion 125.

Furthermore, the heat exchange tube is formed by bending a single heat exchange tube. The joints between the fourth heat exchange portion 125 and the second heat exchange portion 121, between the second heat exchange portion 121 and the third heat exchange portion 122, between the third heat exchange portion 122 and the first heat exchange portion 111, and between the first heat exchange portion 111 and the third heat exchange section 13 are all bent in a 90° circular arc shape, and the connections between the plurality of first heat exchange portions 111 are all bent in a 180° circular arc shape.

In addition, two ends of the heat exchange tube are separately formed as a first tube portion and a second tube portion. The first tube portion and the second tube portion separately serve as a water inlet section and a water outlet section of the heat exchange flow channel. One end of the first tube portion is connected to a first flow channel interface 22 of a manifold 20 to form a first inlet/outlet of the heat exchange flow channel, and the other end of the first tube portion is connected to the fourth heat exchange portion 125 in a bent manner. One end of the second tube portion is connected to a second flow channel interface 23 of the manifold 20 to form a second inlet/outlet of the heat exchange flow channel, and the other end of the second tube portion is connected to the third heat exchange section 13 in a bent manner.

The heat exchange member 100 further includes the manifold 20 and a mounting member 19. The manifold member includes a tube body 21, the first flow channel interface 22, the second flow channel interface 23, and a separation structure 24. Specifically, the tube body 21 is a rectangular tube with two ends open. The first flow channel interface 22 and the second flow channel interface 23 are arranged on the same side of the tube body 21. Two first flow channel interfaces 22 and two second flow channel interfaces 23 are separately provided, and the two second flow channel interfaces 23 are arranged on two sides of the first flow channel interfaces 22. The separation structure 24 is arranged on the inner side of the tube body 21, and the separation structure 24 separates the tube body 21 into a first space 211 and a second space 212 that are independent of each other. The first space 211 is in communication with the two first flow channel interfaces 22, and the second space 212 is in communication with the two second flow channel interfaces 23. The second space 212 includes a first segment, a second segment, and a third segment that are sequentially in communication with each other in the length direction of the tube body 21. The cross-section of the second space 212 is formed in a C-shape. The first segment and the third segment are separately located on two sides of the first space 211, and the second segment is arranged side by side with the first space 211.

The mounting member 19 is configured to be in sealing connection with the case 300 of the battery 1000. Through holes communicating with spaces on two sides of the mounting member 19 are formed in the mounting member 19, and the first tube portion and the second tube portion pass through the through holes and are in sealing connection with the through holes.

The foam member 400 includes a body 401 and a plurality of ribs 402. The plurality of ribs 402 are formed on the surface of the body 401 on a side facing the case 300 in the thickness direction. The plurality of ribs 402 and the body 401 cooperatively define an accommodating groove. The heat exchange tube is arranged in the accommodating groove, the plurality of ribs 402 are filled in a gap formed by the bending of the heat exchange tube of the heat exchange member 100, and the thickness of the heat exchange tube is greater than the depth of the accommodating groove.

According to the battery 1000 of the embodiments of the present application, by providing the heat exchange member 100 according to the embodiments of the first aspect, bending the second heat exchange section 12 to form the U-shaped region 120, and arranging the first heat exchange section 11 in a bent manner within the U-shaped region 120, when the heat exchange member 100 of this embodiment is used for heat exchange with the battery assembly 200, the U-shaped region 120 formed by the peripheral second heat exchange section 12 may be aligned with the peripheral battery cells of the battery, and the first heat exchange section 11 within the U-shaped region 120 may be aligned with the internal battery cells. This allows the heat exchange member 100 to compensate for the internal and external temperature difference caused by heat exchange between the peripheral battery cells 2011 and the environment, such that the heat exchange effects of the battery cells 2011 at the periphery of the battery assembly 200 and the battery cells 2011 inside the battery assembly 200 tend to be consistent, improving the temperature uniformity of the battery 1000, thereby improving the service life of the battery 1000 to a certain extent.

### Example 2

Referring to FIG. 18, the structure in this example is substantially the same as that in Example 1, where the same components are denoted by the same reference numerals. The only difference is that the fourth heat exchange portion 125 performs heat exchange with the third group of battery cells 204 in Example 1, while the fourth heat exchange portion 125 does not perform heat exchange with the battery assembly 200 in Example 2.

Specifically, the third heat exchange section 13 performs heat exchange with the third group of battery cells 204, and the fourth heat exchange portion 125 is arranged on the outer side of the battery assembly 200 and does not perform heat exchange with the battery assembly 200.

### Example 3

Referring to FIG. 19, the structure in this example is substantially the same as that in Example 1, where the same components are denoted by the same reference numerals. The only difference is that the battery assembly 200 includes four battery units 201 and two first heat exchange flow channels 10 are provided in Example 1, while the battery assembly 200 includes only one battery unit 201 and only one first heat exchange flow channel 10 is provided in Example 3.

Specifically, the battery assembly 200 includes one battery unit 201, and the first heat exchange flow channel 10 performs heat exchange with the one battery unit 201. The first heat exchange section 11 includes two first heat exchange portions 111, and the second heat exchange section 12 includes one second heat exchange portion 121, one third heat exchange portion 122, one fourth heat exchange portion 125, and one fifth heat exchange portion 127. The first heat exchange portions 111, the second heat exchange portion 121, and the fifth heat exchange portion 127 all extend linearly in the X1 direction, and the third heat exchange portion 122, the fourth heat exchange portion 125, and the third heat exchange section 13 all extend linearly in the Y1 direction. Furthermore, the second heat exchange portion 121 is arranged on a side of the two first heat exchange portions 111 distal to the coordinate origin in the Y1 direction. The fifth heat exchange portion 127 is arranged on a side of the two first heat exchange portions 111 proximal to the coordinate origin in the Y1 direction. The third heat exchange portion 122 is arranged on a side of the two first heat exchange portions 111 proximal to the coordinate origin in the X1 direction, and is connected to an end of the second heat exchange portion 121 proximal to the coordinate origin in the X1 direction and an end of the fifth heat exchange portion 127 proximal to the coordinate origin in the X1 direction. The fourth heat exchange portion 125 is connected to an end of the second heat exchange portion 121 distal to the coordinate origin in the X1 direction, and is arranged on the outer side of the battery assembly 200. The third heat exchange section 13 is connected to an end, that is distal to the coordinate origin in the X1 direction, of the first heat exchange portion 111 proximal to the second heat exchange portion 121. Therefore, the second heat exchange portion 121, the third heat exchange portion 122, and the fifth heat exchange portion 127 perform heat exchange with the peripheral edge of the battery assembly 200, and the two first heat exchange portions 111 perform heat exchange with the middle position of the peripheral edge of the battery 1000.

### Example 4

Referring to FIG. 21, the structure in this example is substantially the same as that in Example 3, where the same components are denoted by the same reference numerals. The only difference is that the first heat exchange portion 111 extends linearly in the Y1 direction in Example 3, while the first heat exchange portion 111 extends linearly in the X1 direction in Example 4.

Specifically, the first heat exchange portions 111, the third heat exchange portion 122, and the fourth heat exchange portion 125 all extend linearly in the Y1 direction, and the second heat exchange portion 121 extends linearly in the X1 direction. In this way, the plurality of connected first heat exchange portions 111 can form an S-shaped heat exchange flow channel extending in the second direction, increasing the heat exchange area between the first heat exchange portions 111 and the battery cells 2011, thereby enhancing the heat exchange effect of the battery cells 2011.

### Example 5

Referring to FIG. 22, the structure in this example is substantially the same as that in Example 1, where the same components are denoted by the same reference numerals. The only difference is that the battery assembly 200 includes four battery units 201 and each first heat exchange flow channel 10 includes three first heat exchange portions 111 in Example 1, while the battery assembly 200 includes six battery units 201 and each first heat exchange flow channel 10 includes five first heat exchange portions 111 in Example 5.

Specifically, the six battery units 201 match two first heat exchange flow channels 10. Therefore, each first heat exchange flow channel 10 needs to perform heat exchange with three battery units 201. Each first heat exchange flow channel 10 includes five first heat exchange portions 111 and one second heat exchange portion 121. Therefore, each battery unit 201 performs heat exchange with two heat exchange portions. The second heat exchange portion 121 and the first heat exchange portion 111 that is closest to the second heat exchange portion 121 are attached to the first group of battery cells 202 for heat exchange, and any one of the remaining battery units 201 is attached to the other two first heat exchange portions 111 for heat exchange.

Taking the first heat exchange flow channel 10 arranged on a side distal to the coordinate origin in the Y1 direction in the figure as an example, the first heat exchange flow channel 10 includes one second heat exchange portion 121, five first heat exchange portions 111, one third heat exchange portion 122, one fourth heat exchange portion 125, and one third heat exchange section 13. The second heat exchange portion 121, the first heat exchange portion 111a, the first heat exchange portion 111b, the first heat exchange portion 111c, the first heat exchange portion 111d, and the first heat exchange portion 111e extend in the thickness direction of the battery cells 2011 and are arranged sequentially from the side distal to the coordinate origin to a side proximal to the coordinate origin in the Y1 direction. The first heat exchange portion 111a, the first heat exchange portion 111b, the first heat exchange portion 111c, the first heat exchange portion 111d, and the first heat exchange portion 111e are sequentially connected. The second heat exchange portion 121 and the first heat exchange portion 111a perform heat exchange with the first group of battery cells 202, the first heat exchange portion 111b and the first heat exchange portion 111c perform heat exchange with the battery unit 201 adjacent to the first group of battery cells 202, and the first heat exchange portion 111d and the first heat exchange portion 111e perform heat exchange with the battery unit 201 distal to the first group of battery cells 202. The third heat exchange portion 122 extends in the length direction of the battery cells 2011 and is connected between an end of the second heat exchange portion 121 proximal to the coordinate origin in the X1 direction and the first heat exchange portion 111e for heat exchange with the second group of battery cells 203. The fourth heat exchange portion 125 is connected to an end of the second heat exchange portion 121 distal to the coordinate origin in the X1 direction and extends in the length direction of the battery cells 2011 to a position proximal to the first heat exchange portion 111e. The third heat exchange section 13 is connected to an end of the first heat exchange portion 111a distal to the coordinate origin in the X1 direction and extends in the length direction of the battery cells 2011 to a position proximal to the first heat exchange portion 111e, and performs heat exchange with the third group of battery cells 204.

### Example 6

Referring to FIG. 23, the structure in this example is substantially the same as that in Example 1, where the same components are denoted by the same reference numerals. The only difference is that the battery assembly 200 includes four battery units 201 and each first heat exchange flow channel 10 includes three first heat exchange portions 111 in Example 1, while the battery assembly 200 includes four battery units 201 and each first heat exchange flow channel 10 includes five first heat exchange portions 111 in Example 6.

Specifically, the four battery units 201 match two first heat exchange flow channels 10. Therefore, each first heat exchange flow channel 10 needs to perform heat exchange with two battery units 201. Each first heat exchange flow channel 10 includes five first heat exchange portions 111 and one second heat exchange portion 121. Therefore, each battery unit 201 may perform heat exchange with three heat exchange portions.

Taking the first heat exchange flow channel 10 arranged on a side distal to the coordinate origin in the Y1 direction in the figure as an example, the first heat exchange flow channel 10 includes one second heat exchange portion 121, five first heat exchange portions 111, one third heat exchange portion 122, one fourth heat exchange portion 125, and one third heat exchange section 13. The second heat exchange portion 121, the first heat exchange portion 111a, the first heat exchange portion 111b, the first heat exchange portion 111c, the first heat exchange portion 111d, and the first heat exchange portion 111e extend in the thickness direction of the battery cells 2011 and are arranged sequentially from the side distal to the coordinate origin to a side proximal to the coordinate origin in the Y1 direction. The first heat exchange portion 111a, the first heat exchange portion 111b, the first heat exchange portion 111c, the first heat exchange portion 111d, and the first heat exchange portion 111e are sequentially connected. The second heat exchange portion 121, the first heat exchange portion 111a, and the first heat exchange portion 111b perform heat exchange with the first group of battery cells 202, and the first heat exchange portion 111c, the first heat exchange portion 111d, and the first heat exchange portion 111e perform heat exchange with the battery unit 201 adjacent to the first group of battery cells 202. The third heat exchange portion 122 extends in the length direction of the battery cells 2011 and is connected between an end of the second heat exchange portion 121 proximal to the coordinate origin in the X1 direction and the first heat exchange portion 111e for heat exchange with the second group of battery cells 203. The fourth heat exchange portion 125 is connected to an end of the second heat exchange portion 121 distal to the coordinate origin in the X1 direction and extends in the length direction of the battery cells 2011 to a position proximal to the first heat exchange portion 111e. The third heat exchange section 13 is connected to an end of the first heat exchange portion 111a distal to the coordinate origin in the X1 direction and extends in the length direction of the battery cells 2011 to a position proximal to the first heat exchange portion 111e, and performs heat exchange with the third group of battery cells 204.

### Example 7

Referring to FIG. 8, the structure in this example is substantially the same as that in Example 1, where the same components are denoted by the same reference numerals. The only difference is that the heat exchange member 100 includes only two first heat exchange flow channels 10 in Example 1, while the heat exchange member 100 includes two first heat exchange flow channels 10 and one second heat exchange flow channel 30 in Example 7.

Specifically, the second heat exchange flow channel 30 is arranged between the two first heat exchange flow channels 10, and the structure of the second heat exchange flow channel 30 is different from that of the first heat exchange flow channels 10. The second heat exchange flow channel 30 includes two fourth heat exchange sections 31 extending linearly in the X1 direction, and the two fourth heat exchange sections 31 are spaced apart in the Y1 direction and are connected in a bent manner to form a U-shaped heat exchange flow channel.

### Example 8

Referring to FIG. 9, the structure in this example is substantially the same as that in Example 1, where the same components are denoted by the same reference numerals. The only difference is that the heat exchange member 100 includes only two first heat exchange flow channels 10 in Example 1, while the heat exchange member 100 includes one first heat exchange flow channel 10 and one third heat exchange flow channel 40 in Example 8.

Specifically, the first heat exchange flow channel 10 and the third heat exchange flow channel 40 each include the first heat exchange portion 111, the second heat exchange portion 121, the third heat exchange portion 122, and the fourth heat exchange portion 125. A plurality of first heat exchange portions 111, third heat exchange portions 122, and fourth heat exchange portions 125 of the first heat exchange flow channel 10 and the third heat exchange flow channel 40 each extend in the X1 direction, and the second heat exchange portions 121 extend in the Y1 direction. The fourth heat exchange portion 125, the second heat exchange portion 121, and the third heat exchange portion 122 are sequentially connected in a bent manner to form a U-shaped structure with an opening facing a side distal to the coordinate origin in the X1 direction. A plurality of first heat exchange portions 111 are provided. The plurality of first heat exchange portions 111 are arranged within the U-shaped region 120, and are spaced apart in the X1 direction and sequentially connected in a bent manner.

The third heat exchange portion 122 of the first heat exchange flow channel 10 is arranged on a side of the plurality of first heat exchange portions 111 distal to the coordinate origin in the Y1 direction, and the fourth heat exchange portion 125 is arranged on a side of the plurality of first heat exchange portions 111 proximal to the coordinate origin in the Y1 direction. The third heat exchange flow channel 40 is connected to the first heat exchange portion 111 at a position that is farthest from the coordinate origin in the Y1 direction. The third heat exchange portion 122 of the third heat exchange flow channel 40 is arranged on a side of the plurality of first heat exchange portions 111 proximal to the coordinate origin in the Y1 direction, and the fourth heat exchange portion 125 is arranged on a side of the plurality of first heat exchange portions 111 distal to the coordinate origin in the Y1 direction. The third heat exchange portion 122 of the third heat exchange flow channel 40 is connected to the first heat exchange portion 111 at a position that is closest to the coordinate origin in the Y1 direction. The third heat exchange flow channel 40 is arranged between the fourth heat exchange portion 125 of the first heat exchange flow channel 10 and the plurality of first heat exchange portions 111.

In addition, the first heat exchange flow channel 10 and the third heat exchange flow channel 40 each further include a first inlet/outlet section 15 and a second inlet/outlet section 17. The first inlet/outlet section 15 of the first heat exchange flow channel 10 is connected to the fourth heat exchange portion 125, and the second inlet/outlet section 17 is connected to the first heat exchange portion 111 at the position that is closest to the coordinate origin in the Y1 direction. The first inlet/outlet section 15 of the third heat exchange flow channel 40 is connected to the first heat exchange portion 111 at the position that is farthest from the coordinate origin in the Y1 direction, and the second inlet/outlet section 17 is connected to the fourth heat exchange portion 125.

### Example 9

Referring to FIG. 10, the structure in this example is substantially the same as that in Example 1, where the same components are denoted by the same reference numerals. The only difference is that the heat exchange member 100 includes only two first heat exchange flow channels 10 in Example 1, while the heat exchange member 100 includes one first heat exchange flow channel 10 and two third heat exchange flow channels 40 in Example 9.

Specifically, the structure of the two third heat exchange flow channels 40 is the same as the structure of the first heat exchange flow channel 10. The first heat exchange flow channel 10 and the two third heat exchange flow channels 40 each include the first heat exchange portion 111, the second heat exchange portion 121, the third heat exchange portion 122, and the fourth heat exchange portion 125. The fourth heat exchange portion 125, the second heat exchange portion 121, and the third heat exchange portion 122 of any one of the first heat exchange flow channel 10 and the two third heat exchange flow channels 40 are sequentially connected in a bent manner to form a U-shaped structure with an opening facing a side distal to the coordinate origin in the X1 direction. A plurality of first heat exchange portions 111 are provided. The plurality of first heat exchange portions 111 are arranged within the U-shaped region 120, and the plurality of first heat exchange portions 111 extend linearly in the X1 direction, and are spaced apart in the Y1 direction and sequentially connected in a bent manner. The second heat exchange portion 121 extends in the Y1 direction, and the third heat exchange portion 122 and the fourth heat exchange portion 125 both extend in the X1 direction.

The third heat exchange portion 122 of the first heat exchange flow channel 10 is located on a side of the plurality of first heat exchange portions 111 distal to the coordinate origin in the Y1 direction, and is connected to the first heat exchange portion 111 at a position that is farthest from the coordinate origin in the Y1 direction. The fourth heat exchange portion 125 is located on a side of the plurality of first heat exchange portions 111 proximal to the coordinate origin in the Y1 direction.

The third heat exchange portion 122 of the third heat exchange flow channel 40a is located on the side of the plurality of first heat exchange portions 111 distal to the coordinate origin in the Y1 direction, and is connected to the first heat exchange portion 111 at the position that is farthest from the coordinate origin in the Y1 direction. The third heat exchange portion 122 of the third heat exchange flow channel 40a and the first heat exchange portion 111 of the third heat exchange flow channel 40a at the position that is farthest from the coordinate origin in the Y1 direction are located between the third heat exchange portion 122 of the first heat exchange flow channel 10 and the plurality of first heat exchange portions 111 of the first heat exchange flow channel 10. The plurality of first heat exchange portions 111 of the first heat exchange flow channel 10 are located between the first heat exchange portion 111 of the third heat exchange flow channel 40a at the position that is farthest from the coordinate origin in the Y1 direction and the second first heat exchange portion 111 of the third heat exchange flow channel 40a on a side distal to the coordinate origin in the Y1 direction.

The third heat exchange flow channel 40b is located between the fourth heat exchange portion 125 of the third heat exchange flow channel 40a and the plurality of first heat exchange portions 111 of the third heat exchange flow channel 40a. The fourth heat exchange portion 125 of the third heat exchange flow channel 40b is located on the side of the plurality of first heat exchange portions 111 of the third heat exchange flow channel 40b distal to the coordinate origin in the Y1 direction. The third heat exchange portion 122 of the third heat exchange flow channel 40b is connected to the first heat exchange portion 111 of the third heat exchange flow channel 40 at a position that is closest to the coordinate origin in the Y1 direction.

In addition, the first heat exchange flow channel 10 and the two third heat exchange flow channels 40 each further include a first inlet/outlet section 15 and a second inlet/outlet section 17. The first inlet/outlet section 15 and the second inlet/outlet section 17 are respectively connected to the fourth heat exchange portion 125 and the first heat exchange portion 111.

Finally, it should be noted that the above examples are only used to illustrate the technical solutions of the present application, rather than limit the same. Although the present application has been described in detail with reference to the foregoing examples, those of ordinary skill in the art should understand that modifications can still be made to the technical solutions recorded in the foregoing examples, or equivalent substitutions to some or all of the technical features can be made. However, such modifications or substitutions do not make the spirit of the corresponding technical solutions deviate from the scope of the technical solutions in the examples of the present application, and shall all fall within the scope of the claims and specification of the present application. In particular, the technical features mentioned in the examples can be combined in any manner, provided that there is no structural conflict. The present application is not limited to the specific examples disclosed herein, but encompasses all technical solutions falling within the scope of the claims.

## Claims

1. A heat exchange member applicable to a battery, comprising a first heat exchange flow channel, wherein the first heat exchange flow channel comprises a first heat exchange section and a second heat exchange section; the second heat exchange section is bent to form a U-shaped region, and the first heat exchange section is arranged in a bent manner within the U-shaped region and is connected to the second heat exchange section in a bent manner.

2. The heat exchange member according to claim 1, wherein the second heat exchange section is located at an outermost circumference of the first heat exchange flow channel.

3. The heat exchange member according to claim 1, wherein the first heat exchange section and the second heat exchange section are bent in a same plane.

4. The heat exchange member according to claim 1, wherein the first heat exchange section comprises a plurality of first heat exchange portions, and the plurality of first heat exchange portions are spaced apart and are sequentially connected in a bent manner.

5. The heat exchange member according to claim 4, wherein the plurality of first heat exchange portions are spaced apart in a first direction, each first heat exchange portion extends linearly in a second direction, and the first direction and the second direction are arranged at an included angle.

6. The heat exchange member according to any one of claims 4 to 5, wherein the first heat exchange section further comprises a first bent portion, wherein the first bent portion is arc-shaped and is connected between two adjacent first heat exchange portions in a bent manner.

7. The heat exchange member according to any one of claims 1 to 6, wherein the second heat exchange section comprises: a second heat exchange portion, a third heat exchange portion, and a fourth heat exchange portion, wherein the second heat exchange portion extends along a first-side peripheral edge of the first heat exchange section; the third heat exchange portion is connected between the second heat exchange portion and the first heat exchange section and extends along a second-side peripheral edge of the first heat exchange section, a first end of the third heat exchange portion is connected to the second heat exchange portion at an included angle, and a second end of the third heat exchange portion is connected to the first heat exchange section at an included angle; the fourth heat exchange portion is in communication with the second heat exchange portion, is connected to the second heat exchange portion at an included angle, and extends along a third-side peripheral edge of the first heat exchange section.

8. The heat exchange member according to claim 7, wherein the first heat exchange section comprises a plurality of first heat exchange portions, and the plurality of first heat exchange portions are sequentially connected in a bent manner in a first direction, wherein
the second heat exchange portion is located on a side of the plurality of first heat exchange portions in the first direction, the third heat exchange portion is located on one side of the plurality of first heat exchange portions in a second direction, and the first direction and the second direction are arranged at an included angle; the first end of the third heat exchange portion is connected to an end of the second heat exchange portion in the second direction, and the second end of the third heat exchange portion is connected to one of the plurality of first heat exchange portions that is farthest from the second heat exchange portion in the first direction; the fourth heat exchange portion is located on the other side of the plurality of first heat exchange portions in the second direction, one end of the fourth heat exchange portion is connected to an end of the second heat exchange portion distal to the third heat exchange portion, and the other end of the fourth heat exchange portion extends in the first direction toward a direction away from the second heat exchange portion; or
the second heat exchange portion is located on a side of the plurality of first heat exchange portions in the second direction, the third heat exchange portion is located on one side of the plurality of first heat exchange portions in the first direction, and the first direction and the second direction are arranged at an included angle; the first end of the third heat exchange portion is connected to an end of the second heat exchange portion in the first direction, and the second end of the third heat exchange portion is connected to one of the plurality of first heat exchange portions that is closest to the third heat exchange portion in the first direction; the fourth heat exchange portion is located on the other side of the plurality of first heat exchange portions in the first direction, one end of the fourth heat exchange portion is connected to an end of the second heat exchange portion distal to the third heat exchange portion, and the other end of the fourth heat exchange portion extends in the second direction toward a direction away from the second heat exchange portion.

9. The heat exchange member according to claim 8, wherein the third heat exchange portion and the fourth heat exchange portion extend in the first direction, and the first heat exchange portion and the second heat exchange portion both extend in the second direction; or
the first heat exchange portion, the third heat exchange portion, and the fourth heat exchange portion all extend in the second direction, and the second heat exchange portion extends in the first direction.

10. The heat exchange member according to claim 9, wherein the third heat exchange portion and the fourth heat exchange portion both extend in the first direction, and a length of the fourth heat exchange portion is less than or equal to a length of the third heat exchange portion in the first direction; or
the first heat exchange portion and the third heat exchange portion extend in the second direction, the second heat exchange portion extends in the first direction, and a length of the third heat exchange portion is greater than or equal to a length of the first heat exchange portion in the second direction.

11. The heat exchange member according to any one of claims 9 to 10, wherein the fourth heat exchange portion extends in the first direction and extends to a position proximal to one of the plurality of first heat exchange portions that is farthest from the second heat exchange portion.

12. The heat exchange member according to any one of claims 8 to 10, wherein the second heat exchange section further comprises a second bent portion and a third bent portion, wherein the second bent portion and the third bent portion are both arc-shaped, the second bent portion is connected between the first end of the third heat exchange portion and the second heat exchange portion, and the third bent portion is connected between the second end of the third heat exchange portion and the first heat exchange portion.

13. The heat exchange member according to any one of claims 7 to 10, wherein the second heat exchange section further comprises a fifth heat exchange portion, wherein the fifth heat exchange portion extends along a fourth-side peripheral edge of the first heat exchange section and closes at least a portion of an opening of the U-shaped region formed by the second heat exchange portion, the third heat exchange portion, and the fourth heat exchange portion.

14. The heat exchange member according to claim 13, wherein the fifth heat exchange portion is arranged opposite to the second heat exchange portion, and
the fifth heat exchange portion is connected between the second end of the third heat exchange portion and the first heat exchange section, and is connected to the third heat exchange portion at an included angle and connected to the first heat exchange section at an included angle; or one end of the fifth heat exchange portion is connected to an end of the fourth heat exchange portion distal to the second heat exchange portion, and the fifth heat exchange portion is connected to the fourth heat exchange portion at an included angle.

15. The heat exchange member according to claim 7, wherein the first heat exchange flow channel further comprises a third heat exchange section, wherein the first heat exchange section is connected between the third heat exchange section and the second heat exchange section, and the third heat exchange section is connected to the first heat exchange section at an included angle.

16. The heat exchange member according to claim 15, wherein the first heat exchange section comprises a plurality of first heat exchange portions, and the plurality of first heat exchange portions are sequentially connected in a bent manner in a first direction;
the third heat exchange section is arranged on a side of the first heat exchange section facing away from the third heat exchange portion, and the third heat exchange section is connected to one of the plurality of first heat exchange portions that is closest to the second heat exchange portion in the first direction.

17. The heat exchange member according to claim 16, wherein the third heat exchange section extends in the first direction toward a direction away from the second heat exchange portion, the first heat exchange portion extends in a second direction, and the first direction and the second direction are arranged at an included angle.

18. The heat exchange member according to claim 17, wherein the third heat exchange section extends in the first direction to a position proximal to one of the plurality of first heat exchange portions that is farthest from the second heat exchange portion.

19. The heat exchange member according to any one of claims 16 to 18, wherein the first heat exchange flow channel further comprises a fourth bent portion, wherein the fourth bent portion is arc-shaped and is connected between the third heat exchange section and the first heat exchange portion in a bent manner.

20. The heat exchange member according to any one of claims 15 to 19, wherein the first heat exchange flow channel further comprises a first inlet/outlet section, wherein one end of the first inlet/outlet section is connected to the third heat exchange section at an included angle, and the other end of the first inlet/outlet section is formed as a first inlet/outlet of the first heat exchange flow channel.

21. The heat exchange member according to claim 20, wherein the first inlet/outlet section extends in a second direction toward a direction away from the first heat exchange section, and the third heat exchange section extends in a first direction.

22. The heat exchange member according to claim 21, wherein the first heat exchange flow channel further comprises a fifth bent portion, wherein the fifth bent portion is arc-shaped and is connected between the third heat exchange section and the first inlet/outlet section in a bent manner.

23. The heat exchange member according to claim 7, wherein the first heat exchange flow channel further comprises a second inlet/outlet section, wherein one end of the second inlet/outlet section is connected to the fourth heat exchange portion at an included angle, and the other end of the second inlet/outlet section is formed as a second inlet/outlet of the first heat exchange flow channel; the second inlet/outlet section extends in a second direction toward a direction away from the first heat exchange section, and the fourth heat exchange portion extends in a first direction.

24. The heat exchange member according to any one of claims 1 to 6, wherein the first heat exchange section is connected downstream of the second heat exchange section in a fluid flow direction; or the heat exchange member is configured such that: during heating of a battery assembly of the battery, the first heat exchange section is connected downstream of the second heat exchange section in a fluid flow direction; during cooling of the battery assembly of the battery, the first heat exchange section is connected upstream of the second heat exchange section in a fluid flow direction.

25. The heat exchange member according to any one of claims 1 to 6, wherein the heat exchange member is provided with one or a plurality of heat exchange flow channels, wherein in a case that a plurality of heat exchange flow channels are provided, the plurality of heat exchange flow channels are spaced apart in a first direction or are arranged in a winding manner relative to each other, at least one heat exchange flow channel is formed as the first heat exchange flow channel, and the plurality of heat exchange flow channels are arranged in parallel.

26. The heat exchange member according to claim 25, wherein the plurality of heat exchange flow channels are spaced apart in the first direction, and two heat exchange flow channels located at two ends in the first direction are both the first heat exchange flow channels; the two first heat exchange flow channels are arranged symmetrically about a center line of the heat exchange member in a second direction, and the second direction and the first direction are arranged at an included angle.

27. The heat exchange member according to any one of claims 25 to 26, wherein the plurality of heat exchange flow channels are arranged symmetrically about a center line of the heat exchange member in a second direction.

28. The heat exchange member according to claim 25, wherein the plurality of heat exchange flow channels further comprise at least one second heat exchange flow channel, wherein the second heat exchange flow channel is arranged between two first heat exchange flow channels, and a structure of any second heat exchange flow channel is the same as or different from a structure of the first heat exchange flow channel.

29. The heat exchange member according to claim 28, wherein the second heat exchange flow channel comprises a plurality of fourth heat exchange sections, wherein the plurality of fourth heat exchange sections are sequentially connected, the fourth heat exchange sections extend in a second direction, and the plurality of fourth heat exchange sections are spaced apart in the first direction.

30. The heat exchange member according to claim 25, wherein the heat exchange member is provided with a plurality of heat exchange flow channels, and the plurality of heat exchange flow channels comprise one first heat exchange flow channel and at least one third heat exchange flow channel, wherein the third heat exchange flow channel is arranged in a bent manner within the U-shaped region of the first heat exchange flow channel, the first heat exchange flow channel and the third heat exchange flow channel are bent in a same plane, and bent structures of the first heat exchange flow channel and the third heat exchange flow channel are the same or different.

31. The heat exchange member according to claim 30, wherein the third heat exchange flow channel comprises a U-shaped region with a same structure as the U-shaped region of the first heat exchange flow channel, and at least a portion of the first heat exchange section of the first heat exchange flow channel is arranged within the U-shaped region of the third heat exchange flow channel.

32. The heat exchange member according to any one of claims 30 to 31, wherein the U-shaped region of the first heat exchange flow channel is located at an outermost circumference of the heat exchange member.

33. The heat exchange member according to claim 25, wherein the heat exchange member comprises at least one heat exchange tube, wherein in a case that a plurality of heat exchange tubes are provided, the plurality of heat exchange tubes are spaced apart in the first direction, and one heat exchange flow channel is defined in an inner side of each heat exchange tube.

34. The heat exchange member according to claim 33, wherein the heat exchange tube is formed by bending a single tube; optionally, the heat exchange tube is bent in an arc shape at bent positions.

35. The heat exchange member according to claim 34, wherein the heat exchange tube is bent in a circular arc shape at bent positions, and a ratio of a bending radius of the heat exchange tube on a center line in a length direction to a width of the heat exchange tube is greater than or equal to 0.6; optionally, the ratio of the bending radius of the heat exchange tube to the width of the heat exchange tube is greater than or equal to 0.8; optionally, a wall thickness of the heat exchange tube at bent positions is greater than or equal to 0.2 mm.

36. The heat exchange member according to claim 34, wherein a thinning rate of a wall thickness of the heat exchange tube due to bending is less than or equal to 50% at bent positions of the heat exchange tube; optionally, the thinning rate of the heat exchange tube due to bending is less than or equal to 30%.

37. The heat exchange member according to claim 33, wherein a wall thickness of the heat exchange tube is 0.2 mm to 3 mm; optionally, the wall thickness of the heat exchange tube is 0.5 mm to 1.2 mm.

38. The heat exchange member according to claim 25, wherein the heat exchange member comprises a heat exchange plate, and the heat exchange flow channel is formed on the heat exchange plate by stamping.

39. The heat exchange member according to claim 25, wherein a width of the heat exchange flow channel is 3 mm to 200 mm; optionally, the width of the heat exchange flow channel is 5 mm to 80 mm; further optionally, a height of the heat exchange flow channel in a third direction is 1 mm to 20 mm; still further optionally, the height of the heat exchange flow channel in a third direction is 4 mm to 6 mm.

40. The heat exchange member according to claim 25, wherein a number of the heat exchange flow channels is 2 to 4.

41. The heat exchange member according to claim 25, wherein the heat exchange member further comprises a manifold, wherein the manifold comprises:
a tube body;
a plurality of first flow channel interfaces, wherein the plurality of first flow channel interfaces are in one-to-one correspondence with and connected to first inlets/outlets of the plurality of heat exchange channels;
a plurality of second flow channel interfaces, wherein the plurality of second flow channel interfaces are in one-to-one correspondence with and connected to second inlets/outlets of the plurality of heat exchange channels, and at least two second flow channel interfaces are respectively located on two sides of the plurality of first flow channel interfaces in an extension direction of the tube body; and
a separation structure, wherein the separation structure is arranged inside the tube body, the separation structure separates the first flow channel interfaces from the second flow channel interfaces inside the tube body, and the plurality of second flow channel interfaces are in communication with each other inside the tube body.

42. The heat exchange member according to claim 41, wherein the tube body is separated by the separation structure into a first space and a second space that are independent of each other, wherein the first space is in communication with the first flow channel interfaces, the second space is in communication with the second flow channel interfaces, the second space comprises a first segment, a second segment, and a third segment that are sequentially in communication with each other in the extension direction of the tube body, the first segment and the third segment are respectively located on two sides of the first space, and the second segment is arranged side by side with the first space.

43. The heat exchange member according to claim 42, wherein the separation structure comprises a first separation plate and a second separation plate, wherein the first separation plate is configured to separate the second segment from the first space, at least two second separation plates are provided and located at two ends of the first separation plate in the extension direction of the tube body, respectively, and the second separation plates are configured to separate the first segment from the first space, and separate the third segment from the first space.

44. The heat exchange member according to claim 25, further comprising:
a first tube portion, wherein an inlet end of the first tube portion is formed as a first inlet/outlet of the heat exchange flow channel;
a second tube portion, wherein an outlet end of the second tube portion is formed as a second inlet/outlet of the heat exchange flow channel; and
a mounting member, wherein the mounting member is configured to be in sealing connection with a case of a battery, through holes communicating with spaces on two sides of the mounting member are formed in the mounting member, and the first tube portion and/or the second tube portion pass through the through holes and are in sealing connection with the through holes.

45. The heat exchange member according to claim 44, wherein the mounting member is provided with a cavity with one side open, the mounting member comprises a mounting plate arranged opposite to an opening of the cavity, the through holes penetrate through the mounting plate, the mounting member is adapted to be arranged between a case body and a bottom protective plate of the case, and an outer peripheral surface of the mounting member is adapted to be in sealing connection with the case body and the bottom protective plate.

46. A battery, comprising the heat exchange member according to any one of claims 1 to 45.

47. The battery according to claim 46, further comprising:
a battery assembly, wherein the battery assembly comprises a battery unit, and the battery unit comprises a plurality of battery cells sequentially stacked in a third direction;
the heat exchange member is arranged on a side of the battery assembly in a fourth direction and performs heat exchange with the battery assembly;
the third direction and the fourth direction are arranged at an included angle.

48. The battery according to claim 47, wherein a plurality of battery cells located at an outermost circumferential periphery of the battery assembly form peripheral battery cells, and at least a portion of the second heat exchange section is attached to the peripheral battery cells.

49. The battery according to claim 48, wherein the battery assembly comprises one battery unit, and all battery cells of the battery unit jointly form the peripheral battery cells; or the battery assembly comprises a plurality of battery units, the plurality of battery units are sequentially arranged in a fifth direction, a plurality of battery cells, located at an outermost periphery of the battery assembly, of the plurality of battery units jointly form the peripheral battery cells, and the third direction, the fourth direction, and the fifth direction are arranged at an included angle to each other.

50. The battery according to claim 49, wherein
the peripheral battery cell group comprises a first group of battery cells, a second group of battery cells, and a third group of battery cells that are arranged adjacently, wherein a plurality of battery cells comprised in the first group of battery cells are stacked in the third direction, a plurality of battery cells comprised in the second group of battery cells are stacked in the fifth direction, and a plurality of battery cells comprised in the third group of battery cells are stacked in the fifth direction;
the second heat exchange section comprises a second heat exchange portion, a third heat exchange portion, and a fourth heat exchange portion that are connected;
the second heat exchange portion extends and is attached to the first group of battery cells to enable heat exchange, and/or the third heat exchange portion extends and is attached to the second group of battery cells to enable heat exchange, and/or the fourth heat exchange portion extends and is attached to the third group of battery cells to enable heat exchange.

51. The battery according to claim 50, wherein the peripheral battery cells further comprise a fourth group of battery cells, a plurality of battery cells comprised in the fourth group of battery cells being arranged in the third direction, and the second heat exchange section further comprises a fifth heat exchange portion, wherein the fifth heat exchange portion closes at least a portion of the opening of the U-shaped region formed by the second heat exchange portion, the third heat exchange portion, and the fourth heat exchange portion, and the fifth heat exchange portion extends and is attached to the fourth group of battery cells to enable heat exchange.

52. The battery according to claim 50, wherein the second heat exchange portion extends in a second direction, the second direction and the third direction being a same direction, and the third heat exchange portion and the fourth heat exchange portion extend in a first direction, the first direction and the fifth direction being a same direction; and/or the first heat exchange portion extends in the first direction, the first direction and the fifth direction being a same direction.

53. The battery according to claim 52, wherein the battery assembly comprises a plurality of battery units sequentially arranged in a fifth direction, and at least one battery unit located at two ends in the fifth direction is the first group of battery cells;
the second heat exchange portion and at least one first heat exchange portion of the first heat exchange section are jointly attached to the first group of battery cells to enable heat exchange.

54. The battery according to claim 53, wherein a plurality of first heat exchange portions are provided, and the plurality of first heat exchange portions are sequentially connected in a bent manner in the first direction;
the second heat exchange portion and the first heat exchange portion that is farthest from the second heat exchange portion along a connecting line of the sequential connection perform heat exchange with the first group of battery cells.

55. The battery according to claim 50, wherein the second heat exchange section comprises a second heat exchange portion, a third heat exchange portion, and a fourth heat exchange portion that are connected, wherein a first end of the third heat exchange portion is connected to the second heat exchange portion at an included angle, and a second end of the third heat exchange portion is connected to the first heat exchange section at an included angle;
the second heat exchange portion extends and is attached to the first group of battery cells to enable heat exchange, the third heat exchange portion extends and is attached to the second group of battery cells to enable heat exchange, and the fourth heat exchange portion extends and is attached to the third group of battery cells to enable heat exchange; or
the second heat exchange portion is attached to the second group of battery cells to enable heat exchange, and the third heat exchange portion is attached to the first group of battery cells to enable heat exchange.

56. The battery according to claim 50, wherein the first heat exchange flow channel further comprises a third heat exchange section, wherein the third heat exchange section is in communication with an end of the first heat exchange section distal to the second heat exchange section and is connected to the first heat exchange section at an included angle;
the battery assembly is further provided with a fifth group of battery cells, wherein a plurality of battery cells comprised in the fifth group of battery cells are stacked in a fifth direction, and the fifth group of battery cells is arranged adjacent to the third group of battery cells,
wherein the third heat exchange section and the fourth heat exchange portion are both attached to the third group of battery cells to enable heat exchange; or the third heat exchange section is attached to the fifth group of battery cells to enable heat exchange, and the fourth heat exchange portion is attached to the third group of battery cells to enable heat exchange; or the third heat exchange section is attached to the third group of battery cells to enable heat exchange, and the fourth heat exchange portion is arranged on an outer side of the battery assembly in the third direction.

57. The battery according to claim 52, wherein the first heat exchange portion of the first heat exchange section and the second heat exchange portion of the second heat exchange section both extend in the second direction and are spaced apart in the first direction, and
one battery unit is attached to one second heat exchange portion and at least one first heat exchange portion to enable heat exchange; or one battery unit is attached to at least two first heat exchange portions to enable heat exchange.

58. The battery according to claim 57, wherein a total number of the first heat exchange portions and the second heat exchange portions of the first heat exchange flow channel is greater than or equal to 4.

59. The battery according to claim 57, wherein two first heat exchange flow channels are provided, and each first heat exchange flow channel comprises: three first heat exchange portions, one second heat exchange portion, one third heat exchange portion, one fourth heat exchange portion, and one third heat exchange section;
four battery units are provided, wherein the battery unit located at an end in the fifth direction is attached to one first heat exchange portion and one second heat exchange portion to enable heat exchange, and any one of the remaining battery units is attached to two first heat exchange portions to enable exchange, wherein
the third heat exchange portion is connected to the second heat exchange portion and the first heat exchange portion that is farthest from the second heat exchange portion, and is attached to the second group of battery cells to enable heat exchange, the third heat exchange section is connected to the first heat exchange portion that is closest to the second heat exchange portion, and the third heat exchange section and/or the fourth heat exchange portion are attached to the third group of battery cells to enable heat exchange.

60. The battery according to claim 57, wherein two first heat exchange flow channels are provided, and each first heat exchange flow channel comprises: five first heat exchange portions, one second heat exchange portion, one third heat exchange portion, one fourth heat exchange portion, and one third heat exchange section;
six battery units are provided, wherein the battery unit located at an end in the fifth direction is attached to one first heat exchange portion and one second heat exchange portion to enable heat exchange, and any one of the remaining battery units is attached to two first heat exchange portions to enable heat exchange, wherein
the third heat exchange portion is connected to the second heat exchange portion and the first heat exchange portion that is farthest from the second heat exchange portion, and is attached to the second group of battery cells to enable heat exchange, the third heat exchange section is connected to the first heat exchange portion that is closest to the second heat exchange portion, and the third heat exchange section and/or the fourth heat exchange portion are attached to the third group of battery cells to enable heat exchange.

61. The battery according to claim 57, wherein two first heat exchange flow channels are provided, and each first heat exchange flow channel comprises: five first heat exchange portions, one second heat exchange portion, one third heat exchange portion, one fourth heat exchange portion, and one third heat exchange section;
four battery units are provided, wherein the battery unit located at an end in the fifth direction is attached to two first heat exchange portions and one second heat exchange portion to enable heat exchange, and any one of the remaining battery units is attached to three first heat exchange portions to enable heat exchange, wherein
the third heat exchange portion is connected to the second heat exchange portion and the first heat exchange portion that is farthest from the second heat exchange portion, and is attached to the second group of battery cells to enable heat exchange, the third heat exchange section is connected to the first heat exchange portion that is closest to the second heat exchange portion, and the third heat exchange section and/or the fourth heat exchange portion are attached to the third group of battery cells to enable heat exchange.

62. The battery according to claim 46, wherein the battery comprises a case and a battery assembly, wherein the case comprises a case body, the case body is an integrally stamped member and comprises a bottom wall and a surrounding wall, the battery assembly is arranged within the case body, the battery assembly comprises a battery unit, and the battery unit comprises a plurality of battery cells sequentially stacked in a third direction.

63. The battery according to claim 62, wherein a thermal management system of the battery comprises a temperature adjustment member, wherein the temperature adjustment member comprises at least one of a first temperature adjustment member and a second temperature adjustment member;
the first temperature adjustment member is arranged outside the case body and attached to an outer wall of the case body;
the second temperature adjustment member is arranged within the case and located between a peripheral wall of the battery cell and the case;
at least one of the first temperature adjustment member and the second temperature adjustment member forms the heat exchange member.

64. The battery according to claim 63, wherein the thermal management system of the battery further comprises a third temperature adjustment member, wherein the third temperature adjustment member is arranged within the case body and located between two adjacent battery cells, and a structure of the third temperature adjustment member is the same as or different from a structure of the heat exchange member.

65. The battery according to any one of claims 62 to 64, wherein the case further comprises a bottom protective plate, wherein the bottom protective plate is arranged on a lower side of the case body, and the heat exchange member is arranged between the case body and the bottom protective plate;
the battery further comprises a foam member, at least a portion of the foam member being filled in a gap formed by bending of a heat exchange tube of the heat exchange member.

66. The battery according to claim 65, wherein the foam member comprises a body and a plurality of ribs, wherein the plurality of ribs are formed on a surface of the body on a side in a thickness direction, the plurality of ribs and the body cooperatively define an accommodating groove, the heat exchange tube is arranged in the accommodating groove, and a thickness of the heat exchange tube is greater than a depth of the accommodating groove.

67. An electric device, comprising the battery according to any one of claims 46 to 66.
